# EUROPÄISCHE PATENTSCHRIFT

(11) **EP 2 931 663 B1**
(45) Veröffentlichungstag und Bekanntmachung des Hinweises auf die Patenterteilung: **16.11.2016**
(21) Anmeldenummer: 14705771.5
(22) Anmeldetag: 20.02.2014
(51) Int. Cl.: C02F 1/28, B01D 15/02

(54) **GEGENSTROM-ADSORPTIONSFILTERKOLONNE ZUR WASSERBEHANDLUNG**
COUNTERFLOW ADSORPTION FILTER COLUMN FOR WATER TREATMENT
COLONNE DE FILTRATION PAR ADSORPTION À CONTRE-COURANT POUR LE TRAITEMENT DE L'EAU

(30) Priorität: 15.03.2013 DE 102013004407; 20.03.2013 DE 102013004747; 19.04.2013 DE 102013006711
(43) Veröffentlichungstag der Anmeldung: 21.10.2015
(73) Patentinhaber: Blücher GmbH, 40699 Erkrath (DE)
(72) Erfinder: SCHÖNFELD, Raik, 30629 Hannover (DE); RAISER, Jan, Essen 45289 (DE)
(74) Vertreter: Von Rohr Patentanwälte Partnerschaft mbB
(86) Internationale Anmeldenummer: PCT/EP2014/053289
(87) Internationale Veröffentlichungsnummer: WO 2014/139770

(56) Entgegenhaltungen:
- DE-A1- 4 000 142
- DE-U1-202007 014 890
- DE-U1-202010 009 493
- US-A- 4 279 755
- US-A- 4 293 423

## Beschreibung

Die vorliegende Erfindung betrifft das technische Gebiet der Behandlung von Wasser, insbesondere von Abwasser oder Trinkwasser. Insbesondere betrifft die vorliegende Erfindung das technische Gebiet der Aufbereitung bzw. Aufreinigung von Wasser im Trinkwasser- oder Abwasserbereich.

Insbesondere betrifft die vorliegende Erfindung ein Verfahren zur Behandlung bzw. Aufreinigung von Wasser (Rohwasser), insbesondere von Abwasser oder Trinkwasser, bevorzugt zur adsorptiven Entfernung von anorganisch oder organisch, insbesondere organisch basierten Verunreinigungen, wie Spurenstoffen und/oder Mikroschadstoffen.

Darüber hinaus betrifft die vorliegende Erfindung eine Aufreinigungs-Anlage, vorzugsweise zur Behandlung bzw. Aufreinigung von Wasser, insbesondere von Abwasser oder Trinkwasser. Weiterhin betrifft die vorliegende Erfindung eine Gegenstrom-Filtervorrichtung, insbesondere Gegenstrom-Adsorptionsfilterkolonne, welche sich gleichermaßen zur Behandlung bzw. Aufreinigung von Wasser, insbesondere von Abwasser oder Trinkwasser und bevorzugt zur insbesondere adsorptiven Entfernung von anorganisch oder organisch, insbesondere organisch basierten Verunreinigungen eignet.

Schließlich betrifft die vorliegende Erfindung die Verwendungen der erfindungsgemäßen Aufreinigungs-Anlage bzw. der Gegenstrom-Filtervorrichtung nach der Erfindung sowie von speziellen Adsorptionsmaterialien in dem Verfahren nach der Erfindung zur Behandlung bzw. Aufreinigung von Wasser, insbesondere von Abwasser oder Trinkwasser.

Die zunehmende Belastung der aquatischen Umwelt, wie beispielsweise von Oberflächengewässern, aber auch von Grund- und Trinkwasser, stellt ein großes umweltspezifisches Problem dar, zumal Wasser in Form von Trinkwasser eines der wichtigsten und nicht ersetzbaren Lebensmittel darstellt. Insbesondere führen die Einleitung von mit Verunreinigungen belastetem Abwasser in Gewässersysteme sowie die Ausbringung von belastetem Klärschlamm oder dergleichen beispielsweise auf landwirtschaftliche Flächen zu einer entsprechenden Kontamination bzw. Belastung sowohl von Oberflächen- als auch von Grundwasser.

Ein besonderes Problem stellen in diesem Zusammenhang sogenannte Mikroverunreinigungen dar, welche synonym auch als Spurenstoffe bzw. *Micropollutants* bezeichnet werden. Hierzu zählen neben Industriechemikalien und Flammschutzmitteln insbesondere auch pharmazeutische Wirkstoffe bzw. Humanpharmaka, wie Analgetika, Hormonwirkstoffe oder dergleichen, welche unverändert oder nach chemischem Umbau im menschlichen Organismus als Konjugate bzw. Metabolite ausgeschieden und in der Folge beispielsweise in das kommunale Abwasser gelangen. Weiterhin problematisch sind bestimmte Industriechemikalien, wie Weichmacher, insbesondere Bisphenol-A, Röntgenkontrastmittel, wie Amidotrizoesäure und lopamidol, Tenside, wie perfluorierte Tenside, Pestizide oder dergleichen, da derartige Substanzen bereits in geringen Mengen ein hohes toxisches Potential bzw. eine geringe Bioverträglichkeit aufweisen. Als weitere Beispiele für Mikroverunreinigungen sind im Allgemeinen Antiklopfmittel, wie Methyl-tert-butylether (MTBE), zu nennen.

Darüber hinaus können sogenannte *Dissolved Organic Compounds* bzw. *Dissolved Organic Carbons* (DOC) angeführt werden, welche gleichermaßen als Verunreinigungen im Wasser vorliegen können.

Die vorgenannten Stoffe bzw. Substanzklassen weisen insbesondere die Gemeinsamkeit auf, dass sie bereits bei Aufnahme sehr geringer Mengen im µg- oder sogar im ng-Bereich einen erheblichen Einfluss auf den menschlichen Organismus haben können, beispielsweise im Hinblick auf eine hormonelle Wirkung, ihre Eigenschaft als endokrine Disruptoren sowie die Ausbildung von Resistenzen oder dergleichen.

Humanpharmaka werden insbesondere aufgrund des demographischen Wandels und der steigenden individuellen Lebenserwartung mit dem damit in Verbindung stehenden erhöhten Arzneimittelkonsum zukünftig in noch größerer Menge und Anzahl über kommunale Abwasserwege in die Umwelt gelangen, was gleichermaßen für Veterinärpharmaka aufgrund des allgemein steigenden Fleischkonsums mit den damit einhergehenden Tierhaltungsformen gilt.

Zudem können pharmakologisch aktive Substanzen, welche in der Veterinärmedizin eingesetzt werden, gleichermaßen in Oberflächengewässer sowie in das Grundwasser gelangen, insbesondere durch Ausbringung entsprechend belasteter Gülle und nachfolgende Auswaschung der damit gedüngten landwirtschaftlichen Flächen durch Niederschläge, so dass eine Einspülung der entsprechenden Mikroverunreinigungen in Gewässersysteme bzw. in das Grundwasser erfolgen kann.

Aufgrund der Toxizität, Persistenz und des hohen Bioakkumulationspotentials von Mikroverunreinigungen bzw. Spurenstoffen sowie der zunehmenden Verwendung derartiger Substanzen besteht ein hoher Bedarf, den Eintrag bzw. die Freisetzung von Mikroverunreinigungen in Oberflächengewässer sowie in das Grundwasser zu minimieren, wobei in diesem Zusammenhang ein vorrangiges Ziel darin zu sehen ist, kontaminierte Abwässer aus Privathaushalten, aus der Industrie sowie aus medizinischen Einrichtungen, wie Krankenhäusern oder anderen Gesundheits- und Pflegeeinrichtungen, in wirksamer Weise zur Verringerung der entsprechenden Mikroschadstoffe zu behandeln. In diesem Zusammenhang ist auch die Aufreinigung von bereits belastetem Trinkwasser, insbesondere im Wasserwerk vor Einspeisung in das Trinkwassernetz, von hoher Relevanz, insbesondere da die in Rede stehenden Mikroverunreinigungen durch ihre steigende Präsenz in der aquatischen Umwelt zunehmend und in mitunter kritischen Mengen auch im Trinkwasser vorliegen bzw. nachzuweisen sind.

Denn anderenfalls kann eine unerwünschte Freisetzung der vorgenannten Substanzen über den Kläranlagenablauf in Oberflächengewässer und nachfolgend auch in das Grundwasser erfolgen, insbesondere sofern die Mikroschadstoffe nicht in hinreichender Weise aus dem zugrundeliegenden Abwasser entfernt werden. Gleichermaßen kann anderenfalls belastetes Trinkwasser bis zum Endverbraucher gelangen, was gleichermaßen unerwünscht ist.

Zusammenfassend ist somit festzustellen, dass Spurenstoffe bzw. Mikroverunreinigungen, insbesondere in Form von Arzneimitteln aber auch industriellen bzw. industriell-medizinischen Ursprungs, im zunehmenden Maße im Abwasser vorliegen und infolge einer oftmals unzureichenden Behandlung bzw. Aufreinigung des Abwassers auch in Oberflächengewässer sowie in das Grundwasser gelangen können, woraus wiederum eine zunehmende Gefahr der Kontamination von Trinkwasser resultiert, einhergehend mit einem hohen Gefährdungspotential für Mensch und Umwelt.

Vor diesem Hintergrund sind im Stand der Technik zahlreiche Ansätze verfolgt worden, auf deren Basis belastetes Wasser, insbesondere kontaminiertes Abwasser bzw. Trinkwasser, von Mikroschadstoffen bzw. Spurenstoffen befreit werden soll, wobei hierzu Anlagen unter Verwendung verschiedener Filtervorrichtungen zur Abwasseraufbereitung in Kläranlagen zum einen und zum anderen zur Trinkwasseraufbereitung insbesondere in Wasserwerken konzipiert worden sind. Jedoch führen die bekannten Ansätze zur Wasseraufreinigung nicht immer zum gewünschten Erfolg.

So besteht ein technischer Ansatz zur Reduzierung von Mikroverunreinigungen bzw. Spurenstoffen darin, die in einem Rohwasser vorhandenen Mikroverunreinigungen durch Oxidationsprozesse chemisch zu zersetzen, wobei die zugrundeliegenden Methoden im Allgemeinen als *Advanced Oxidation Process* (AOP) bezeichnet werden. Hierzu zählt beispielsweise eine Ozon- und/oder UV-Behandlung des aufzureinigenden Wassers. Nachteilig bei diesen Verfahren sind jedoch die oftmals damit in Verbindung stehenden hohen Energiekosten, die aufwendige Entfernung von Rest-Ozon im behandelten Wasser sowie die unerwünschte Bildung toxischer Metabolite bzw. Abbauprodukte der in Rede stehenden Mikroverunreinigungen.

Ein weiterer Ansatz zur Aufreinigung von Wasser besteht im Stand der Technik darin, Membran-basierte Filteranlagen einzusetzen, wobei beispielsweise das Prinzip der Umkehrosmose (*Reverse Osmosis,* RO) sowie der *Nanofiltration* (NF) und *Ultrafiltration* (UF) zum Einsatz kommt. Derartige Aufreinigungskonzepte sind jedoch grundsätzlich mit dem Nachteil verbunden, dass mitunter komplexe und aufwendige sowie wartungsintensive Filteranlagen konzipiert und betrieben werden müssen, wobei der Betrieb der entsprechenden Anlagen teilweise mit hohen Energiekosten einhergeht. Zudem resultieren oftmals stark belastete toxische Rückstände, deren Entsorgung eine weitere logistische Herausforderung darstellt. Nachteilig sind zudem die mitunter geringe Selektivität sowie die geringen Betriebs- bzw. Standzeiten der entsprechenden Filteranlagen, wobei der Betrieb beispielsweise durch einen (mikro-)biologischen Bewuchs der Membranen nachhaltig gestört werden kann.

Darüber hinaus besteht eine weitere Methode zur Verringerung des Gehalts an Mikroverunreinigungen in Wasser darin, die Mikroverunreinigungen durch herkömmliche Aktivkohlen aus dem Wasser zu entfernen. Die entsprechenden Konzepte mit der technischen Umsetzung und den hierzu eingesetzten herkömmlichen Aktivkohlen sind jedoch oftmals dahingehend nachteilig, dass aufgrund der Filterkonzeption im Stand der Technik niedrige Filterkapazitäten und gleichermaßen geringe Betriebs- bzw. Standzeiten resultieren. Problematisch ist mitunter auch ein (mikro-)biologisches Wachstum in den Filtereinrichtungen als solchen bzw. auf den eingesetzten Aktivkohlen, da dies zu einer Reduzierung des Filterumsatzes bzw. zu einer Verringerung der Adsorptionskapazität führen kann.

Zudem sind die im Stand der Technik eingesetzten herkömmlichen Aktivkohlen oftmals nicht ausreichend selektiv und weisen eine nur geringe mechanische Stabilität auf, was zu einem vorzeitigen Abrieb, insbesondere unter nachteiliger Staub- bzw. Schlammbildung, führen kann.

Insbesondere ist im Stand der Technik oftmals der Einsatz von Formadsorbentien, welche jedoch einen hohen Bindemittelanteil aufweisen, sowie von Pulverkohle vorgesehen, wobei die hierzu eingesetzten Kohlen beispielsweise auf Steinkohle bzw. auf Kohlen mit Kokosnussschalen oder Pech als Ausgangsmaterial basieren. Derartige Aktivkohlen sind oftmals weder mechanisch stabil noch hinsichtlich ihrer Adsorptionseigenschaften zufriedenstellend, da sie oftmals eine nur geringe Adsorptionskapazität und -Selektivität aufweisen. Weiterhin ist bei derartigen Aktivkohlen nachteilig, dass die entsprechenden technischen Filteranlagen durch Schlammbildung, beispielsweise auf Basis von Pulverkohle bzw. Kohleabrieb, verstopfen können, was die Durchlaufkapazität und somit die Betriebs- bzw. Standzeit verringert.

Zudem sind die im Stand der Technik realisierten Konzepte oftmals derart, dass eine Regeneration von erschöpfter bzw. mit Verunreinigungen gesättigter Aktivkohle nicht möglich bzw. nur unter hohem Aufwand, insbesondere unter Verwendung von Wasserdampf in einem Hochtemperaturprozess, erfolgen kann, einhergehend mit hohen Energiekosten und einem Verlust an Adsorbentien, insbesondere durch unerwünschten Abbrand.

Die für den Einsatz von Aktivkohle vorgesehenen technischen Einrichtungen bzw. Anlagen sind zudem konstruktiv oftmals aufwendig und führen zu einer verringerten Effizienz der Gesamtfilterbilanz. So bestehen die im Stand der Technik bekannten Aktivkohleadsorptionsstufen, welche beispielsweise im Rahmen der Abwasserreinigung einer mechanischen Reinigungsstufe sowie einer biologischen bzw. chemischen Reinigungsstufe nachgeschaltet sind, aus einem Reaktionsbecken einerseits und einem nachfolgenden Sedimentationsbecken andererseits, wobei die Aktivkohle insbesondere in pulverförmiger Form dem Reaktionsbecken zugegeben wird und wobei eine Abtrennung der mit Verunreinigungen beladenen Aktivkohle in dem Sedimentationsbecken oftmals unter Einsatz von Fäll- bzw. Flockungsmittel erfolgt. Eine Regeneration der so erhaltenen erschöpften Kohlekomponente ist oftmals nicht möglich, so dass die verbrauchte Aktivkohle gemeinsam mit dem Klärschlamm thermisch verwertet werden muss. Die lediglich thermische Endverwertung von verbrauchter Aktivkohle verschlechtert dabei auch den sogenannten *Carbon Footprint* und somit insgesamt die Ökobilanz der zugrundeliegenden Verfahren.

Derartige Anlagen zur Aufreinigung von Wasser unter Einsatz herkömmlicher Aktivkohle erfordern zudem einen hohen Platzbedarf, da die entsprechenden Adsorptionsbecken als offene Langzeitfilter konzipiert sind, welche eine Länge von mehr als 10 m aufweisen können. Hinzu kommt der Einsatz großer Mengen an Aktivkohle, da die eingesetzte Aktivkohlen den Langzeitfiltern in einer Schüttung mit einer Höhe von 2 bis 3 m eingesetzt werden sollte, so dass insgesamt ein Volumen von 200 m³ bis 300 m³ Aktivkohle pro Becken erforderlich ist.

Ein weiterer Ansatz zur adsorptiven Aufbereitung von Wasser besteht im Stand der Technik zudem darin, geschlossene Filtersysteme einzusetzen, welche Aktivkohle in Form einer Schüttung bzw. im Festbett aufweisen. Derartige Systeme können beispielsweise auch als nachgeschaltete Aufreinigungsstufe im Rahmen der Behandlung von Trinkwasser eingesetzt werden. Wie zuvor angeführt, handelt es sich hierbei jedoch um Filtersysteme, welche in Bezug auf das Adsorptionsmaterial geschlossen konzipiert sind, so dass während des Betriebs der zugrundeliegenden Filteranlagen kein Austausch der Aktivkohlekomponente möglich ist. In diesem Zusammenhang ist es im Stand der Technik insbesondere vorgesehen, dass das aufzureinigende Wasser insbesondere durch einen Festbettfilter bzw. eine Schüttung von Aktivkohle auf Basis geschlossener Druckfilter perkoliert. Nachteilig ist hierbei insbesondere, dass derartige Systeme hinsichtlich der zu adsorbierenden Stoffe rasch erschöpfen und somit eine nur begrenzte Filterkapazität vorliegt. Zudem ist es erforderlich, das gesamte Adsorptionsmaterial in der Filtervorrichtung nach erfolgter Erschöpfung des Adsorptionsmaterials zu erneuern, was eine Stilllegung des betroffenen Filterelements zur Folge hat. Zur diesbezüglichen Kompensation sind aufwendige Bypass-Schaltungen bzw. der Einsatz paralleler Filterkomponenten erforderlich, was derartige Anlagen konstruktiv aufwendig und kostenintensiv macht. Nachteilig ist in diesem Zusammenhang insbesondere auch der hohe Platzbedarf derartiger Anlagen.

Die im Stand der Technik vorgesehenen geschlossenen Filtersysteme, insbesondere Druckfilter, sind zudem derart konzipiert, dass diese einen rohrförmigen Aufbau mit im Allgemeinen großem Durchmesser und großer Höhe aufweisen, insbesondere da aufgrund der geschlossenen Filteranordnung gleichermaßen große Aktivkohlenvolumen in dem Filtersystem erforderlich sind. Derartige Druckfiltersysteme weisen oftmals ein Verhältnis der Höhe zum Durchmesser im Bereich von etwa 2 bis 3 oder weniger auf, so dass derartige Systeme auch aus diesem Grund einen hohen Platzbedarf und mitunter nicht optimale Strömungsbedingungen innerhalb des Filters aufweisen.

Zudem ist bei derartigen Filterkonzepten nur eine begrenzte Höhe der Schüttung möglich, da aus technischen Gründen ein großer Freiraum innerhalb der Filtervorrichtung erforderlich ist. Insbesondere weisen die zuvor angeführten geschlossenen Filtersysteme des Standes der Technik eine nur geringe Höhe der Adsorptionskomponente innerhalb des Filters und somit eine nur geringe Adsorptionshöhe auf, so dass insgesamt eine nicht optimale Ausnutzung des Gesamtfiltervolumens vorliegt. In diesem Zusammenhang weisen die beschriebenen Druckfiltersysteme des Standes der Technik ein Verhältnis von Gesamtsäulen- bzw. Filterhöhe zur Höhe des Adsorptionsmaterials in dem Filter von 5 bis 10 oder mehr auf.

Zudem ist es bei den vorgenannten Anlagen bzw. Systemen erforderlich, dass das aufzureinigende Wasser im hohen Maß frei von Suspensionsstoffen sein muss, um ein vorzeitiges Verstopfen des Filtersystems zu vermeiden. Diesbezüglich ist in Bezug auf den Stand der Technik auch nachteilig, dass eine Wiederaufarbeitung bzw. Rezyklierung von erschöpfter Aktivkohle nur in einem sehr begrenzten Umfang möglich ist, wobei allenfalls ein bis zwei Rezyklierungsdurchläufe möglich sind, was gleichermaßen dazu führt, dass große Mengen an eingesetzten Adsorbentien durch neues Material ersetzt werden müssen. Insbesondere ist hiermit im Stand der Technik auch ein hoher Verlust an Aktivkohle verbunden, welcher bis zu 25 % der eingesetzten Ausgangscharge betragen kann, wobei die in Rede stehenden Verluste insbesondere durch Staubverluste und Abbrand verursacht werden. Insbesondere ist eine effiziente Reaktivierung oftmals nicht möglich.

Die zuvor angeführten Verfahren bzw. Anlagen unter Verwendung von Aktivkohle als Adsorptionsmaterial erlauben allenfalls einen chargenweisen Austausch der Aktivkohle, was zu nachteiligen Betriebsunterbrechungen und einer Effizienzverringerung führt.

Zudem sind die zuvor genannten Aufreinigungssysteme des Standes der Technik oftmals insofern nicht effizient, als eine zufriedenstellende Aufreinigung von zu behandelndem Wasser nicht realisiert werden kann, insbesondere im Hinblick auf Problemstoffe, wie *Dissolved Organic Carbons* (DOC), perfluorierte Tenside, wie Perfluoroctansulfat (PFOS), Antiklopfmittel, wie Methyl-tert-butylether (MTBE), Röntgenkontrastmittel, wie lopamidol und Amidotrizoesäure.

Weiterhin liegen in Bezug auf den Stand der Technik für die dort beschriebenen Anlagen auch ungünstige Umlauffaktoren vor, welche das Verhältnis aus erschöpfter bzw. sich in Regenerierung befindlicher Aktivkohle zu in dem Filtersystem und somit zu Zwecken der Aufreinigung im Einsatz befindlicher Aktivkohle darstellen. In diesem Zusammenhang sind im Stand der Technik allenfalls Umlauffaktoren möglich, welche 100 oder mehr, insbesondere 200 bis 300 oder mehr, betragen.

Zudem weisen derartige Filtersysteme des Standes der Technik relativ geringe Leerrohr- bzw. Filtergeschwindigkeiten auf, welche höchstens lediglich 10 m/h betragen, insbesondere um hierdurch überhaupt eine gewisse Aufreinigungseffizienz zu ermöglichen. Hieraus resultieren jedoch geringe Volumen bzw. Mengen an aufgereinigtem Wasser.

Im Allgemeinen resultieren aufgrund der mitunter nicht optimalen Filtereigenschaften der Systeme des Standes der Technik, insbesondere im Hinblick auf die zuvor angeführten geschlossenen Druckfilter, relativ geringe spezifische Wasserdurchsätze bis zum Durchbruch eines Spurenstoffs. So beträgt beispielsweise bei Systemen des Standes der Technik der spezifische Wasserdurchsatz bis zum Durchbruch des Spurenstoffs Amidotrizoesäure bei einer Ausgangskonzentration von 290 ng/l im zu behandelnden Rohwasser etwa 25 m³/kg Aktivkohle.

Die DE 40 00 142 A1 betrifft ein Verfahren zur kontinuierlichen Reinigung von Abwasser mittels eines Adsorptionsmittels. Dabei soll das zu reinigende Abwasser über Braunkohlekoks bzw. über Aktivkohle auf Braunkohlenbasis geleitet werden, welche in einer kontinuierlich betreibbaren Vorrichtung oder Anlage angeordnet sind und welche vor Inbetriebnahme mit Gas bzw. mit Flüssigkeit vorbehandelt werden.

Weiterhin betrifft die DE 20 2007 014 890 U1 Hochleistungsadsorbentien auf Basis von Aktivkohle mit hoher Meso- und Makroporosität, welche in Kugelform vorliegen und welche ein definiertes Gesamtporenvolumen mit speziellen Porendurchmessern und mit definierter BET-Oberfläche aufweisen.

Zudem betrifft die DE 20 2010 009 493 U1 ein adsorptives System auf Basis eines Agglomerats mit einer Vielzahl von Adsorberpartikeln, wobei die Adsorberpartikel auf einem Bindemittelträger fixiert, insbesondere zum Haften gebracht, und über den Bindemittelträger zu dem adsorptiven System verbunden sind, wobei die Agglomerate zwei voneinander verschiedene partikuläre Adsorptionsmaterialien aufweisen sollen.

Weiterhin betrifft die US 4 293 423 A ein kontinuierliches bzw. semi-kontinuierliches Ionenaustauschverfahren, wobei diesbezüglich eine Säule mit einem thermisch regenerierbaren heterogenen Ionenaustauscherharz ausgerüstet wird. Dabei ist die eingesetzte Säule in einen Beladungsbereich, einen Wärmeverschiebungsbereich sowie einer Regenerierungszone für das eingesetzte Harz unterteilt. Im Betriebszustand soll zugegebene und zu behandelnde Flüssigkeit aufwärts durch die Beladungszone strömen, wobei nachfolgend die behandelte Flüssigkeit nachfolgend entfernt wird. Zudem soll beladenes Harz von dem Beladungsbereich in den Regenerationsbereich verschoben werden.

Die US 4 279 755 A betrifft ein Verfahren zur Absorption von Ionen aus einer diese Ionen enthaltenden Flüssigkeit auf Teilchen eines Ionenaustauscherharzes, wobei die Adsorption der Ionen zu einer Erhöhung der Partikeldichte führt. Das Verfahren soll dabei die Schritte umfassen, wonach zunächst die Flüssigkeit in einer Absorptionssäule aufwärts gerichtet durch ein Bett der Partikel des Ionenaustauscherharzes geleitet wird und wonach beladene Partikel mit höherer Dichte, die in der Adsorptionssäule abwärts sinken, in einem unteren Bereich der Absorptionssäule gesammelt bzw. abgetrennt werden.

Weiterhin betrifft die EP 0 085 779 A1 eine Vorrichtung zum kontinuierlichen Kontaktieren einer flüssigen Phase mit einer festen Phase im Gegenstrom, wobei die Vorrichtung eine Säule, einen an der Säule angeordneten Anströmring für eine flüssige Phase und einen konisch angeordneten Säulenboden mit einer Austragsöffnung für die feste Phase unterhalb des Anströmrings aufweist. Zudem weist die Vorrichtung einen Überlauf für die flüssige Phase und Leitungen auf, die mit dem Säulenboden bzw. dem Anströmring für die flüssige Phase verbunden sind.

Die DE 1 642 396 A1 betrifft ein Verfahren zur Behandlung von Abwasser, wobei suspendierte Feststoffe zunächst abgetrennt werden und wobei das gesiebte Rohwasser mit einem Flockungsmittel behandelt und das überstehende Wasser von der gebildeten Ausflockung abgetrennt und durch Aktivkohlebetten geleitet wird. Die Aktivkohlebetten werden periodisch rückgespült und regeneriert. Gemäß dieser Konzeption erfolgt somit lediglich eine diskontinuierliche bzw. chargenweise Regeneration der Aktivkohle, was verfahrenstechnisch jedoch ungünstig bzw. nachteilig ist, da hierdurch die Betriebszeiten verringert bzw. die Installation mehrerer paralleler Filterkomponenten erforderlich ist. Zudem geht insbesondere die Rückspülung mit mitunter hohen Verlusten an Adsorptionsmaterial einher.

Zudem betrifft die DE 2 040 061 A1 eine Anlage zum Desinfizieren von Abwasser, wobei diesbezüglich spezielle Desinfektionsmittel eingesetzt werden. Eine Verringerung von Mikroverunreinigungen ist aufgrund dieser Konzeption nicht möglich, und zudem ist der Einsatz von Desinfektionsmitteln unter Umweltgesichtspunkten problematisch. Insbesondere ist ein diskontinuierlicher Betrieb der Anlage mit einer Rückspülung des Filterelements vorgesehen, wobei hierdurch ein sogenannter Rückschlamm aus der Vorrichtung entfernt werden soll.

Darüber hinaus betrifft die deutsche Gebrauchsmusterschrift DE 88 15 345 U1 einen Wasseraufbereiter, insbesondere zur Aufbereitung bzw. Bereitstellung von schadstofffreiem Trinkwasser, wobei der Wasseraufbereiter mit einem nach dem Prinzip der Umkehrosmose arbeitenden Plattenmodul ausgerüstet ist. Diese Konzeption ist insofern nachteilig, als ein wenig selektives System vorliegt, welches unter hohem Energieeinsatz und Erhalt von belasteten toxischen Rückständen zu betreiben ist.

Zudem betrifft die DE 10 2008 041 164 A1 ein Verfahren zur Aufbereitung von Wasser zur Entfernung von Halogenid-Ionen durch oxidatives Halogenieren einer dem Wasser zugesetzten organischen Verbindung, welche nachfolgend abgetrennt wird, wobei im Wasser verbleibende Chlorat-, Jodat- bzw. Bromat-Ionen zu den entsprechenden Halogenid-Ionen umgesetzt werden, wonach eine erneute oxidative Halogenierung erfolgen soll. Ein derartiges Verfahren ist verfahrenstechnisch aufwendig und zudem in Bezug auf eine Vielzahl von Mikroverunreinigungen nicht effizient.

Schließlich betrifft die EP 1 044 982 A1 ein Wasserbehandlungsverfahren, welches die Zugabe von Ozon zu Rohwasser und das Filtrieren des Rohwassers unter Verwendung einer Ozon-resistenten Membran umfasst, wobei das Filtrat weiterhin mit Aktivkohle oder einer Umkehrosmosemembran behandelt werden kann. Diese verfahrenstechnisch aufwendige Aufreinigung ist mitunter kostenintensiv und für einen kontinuierlichen Betrieb nicht optimiert, insbesondere was den Einsatz der Aktivkohle anbelangt.

Vor diesem technischen Hintergrund liegt daher der vorliegenden Erfindung die Aufgabe zugrunde, ein effizientes Verfahren und entsprechende Anlagen bzw. Vorrichtungen zur Behandlung bzw. Aufreinigung von Wasser, wie Abwasser oder Trinkwasser, bereitzustellen, wobei die zuvor geschilderten Nachteile des Standes der Technik zumindest weitgehend vermieden oder aber wenigstens abgeschwächt werden sollen.

Insbesondere ist eine Aufgabe der vorliegenden Erfindung darin zu sehen, ein effizientes Verfahren und diesbezügliche Anlagen bzw. Vorrichtungen bereitzustellen, wobei insbesondere anorganisch bzw. organisch, insbesondere organisch basierte Verunreinigungen, wie Spurenstoffe bzw. Mikroschadstoffe, aus einem zu behandelnden bzw. aufzureinigenden Wasser entfernt werden sollen.

In diesem Zusammenhang soll - gemäß einer weiteren Aufgabe der vorliegenden Erfindung - insbesondere ein effizientes System bzw. eine effiziente Anlage mit entsprechenden Vorrichtungen, insbesondere zur Durchführung des erfindungsgemäßen Verfahrens, bereitgestellt werden, wobei insgesamt bei gleichzeitig hoher Aufreinigungseffizienz eine hohe Wirtschaftlichkeit gewährleistet werden soll, insbesondere was die Betriebsdauer, den Verbrauch an Adsorptionsmittel zur Aufreinigung des zu behandelnden Wassers und den erforderlichen Energieeinsatz anbelangt. Dabei soll bevorzugt ein kontinuierlicher bzw. ununterbrochener Betrieb der Anlage oder des Systems bzw. eine kontinuierliche bzw. ununterbrochene Durchführung des Verfahrens gewährleistet sein.

Insbesondere liegt eine wiederum weitere Aufgabe der Erfindung darin, ein entsprechendes System bzw. eine Aufreinigungs-Anlage, insbesondere zur Durchführung des erfindungsgemäßen Verfahrens, bereitzustellen, mittels dessen bzw. derer das Adsorptionsmittel zur Aufbereitung des zu behandelnden Wassers effizient und dauerhaft eingesetzt werden kann, insbesondere im Hinblick auf verlängerte und ununterbrochene Betriebs- und Standzeiten der in diesem Zusammenhang eingesetzten Filtervorrichtungen.

Zudem sollen gemäß einer weiteren Aufgabenstellung der vorliegenden Erfindung entsprechende Aufreinigungs-Anlagen bzw. -Vorrichtungen bereitgestellt werden, welche insgesamt auch räumlich optimiert und somit insgesamt platzsparend sein sollen und welche insgesamt eine hohe Umweltverträglichkeit und eine hervorragende Ökobilanz aufweisen sollen.

Die zuvor geschilderte Aufgabenstellung wird erfindungsgemäß durch den Gegenstand des unabhängigen Verfahrenspatentanspruchs gelöst, welcher das erfindungsgemäße Verfahren zur Behandlung bzw. Aufreinigung von Wasser, insbesondere von Abwasser oder Trinkwasser, bevorzugt zur adsorptiven Entfernung von anorganisch bzw. organisch, insbesondere organisch basierten Verunreinigungen, wie Spurenstoffen bzw. Mikroschadstoffen, betrifft; weitere vorteilhafte Weiterbildungen und Ausgestaltungen dieses Erfindungsaspekts sind Gegenstand der entsprechenden Verfahrensunteransprüche.

Weiterer Gegenstand der vorliegenden Erfindung ist die erfindungsgemäße AufreinigungsAnlage, vorzugsweise zur Behandlung bzw. Aufreinigung von Wasser, wie sie in dem entsprechenden unabhängigen Anspruch definiert ist; weitere, vorteilhafte Weiterbildungen und Ausgestaltungen der erfindungsgemäßen Aufreinigungs-Anlage sind Gegenstand der entsprechenden Unteransprüche.

Darüber hinaus ist Gegenstand der vorliegenden Erfindung eine Gegenstrom-Filtervorrichtung, insbesondere Gegenstrom-Adsorptionsfilterkolonne, vorzugsweise zur Behandlung bzw. Aufreinigung von Wasser, wie sie in dem entsprechenden unabhängigen Vorrichtungsanspruch definiert ist; vorteilhafte Weiterbildungen und Ausgestaltungen der erfindungsgemäßen Gegenstrom-Filtervorrichtung sind Gegenstand der jeweiligen Vorrichtungsunteransprüche.

Schließlich ist wiederum weiterer Gegenstand der vorliegenden Erfindung die Verwendung der erfindungsgemäßen Aufreinigungs-Anlage bzw. des im Rahmen der vorliegenden Erfindung eingesetzten Adsorptionsmaterials sowie der erfindungsgemäßen Gegenstrom-Filtervorrichtung in dem erfindungsgemäßen Verfahren zur Behandlung bzw. Aufreinigung von Wasser gemäß dem diesbezüglichen Verwendungsanspruch.

Es versteht sich von selbst, dass Ausgestaltungen, Ausführungsformen, Vorteile und dergleichen, welche nachfolgend zu Zwecken der Vermeidung von Wiederholungen nur zu einem Erfindungsaspekt angeführt sind, selbstverständlich auch in Bezug auf die übrigen Erfindungsaspekte entsprechend gelten.

Weiterhin versteht es sich von selbst, dass bei nachfolgenden Werte-, Zahlen- und Bereichsangaben die angegebenen Bereiche nicht beschränkend zu verstehen sind; es versteht sich für den Fachmann, dass einzelfallbedingt oder anwendungsbezogen von den angegebenen Bereichen und Angaben abgewichen werden kann, ohne dass der Rahmen der vorliegenden Erfindung verlassen ist.

Zudem gilt, dass sämtliche im Folgenden genannten Werte- bzw. Parameterangaben oder dergleichen grundsätzlich mit genormten oder explizit angegebenen Bestimmungsverfahren oder aber mit dem Fachmann an sich geläufigen Bestimmungsverfahren bestimmt bzw. ermittelt werden können.

Dies vorausgeschickt wird im Folgenden die vorliegende Erfindung näher beschrieben.

Gegenstand der vorliegenden Erfindung ist somit - gemäß einem **ersten** Aspekt der vorliegenden Erfindung - ein in dem entsprechenden unabhängigen Anspruch definiertes Verfahren zur Behandlung bzw. Aufreinigung von Wasser, insbesondere von Abwasser oder Trinkwasser, zur adsorptiven Entfernung von anorganisch oder organisch, insbesondere organisch basierten Verunreinigungen, wie Spurenstoffen bzw. Mikroschadstoffen. Das erfindungsgemäße Verfahren zeichnet sich dadurch aus, dass in einer nachfolgend definierten Gegenstrom-Filtervorrichtung, insbesondere Gegenstrom-Adsorptionsfilterkolonne, das zu behandelnde und/oder aufzureinigende Wasser einerseits und ein insbesondere partikuläres Adsorptionsmaterial andererseits im Gegenstrom bzw. entgegengesetzt zueinander geführt werden, derart, dass das zu behandelnde und/oder aufzureinigende Wasser durch eine in der Gegenstrom-Filtervorrichtung vorhandene Schüttung des Adsorptionsmaterials zur adsorptiven Entfernung von Verunreinigungen geleitet wird und die Schüttung durch vorzugsweise kontinuierliches Entfernen und Zuführen des Adsorptionsmaterials im Gegenstrom zu dem zu behandelnden Wasser ausgetauscht und regeneriert wird.

Im Rahmen der vorliegenden Erfindung kann es dabei gemäß einer erfindungsgemäß besonders bevorzugten Ausführungsform vorgesehen sein, dass das Adsorptionsmaterial insbesondere kontinuierlich in die Gegenstrom-Filtervorrichtung geführt bzw. eingebracht wird. Zudem kann in diesem Zusammenhang das Adsorptionsmaterial insbesondere kontinuierlich aus der Gegenstrom-Filtervorrichtung herausgeführt bzw. entfernt werden.

Gemäß einer weiteren erfindungsgemäß besonders bevorzugten Ausführungsform kann es zudem vorgesehen sein, dass das aus der Gegenstrom-Filtervorrichtung herausgeführte bzw. entfernte bzw. das mit den Verunreinigungen beladene Adsorptionsmaterial, einer insbesondere kontinuierlichen und/oder insbesondere thermischen Regenerierung und/oder Rezyklierung zugeführt bzw. unterzogen wird. Hierdurch können insbesondere die zuvor von der Aktivkohle aufgenommenen bzw. adsorbierten Verunreinigungen entfernt bzw. desorbiert werden, so dass ein regeneriertes bzw. ungebrauchtes bzw. unbeladenes bzw. frisches Adsorptionsmaterial resultiert. Insbesondere kann das regenerierte bzw. ungebrauchte bzw. unbeladene bzw. frische Adsorptionsmaterial insbesondere kontinuierlich wieder in die GegenstromFilterkolonne geführt bzw. eingebracht werden.

Die Formulierung "im Gegenstrom und/oder entgegengesetzt zueinander führen", wie sie im Rahmen der vorliegenden Erfindung verwendet wird, ist insbesondere derart zu verstehen, dass in Bezug auf das zu behandelnde bzw. aufzureinigende Wasser einerseits und das Adsorptionsmaterial andererseits ein jeweiliger Stofftransport bzw. Stofffluss im Sinne eines Gegenstromprinzips, d. h. in entgegengesetzter Richtung der jeweiligen Stofftransporte bzw. Stoffflüsse zueinander, erfolgt; insbesondere steht dabei das zu behandelnde bzw. aufzureinigende Wasser einerseits und das Adsorptionsmaterial andererseits in der Gegenstrom-Filtervorrichtung bzw. in der Adsorptions- bzw. Gegenstromzone (welche synonym auch als Massentransferzone bezeichnet werden kann) der Gegenstrom-Filtervorrichtung in direktem Kontakt zueinander, so dass infolgedessen ein Aufnahme bzw. Adsorption von in dem Wasser befindlichen Substanzen durch das Adsorptionsmaterial erfolgen kann, wobei es sich hierbei insbesondere um die sich in dem zu behandelnden bzw. aufzureinigenden Wasser befindlichen Verunreinigungen, wie Spurenstoffe bzw. Mikroschadstoffe, handelt. Das zu behandelnde bzw. aufzureinigende Wasser einerseits und das Adsorptionsmaterial andererseits strömen somit gemäß der erfindungsgemäßen Konzeption in entgegengesetzter Richtung zueinander, wobei in die jeweiligen (Haupt-)Strömungsrichtungen zumindest im Wesentlichen um 180° zueinander entgegengesetzt sind.

Insbesondere fließt im Allgemeinen das zu behandelnde bzw. aufzureinigende Wasser im Betriebs- bzw. Anwendungszustand der Gegenstrom-Filteranlage von dem Wasser-Eintrittsbereich durch die Adsorptions- bzw. Gegenstromzone zu dem bzw. in den Wasser-Austrittsbereich der Gegenstrom-Filteranlage, wohingegen das Adsorptionsmaterial von dem Wasser-Austrittsbereich durch die Adsorptions- bzw. Gegenstromzone zu dem bzw. in den Wasser-Eintrittsbereich der Gegenstrom-Filteranlage fließt bzw. transportiert wird.

In diesem Zusammenhang wird - gemäß einer erfindungsgemäß bevorzugten Ausführungsform, wonach die im Rahmen des erfindungsgemäßen Verfahrens eingesetzte Gegenstrom-Filtervorrichtung, bezogen auf deren Längsachse, in vertikaler Anordnung bzw. Positionierung betrieben wird - das Wasser in ein unteres Ende bzw. in einen am unteren Ende der Gegenstrom-Filtervorrichtung angeordneten Wasser-Eintrittsbereich eingeleitet, während das Adsorptionsmaterial in ein oberes Ende der Gegenstrom-Filtervorrichtung, welches gleichzeitig einen Wasser-Austrittsbereich definiert, eingeleitet wird. Innerhalb der Gegenstrom-Filtervorrichtung resultiert somit gemäß dieser Ausführungsform in Bezug auf das Wasser eine Strömungsrichtung sozusagen von unten nach oben, wobei das aufgereinigte Wasser bzw. das resultierende Filtrat am oberen Ende aus der Gegenstrom-Filtervorrichtung entfernt wird, während in Bezug auf das Adsorptionsmaterial eine Strömungsrichtung sozusagen von oben nach unten in der Gegenstrom-Filtervorrichtung vorliegt, wobei das mit den Verunreinigungen beladene Adsorptionsmaterial dann am unteren Ende aus der Gegenstrom-Filtervorrichtung entfernt wird.

Im Rahmen des erfindungsgemäßen Verfahrens kann dabei insbesondere derart verfahren werden, dass das zu behandelnde bzw. aufzureinigende Wasser unter Druckbeaufschlagung, beispielsweise mittels (Druck-)Pumpenvorrichtungen in die Gegenstrom-Filtervorrichtung transportiert wird bzw. dass das aufgereinigte bzw. von den Verunreinigungen befreite Wasser bzw. Filtrat unter Anlegung eines Unterdrucks, beispielsweise unter Verwendung von (Saug-)-Pumpenvorrichtungen aus der Gegenstrom-Filtervorrichtung entfernt wird. Zudem kann das Adsorptionsmaterial beispielsweise mittels Druckbeaufschlagung in die Gegenstrom-Filtervorrichtung eingebracht und/oder mittels Unterdruckbeaufschlagung aus der Gegenstrom-Filtervorrichtung unter Verwendung entsprechender Pumpvorrichtungen entfernt werden.

In diesem Zusammenhang sollte in Bezug auf das Adsorptionsmaterial der Druck an der Eintrittsstelle in die Gegenstrom-Filtervorrichtung größer sein als der entsprechende Gegendruck in der Gegenstrom-Filtervorrichtung bzw. in der Adsorptions- und/oder Gegenstromzone. Gleichermaßen sollte der Druck an der Austrittsstelle des Adsorptionsmaterials derart sein, dass der Druck in der Gegenstrom-Filtervorrichtung bzw. in der Adsorptions- und/oder Gegenstromzone größer ist als der Druck in dem der Austrittsstelle nachgeschalteten bzw. stromabwärts angeordneten Bereich. Für den Zulauf des zu behandelnden bzw. aufzureinigenden Wassers bzw. Rohwassers gilt in entsprechender Weise, dass der Zulaufdruck des Wassers vorzugsweise größer ist als der Druck in der Gegenstrom-Filtervorrichtung bzw. der Adsorptions- und/oder Gegenstromzone bzw. dass der Druck in dem der Gegenstrom-Filtervorrichtung nachgeschalteten Bereich bzw. stromabwärts hierzu angeordneten Bereich des Wasserablaufs geringer ist als der entsprechende Druck in der Gegenstrom-Filtervorrichtung bzw. der Adsorptions- und/oder Gegenstromzone.

Was den Transport des Adsorptionsmaterials in der Gegenstrom-Filtervorrichtung bzw. in der Adsorptions- und/oder Gegenstromzone anbelangt, so kann dieser zum einen durch die entsprechende Druck- bzw. Unterdruckbeaufschlagung, insbesondere wie zuvor geschildert, hervorgerufen und/oder unterstützt werden. Gleichermaßen kann es erfindungsgemäß insbesondere vorgesehen sein, dass der entsprechende Transport des Adsorptionsmaterials innerhalb der Gegenstrom-Filtervorrichtung bzw. in der Adsorptions- und/oder Gegenstromzone infolge bzw. durch Unterstützung der Schwerkraft, also gewissermaßen durch die Höhe der Schüttung selbst, erfolgt, insbesondere sofern die Gegenstrom-Filtervorrichtung vertikal zu ihrer Längsachse angeordnet wird, einhergehend mit dem Stofftransport bzw. Stofffluss des Adsorptionsmaterials sozusagen von oben nach unten.

Die grundlegende Idee der vorliegenden Erfindung ist insbesondere darin zu sehen, dass das erfindungsgemäße Verfahren in einer sehr speziellen Gegenstrom-Filtervorrichtung, wie sie nachfolgend noch im Detail beschrieben ist, durchgeführt wird, wobei in Bezug auf den Transport bzw. den Fluss des zu behandelnden bzw. aufzureinigenden Wassers das zur Aufreinigung des Wassers eingesetzte Adsorptionsmaterial in Gegenrichtung hierzu transportiert wird bzw. in Gegenrichtung hierzu fließt, so dass in der Gegenstrom-Filtervorrichtung der Wasserstrom einerseits und der Transport bzw. Fluss des Adsorptionsmaterials bzw. der Adsorptionsmaterialstrom andererseits im Gegenstrom zueinander erfolgt. Das aufzureinigende Wasser einerseits und das Adsorptionsmaterial andererseits werden somit in der erfindungsgemäß verwendeten Gegenstrom-Filtervorrichtung in gegenläufiger Transport- bzw. Flussrichtung geführt bzw. miteinander in Kontakt gebracht.

Dabei liegt das erfindungsgemäß eingesetzte Adsorptionsmaterial innerhalb der Gegenstrom-Filtervorrichtung insbesondere in Form einer losen Schüttung bzw. in Form einer Wanderschüttung und/oder in Form eines (Iosen) Wanderbetts vor, aus welcher insbesondere auf der Einspeiseseite des zu behandelnden bzw. aufzureinigenden Wasser verbrauchtes Adsorptionsmaterial insbesondere kontinuierlich entnommen bzw. abgezogen wird und zu welcher auf der Austrittsseite des aufgereinigten Wassers bzw. Filtrats regeneriertes bzw. ungebrauchtes Adsorptionsmaterial erneut zugegeben wird, so dass der zuvor beschriebene gegenläufige Transportprozess des Adsorptionsmaterials in Bezug auf das zu behandelnde bzw. aufzureinigende Wasser resultiert.

Aufgrund dieser sehr speziellen Verfahrensweise ist es in völlig überraschender Weise gelungen, sowohl die Stand- bzw. Einsatzzeit und somit die Betriebsdauer der im Rahmen des erfindungsgemäßen Verfahrens eingesetzten Gegenstrom-Filtervorrichtung als auch die Aufreinigungswirkung in Bezug auf das aufzureinigende Rohwasser in signifikanter Weise zu erhöhen. Denn aufgrund der erfindungsgemäßen Konzeption mit dem zugrundeliegenden Gegenstromprinzip und dem insbesondere kontinuierlichen Entfernen und Zuführen von Adsorptionsmaterial tritt sozusagen keine Erschöpfung der Gegenstrom-Filtervorrichtung bzw. der in der Gegenstrom-Filtervorrichtung vorhandenen Schüttung auf, was die Betriebszeiten erheblich verlängert bzw. einen kontinuierlichen Betrieb ermöglicht, da die zugrundeliegende Vorrichtung bzw. Anlage quasi ohne Unterbrechung bzw. zeitliche Begrenzung betrieben werden kann.

Insbesondere wird durch den gegenläufigen bzw. entgegengesetzten Transport von Adsorptionsmaterial einerseits und von zu behandelndem bzw. aufzureinigendem Wasser andererseits (d.h. das gegenläufige Durchströmen des zu behandelnden bzw. aufzureinigenden Wassers durch die Schüttung des Adsorptionsmaterials bzw. den Strom des Adsorptionsmaterials) die Filtereffizienz in Bezug auf die Entfernung der zuvor angeführten Spurenstoffe bzw. Mikroschadstoffe signifikant erhöht, da - ohne sich auf diese Theorie beschränken zu wollen - das zu behandelnde bzw. aufzureinigende Wasser gewissermaßen stets in Kontakt auch mit nichterschöpftem bzw. regeneriertem bzw. unbeladenem bzw. frischem Adsorptionsmaterial steht. Auch infolgedessen können erfindungsgemäß hohe Leerrohr- bzw. Filtergeschwindigkeiten bzw. -durchsätze in Bezug auf das zu behandelnde bzw. aufzureinigende Wasser realisiert werden, so dass insgesamt ein äußerst effizientes und leistungsfähiges Verfahren nach der Erfindung bereitgestellt wird (was apparativ auch durch die spezielle Ausgestaltung der erfindungsgemäßen Anlage und der erfindungsgemäßen Vorrichtung ermöglicht wird), wobei diesbezüglich, wie nachfolgend noch angeführt, Leerrohr- bzw. Filtergeschwindigkeiten erreicht werden können, welche mitunter mehr als 50 m/h betragen können.

Die vorliegende Erfindung basiert, wie zuvor angeführt, auf einer Verfahrensweise bzw. Technik, wonach das eingesetzte Adsorptionsmittel bzw. die Adsorbentien insbesondere kontinuierlich durch die im Rahmen des erfindungsgemäßen Verfahrens verwendete Gegenstrom-Filtervorrichtung bzw. Gegenstrom-Adsorptionskolonne geführt wird bzw. werden.

Aufgrund des permanenten Austauschs von Adsorptionsmaterial innerhalb der Gegenstrom-Filtervorrichtung ist ein weiterer Vorteil der vorliegenden Erfindung darin zu sehen, dass in dem Rohwasser mitunter vorhandene Schwebeteilchen bzw. Feststoffpartikel unkritisch sind. Durch das kontinuierliche bzw. permanente Abziehen von Adsorptionsmaterial setzt sich die Schüttung innerhalb der Adsorptions- bzw. Gegenstromzone nicht zu. Insbesondere ist durch das permanente Entfernen und Hinzufügen von Adsorptionsmaterial auch keine Unterbrechung der Wasseraufreinigung notwendig. Insbesondere entfallen aufwendige Rückspülvorgänge zur Entfernung von verbrauchtem Adsorptionsmaterial.

Zudem wird durch das erfindungsgemäß eingesetzte Adsorptionsmaterial, welches im Nachfolgenden noch im Detail beschrieben wird, mit den entsprechend hohen Adsorptionskapazitäten und der hohen Selektivität erfindungsgemäß erreicht, dass die eingesetzten Mengen an Adsorptionsmaterial relativ gering bzw. klein sind, was auch eine entsprechende Regeneration des eingesetzten Adsorptionsmaterials gewissermaßen vor Ort und somit im Rahmen einer einzigen Anlage ermöglicht, welche sowohl Vorrichtungen zur Wasseraufbereitung einerseits als auch zur Regeneration des Adsorptionsmaterials andererseits aufweist. Die Regeneration des Adsorptionsmaterials ist im Rahmen der vorliegenden Erfindung somit in das technologische Konzept integriert und ermöglicht, den Gesamtprozess vor Ort in Form eines insbesondere geschlossenen Kreislaufs auszubilden, und zwar ohne dass signifikante Mengen an Adsorptionsmaterial durch neues Material ersetzt werden müssen.

Insbesondere weist die erfindungsgemäße Gegenstrom-Filtervorrichtung, wie sie auch in dem erfindungsgemäßen Verfahren eingesetzt wird, nicht zuletzt aufgrund des Einsatzes von hocheffizientem Adsorptionsmaterial eine geringe Baugröße auf, da die spezifischen Adsorptionsmaterialmengen deutlich geringer sind als die entsprechenden Mengen, welche bei Aufreinigungsverfahren des Standes der Technik eingesetzt werden müssen, und da in Bezug auf die Gegenstrom-Filtervorrichtungen nach der Erfindungauch konstruktionsbedingt hohe Filtergeschwindigkeiten resultieren bzw. ermöglicht werden. Infolge der optimierten Baugröße kann die Gegenstrom-Filtervorrichtung nach der Erfindung, welche im Rahmen des erfindungsgemäßen Verfahrens eingesetzt wird, in eine Gesamtvorrichtung bzw. in die Aufreinigungs-Anlage nach der Erfindung bei insgesamt geringem Platzbedarf implementiert werden.

Was die vorliegende Erfindung zudem anbelangt, so ist der Begriff "kontinuierlich", wie er im Rahmen der vorliegenden Erfindung verwendet wird, sehr breit zu verstehen und bezieht sich insbesondere auf eine Ausführungsform des erfindungsgemäßen Verfahrens, wonach insbesondere die Zugabe und die Entnahme des Adsorptionsmaterials in die bzw. aus der Gegenstrom-Filtervorrichtung zumindest im Wesentlichen ohne (zeitliche) Unterbrechung erfolgt. Der in Rede stehende Begriff umfasst jedoch auch eine solche Verfahrensführung, wonach insbesondere kurze Unterbrechungen der Zugabe bzw. Entnahme des Adsorptionsmaterials vorliegen. Entsprechendes gilt für die Zugabe und Entnahme von Wasser, welche insbesondere gleichermaßen kontinuierlich, d.h. zumindest im Wesentlichen ohne (zeitliche) Unterbrechung, erfolgen sollten, wobei jedoch auch in Bezug auf das zu behandelnde bzw. aufzureinigende Wasser insbesondere kurze Unterbrechungen von Zugabe und Entnahme vorliegen können. Was die gegebenenfalls vorliegenden insbesondere kurzen Unterbrechungen der jeweiligen Transportvorgänge von Adsorptionsmaterial bzw. Wasser anbelangt, so können diese unabhängig voneinander oder zueinander koordiniert bzw. in Abhängigkeit voneinander durchgeführt werden. Beispielsweise kann der Transport von Wasser zur Entnahme bzw. Zugabe des Adsorptionsmaterials insbesondere kurzzeitig unterbrochen werden und umgekehrt. Wie zuvor angeführt, ist jedoch eine zumindest im Wesentlichen unterbrechungsfreie Verfahrensführung sowohl im Hinblick auf das Adsorptionsmaterial als auch auf das Wasser erfindungsgemäß bevorzugt. Insgesamt liegt erfindungsgemäß eine solche Verfahrensdurchführung vor, welche eine zumindest im Wesentlichen dauerhafte und/oder zumindest im Wesentlichen unterbrechungsfreie Aufreinigung des zu behandelnden bzw. aufzureinigenden Wassers ermöglicht. Weiterhin besteht ein weiterer Grundgedanke der vorliegenden Erfindung darin, das im Rahmen der vorliegende Erfindung eingesetzte Adsorptionsmaterial, bei welchem es sich, wie nachfolgend beschrieben, insbesondere um eine spezielle Aktivkohle in Korn- bzw. Kugelform handelt, vorzugsweise einer insbesondere kontinuierlichen Regenerierung bzw. Desorption, insbesondere einer thermischen Regenerierung bzw. Desorption, zu unterziehen, so dass aus der Gegenstrom-Filtervorrichtung entnommenes und mit den Verunreinigungen kontaminiertes bzw. beladenes Adsorptionsmaterial einer insbesondere thermischen Regeneration zur Entfernung bzw. Desorption der zuvor adsorbierten Verunreinigungen unterzogen wird, wobei das so erhaltene aufgereinigte bzw. von Verunreinigungen befreite bzw. unbeladene bzw. regenerierte Adsorptionsmaterial der Gegenstrom-Adsorptionsfilterkolonne erneut zugeführt werden kann.

Auf diese Art und Weise wird erfindungsgemäß die Leistungsfähigkeit und Effizienz des erfindungsgemäßen Verfahrens weiter erhöht, insbesondere einhergehend mit einer Kostenreduktion, da das Adsorptionsmaterial gewissermaßen rezykliert bzw. wiederverwendet werden kann - und dies, ohne den Betrieb der erfindungsgemäßen Anlage bzw. Vorrichtung zu unterbrechen.

Aufgrund der Verwendung spezieller Adsorptionsmaterialien insbesondere auf Basis von synthetischen Rohstoffen und/oder Ausgangsmaterialien bzw. vorzugsweise auf Basis von Aktivkohle, insbesondere wie nachfolgend noch definiert, kann dabei eine große Anzahl an Rezyklierungs- bzw. Regenerierungsvorgängen mit geringem Materialverlust durchgeführt werden, so dass das verwendete Adsorptionsmaterial für einen großen Zeitraum bzw. für zahlreiche Aufreinigungsschritte eingesetzt werden kann.

Auf Basis der erfindungsgemäß vorgesehenen Entnahme von mit Verunreinigungen beladenem Adsorptionsmaterial aus der Gegenstrom-Filtervorrichtung, der nachfolgenden Regenerierung und Wiederzufuhr in die Gegenstrom-Filtervorrichtung wird sozusagen im Rahmen der vorliegenden Erfindung ein geschlossener Adsorptionsmaterial-Kreislauf mit alternierender bzw. aufeinander abfolgender Beladung des Adsorptionsmaterials einerseits und Regeneration bzw. Desorption der zuvor aufgenommenen Schadstoffe bzw. Spurenstoffe andererseits ermöglicht. Gleichermaßen ist es im Rahmen der vorliegenden Erfindung jedoch grundsätzlich auch möglich, zumindest einen Teil des Adsorptionsmaterials durch neues Adsorptionsmaterial zu ersetzen, so dass ein bestimmter Anteil des eingesetzten Adsorptionsmaterials - beispielsweise kontinuierlich, aber auch chargen- bzw. batchweise - aus dem Verfahrensablauf entfernt und durch neues Adsorptionsmaterial ersetzt werden kann.

Ein weiterer zentraler Vorteil des erfindungsgemäßen Verfahrens ist darin zu sehen, dass das Verfahren nach der Erfindung gewissermaßen universell eingesetzt bzw. in Bezug auf die jeweiligen Aufreinigungsanforderungen individuell angepasst bzw. maßgeschneidert werden kann. So kann das erfindungsgemäße Verfahren zur Aufbereitung bzw. Aufreinigung von Abwasser, insbesondere kommunalem Abwasser, Klinik- und Industrieabwasser oder dergleichen, eingesetzt werden, aber auch zur Aufreinigung von Trinkwasser.

Was die im Rahmen des erfindungsgemäßen Verfahrens eingesetzte Gegenstrom-Filtervorrichtung anbelangt, so ist diese gemäß einem oder mehrerer Merkmale der nachfolgend definierten erfindungsgemäßen Gegenstrom-Filtervorrichtung ausgebildet. Im Rahmen des erfindungsgemäßen Verfahrens wird somit insbesondere eine sehr spezielle Gegenstrom-Filtervorrichtung eingesetzt, welche aufgrund ihres speziellen apparativen Aufbaus den dem erfindungsgemäßen Verfahren zugrundeliegenden gegenläufigen Transport von zu behandelndem bzw. aufzureinigendem Wasser einerseits und Adsorptionsmaterial andererseits ermöglicht. Diesbezüglich kann insbesondere auch auf die nachfolgenden Ausführungen zu der erfindungsgemäßen Gegenstrom-Filtervorrichtung verwiesen werden.

In diesem Zusammenhang weist die im Rahmen des erfindungsgemäßen Verfahrens eingesetzte Gegenstrom-Filtervorrichtung mindestens ein Gehäuse auf, wobei das Gehäuse mindestens eine Adsorptions- und/oder Gegenstromzone sowie mindestens einen Wasser-Eintrittsbereich und mindestens einen Wasser-Austrittsbereich aufweist.

Insbesondere ist die Adsorptions- und/oder Gegenstromzone strömungstechnisch zwischen dem Wasser-Eintrittsbereich und dem Wasser-Austrittsbereich angeordnet. Zudem sollte die Adsorptions- und/oder Gegenstromzone stromabwärts zu dem Wasser-Eintrittsbereich und stromaufwärts zu dem Wasser-Austrittsbereich, bezogen auf die Strömungsrichtung des Wassers, angeordnet sein.

Der Wasser-Eintrittsbereich weist mindestens einen Wasser-Zulauf und mindestens einen Adsorptionsmaterial-Auslass auf. Weiterhin weist der Wasser-Austrittsbereich mindestens einen Wasser-Ablauf undmindestens einen Adsorptionsmaterial-Einlass auf.

Aufgrund dieser speziellen apparativen Konzeption wird die entgegengesetzte Strömung bzw. der entgegengesetzte Transport von zu behandelndem bzw. aufzureinigendem Wasser einerseits und Adsorptionsmaterial andererseits gewährleistet, insbesondere da das Wasser einerseits und das Adsorptionsmaterial andererseits in der Gegenstrom-Filtervorrichtung an voneinander verschiedenen bzw. gegenüberliegenden Enden in die Gegenstrom-Filtervorrichtung jeweils eingeführt bzw. jeweils aus dieser entnommen werden.

Im Speziellen weist die Gegenstrom-Filtervorrichtung, welche im Rahmen des erfindungsgemäßen Verfahrens verwendet wird, somit einerseits mindestens einen Wasser-Eintrittsbereich mit mindestens einem Wasser-Zulauf und mindestens einem Adsorptionsmaterial-Auslass und andererseits mindestens einen Wasser-Austrittsbereich mit mindestens einem Wasser-Ablauf und mindestens einem Adsorptionsmaterial-Einlass sowie mindestens eine strömungstechnisch zwischen dem Wasser-Eintrittsbereich und dem Wasser-Austrittsbereich angeordnete Adsorptions- und/oder Gegenstromzone auf. Im Rahmen der erfindungsgemäßen Verfahrensführung wird das zu behandelnde bzw. aufzureinigende Wasser bzw. Rohwasser somit durch die Schüttung des Adsorptionsmaterials insbesondere in der Adsorptions- und/oder Gegenstromzone der Gegenstrom-Filtervorrichtung im Gegenstrom zu dem Adsorptionsmaterial zum Erhalt von behandeltem bzw. aufgereinigtem Wasser geführt, wobei das so erhaltene behandelte bzw. aufgereinigte Wasser, insbesondere Filtrat, anschließend aus der Gegenstrom-Filtervorrichtung entfernt wird.

In diesem Zusammenhang sollte das zu behandelnde Wasser im Rahmen der erfindungsgemäßen Verfahrensführung in den Wasser-Eintrittsbereich, insbesondere durch den Wasser-Zulauf, in die Gegenstrom-Filtervorrichtung insbesondere kontinuierlich geführt und/oder eingebracht werden. Zudem sollte das behandelte bzw. aufgereinigte Wasser, insbesondere das Filtrat, in dem Wasser-Austrittsbereich, insbesondere durch den Wasser-Ablauf, aus der Gegenstrom-Filtervorrichtung insbesondere kontinuierlich herausgeführt und/oder entfernt werden.

In diesem Zusammenhang kann es erfindungsgemäß gleichermaßen vorgesehen sein, dass das Adsorptionsmaterial in den Wasser-Austrittsbereich, insbesondere durch den Adsorptionsmaterial-Einlass, in die Gegenstrom-Filtervorrichtung insbesondere kontinuierlich geführt und/oder eingebracht wird. In diesem Zusammenhang sollte das Adsorptionsmaterial in dem Wasser-Austrittsbereich, insbesondere durch den Adsorptionsmaterial-Auslass, aus der Gegenstrom-Filtervorrichtung insbesondere kontinuierlich herausgeführt und/oder entfernt werden.

Insbesondere ist es im Rahmen der vorliegenden Erfindung vorgesehen, dass das zu behandelnde und/oder aufzureinigende Wasser einerseits und das Adsorptionsmaterial andererseits in der Gegenstrom-Filtervorrichtung, insbesondere in der Adsorptions- und/oder Gegenstromzone, zumindest im Wesentlichen zueinander entgegengesetzte Strömungsrichtungen aufweisen. Insbesondere wird erfindungsgemäß derart verfahren, dass das zu behandelnde und/oder aufzureinigende Wasser einerseits und das Adsorptionsmaterial andererseits in Gegenrichtung und/oder im Gegenstrom zueinander in der Gegenstrom-Filtervorrichtung, insbesondere in der Adsorptions- und/oder Gegenstromzone, strömen und/oder fließen und/oder miteinander in Kontakt gebracht werden. Hieraus resultiert eine effiziente Entfernung der in Rede stehenden Verunreinigungen, insbesondere Spurenstoffe bzw. Mikroschadstoffe, aus dem zu behandelnden bzw. aufzureinigenden Wasser bzw. Rohwasser zum Erhalt des behandelten bzw. aufgereinigten Wassers bzw. Filtrats, wobei die Verunreinigungen durch das Adsorptionsmaterial aufgenommen bzw. adsorbiert werden.

Im Rahmen einer erfindungsgemäß bevorzugten Ausführungsform wird das zu behandelnde und/oder aufzureinigende Wasser insbesondere kontinuierlich in die Gegenstrom-Filtervorrichtung, insbesondere unter Druckbeaufschlagung, geführt und/oder eingebracht. Insbesondere sollte das zu behandelnde und/oder aufzureinigende Wasser in dem Wasser-Eintrittsbereich, vorzugsweise durch den Wasser-Zulauf, der Gegenstrom-Filtervorrichtung in die Gegenstrom-Filtervorrichtung geführt und/oder eingebracht werden.

Insbesondere wird im Rahmen des erfindungsgemäßen Verfahrens derart vorgegangen, dass das in die Gegenstrom-Filterkolonne geführte bzw. eingebrachte zu behandelnde bzw. aufzureinigende Wasser durch die stromabwärts zu dem Wasser-Eintrittsbereich der Gegenstrom-Filtervorrichtung angeordnete Adsorptions- bzw. Gegenstromzone der Gegenstrom-Filtervorrichtung geführt wird, bezogen auf die Strömungsrichtung des Wassers. Dabei ist es insbesondere vorgesehen, dass das zu behandelnde und/oder aufzureinigende Wasser in der Adsorptions- und/oder Gegenstromzone mit dem Adsorptionsmaterial in Kontakt gebracht wird. Insbesondere ist es erfindungsgemäß vorgesehen, dass das zu behandelnde und/oder aufzureinigende Wasser einerseits und das Adsorptionsmaterial andererseits zumindest im Wesentlichen zueinander entgegengesetzte Strömungsrichtungen aufweisen. Insbesondere fließen bzw. strömen das zu behandelnde bzw. aufzureinigende Wasser einerseits und das Adsorptionsmaterial andererseits in Gegenrichtung und/oder im Gegenstrom zueinander in der Adsorptions- und/oder Gegenstromzone.

Erfindungsgemäß wird insbesondere derart verfahren, dass das zu behandelnde und/oder aufzureinigende Wasser insbesondere nach Durchtritt und/oder Durchströmen der Adsorptions- und/oder Gegenstromzone der Gegenstrom-Filtervorrichtung in bzw. aus einem stromabwärts zu dem Wasser-Eintrittsbereich der Gegenstrom-Filtervorrichtung und/oder stromabwärts zu der Adsorptions- und/oder Gegenstromzone der Gegenstrom-Filtervorrichtung, bezogen auf die Strömungsrichtung des Wassers, angeordneten Wasser-Austrittsbereich, insbesondere durch einen Wasser-Ablauf, aus der Gegenstrom-Filtervorrichtung herausgeführt und/oder entfernt wird. Hierbei handelt es sich insbesondere um das behandelte bzw. aufgereinigte Wasser bzw. um das von den Verunreinigungen, insbesondere Spurenstoffen und/oder Mikroschadstoffen, befreite Wasser bzw. Filtrat.

Im Rahmen der vorliegenden Erfindung können aufgrund der speziellen Verfahrensdurchführung, insbesondere unter Einsatz einer speziellen Aufreinigungs-Anlage bzw. Gegenstrom-Filtervorrichtung, hohe Leerrohr- bzw. Filtergeschwindigkeiten erreicht werden, was die Filtereffizienz signifikant erhöht. So kann im Rahmen der vorliegenden Erfindung in der Adsorptions- und/oder Gegenstromzone der Gegenstrom-Filtervorrichtung eine Leerrohrgeschwindigkeit und/oder Filtergeschwindigkeit, berechnet als Quotient aus Volumenstrom [m³/h] und Querschnittsfläche [m²] und bezogen auf das zu behandelnde und/oder aufzureinigende Wasser, von mindestens 10 m/h, insbesondere mindestens 20 m/h, vorzugsweise mindestens 25 m/h, bevorzugt mindestens 30 m/h, eingestellt wird bzw. werden.

Insbesondere kann erfindungsgemäß derart verfahren werden, dass in der Adsorptions- und/oder Gegenstromstromzone der Gegenstrom-Filtervorrichtung eine Leerrohrgeschwindigkeit und/oder Filtergeschwindigkeit, berechnet als Quotient aus Volumenstrom [m³/h] und Querschnittsfläche [m²] und bezogen auf das zu behandelnde und/oder aufzureinigende Wasser, im Bereich von 10 m/h bis 120 m/h, insbesondere 20 m/h bis 100 m/h, vorzugsweise 25 m/h bis 80 m/h, bevorzugt 30 m/h bis 70 m/h, besonders bevorzugt 40 m/h bis 60 m/h, eingestellt wird bzw. werden.

Was das erfindungsgemäße Verfahren weiterhin anbelangt, so ist es insbesondere vorgesehen, dass das Adsorptionsmaterial zumindest im Wesentlichen kontinuierlich der Gegenstrom-Filtervorrichtung zugeführt wird. Insbesondere sollte das Adsorptionsmaterial zumindest im Wesentlichen kontinuierlich durch die Gegenstrom-Filtervorrichtung geführt werden. Zudem sollte das Adsorptionsmaterial zumindest im Wesentlichen kontinuierlich der Gegenstrom-Filtervorrichtung entnommen werden. In diesem Zusammenhang sollte die pro Zeiteinheit zugegebene Menge bzw. das pro Zeiteinheit zugegebene Volumen an Adsorptionsmaterial zumindest im Wesentlichen der pro Zeiteinheit entnommenen Menge bzw. dem pro Zeiteinheit entnommenem Volumen an Adsorptionsmaterial entsprechen. Hierdurch wird eine zumindest im Wesentlichen konstante Menge bzw. ein konstantes Volumen an Adsorptionsmaterial in der Gegenstrom-Filtervorrichtung und hieraus resultierend eine zumindest im Wesentlichen konstante Höhe der insbesondere losen Schüttung des Adsorptionsmaterials in der Gegenstrom-Filtervorrichtung gewährleistet.

Weiterhin sollte das Adsorptionsmaterial in dem Wasser-Austrittsbereich, vorzugsweise durch den Adsorptionsmaterial-Einlass, der Gegenstrom-Filtervorrichtung in die Gegenstrom-Filtervorrichtung geführt und/oder eingebracht werden.

Insbesondere sollte das in die Gegenstrom-Filterkolonne geführte und/oder eingebrachte Adsorptionsmaterial dabei durch eine stromabwärts zu dem Wasser-Austrittsbereich der Gegenstrom-Filtervorrichtung angeordnete Adsorptions- und/oder Gegenstromzone der Gegenstrom-Filtervorrichtung geführt werden, bezogen auf die Strömungsrichtung des Adsorptionsmaterials. In diesem Zusammenhang sollte das Adsorptionsmaterial in der Adsorptions- und/oder Gegenstromzone mit dem zu behandelnden und/oder aufzureinigenden Wasser in Kontakt gebracht werden. Insbesondere sollten das Adsorptionsmaterial einerseits und das zu behandelnde und/oder aufzureinigende Wasser andererseits zumindest im Wesentlichen zueinander entgegengesetzte Strömungsrichtungen aufweisen. In diesem Zusammenhang sollte das Adsorptionsmaterial einerseits und das zu behandelnde und/oder aufzureinigende Wasser andererseits in Gegenrichtung und/oder im Gegenstrom zueinander in der Adsorptions- und/oder Gegenstromzone strömen bzw. fließen und/oder miteinander in Kontakt gebracht werden.

Wie zuvor angeführt, ist es erfindungsgemäß von besonderem Vorteil, wenn das Adsorptionsmaterial in der Gegenstrom-Filtervorrichtung, insbesondere in der Adsorptions- und/oder Gegenstromzone der Gegenstrom-Filtervorrichtung, in Form einer insbesondere losen Schüttung vorliegt.

Weiterhin kann es erfindungsgemäß vorgesehen sein, dass das Adsorptionsmaterial insbesondere nach Durchtritt und/oder Durchströmen der Adsorptions- und/oder Gegenstromzone der Gegenstrom-Filtervorrichtung in dem stromabwärts zu dem Wasser-Austrittsbereich der Gegenstrom-Filtervorrichtung und/oder stromabwärts zu der Adsorptions- und/oder Gegenstromzone der Gegenstrom-Filtervorrichtung, bezogen auf die Strömungsrichtung des Adsorptionsmaterials, angeordneten Wasser-Eintrittsbereich durch den Adsorptionsmaterial-Auslass aus der Gegenstrom-Filtervorrichtung herausgeführt und/oder entfernt wird.

Ein weiterer zentraler Vorteil der erfindungsgemäßen Verfahrensführung ist zudem darin zu sehen, dass optimierte spezifische Massedurchsätze realisiert werden können, wonach nämlich eine relativ kleine Menge an Adsorptionsmaterial zu einem großen Volumen an aufgereinigtem Wasser bzw. Filtrat führt.

In diesem Zusammenhang kann es erfindungsgemäß insbesondere vorgesehen sein, dass ein spezifischer Massedurchsatz, berechnet als Quotient aus Massedurchsatz an Adsorptionsmaterial in der Gegenstrom-Filtervorrichtung [g/h] und erzeugtem Volumen an behandeltem und/oder aufgereinigtem Wasser und/oder Filtrat [m³], im Bereich von 10⁻⁷ g/h·m³ bis 1.000 g/h·m³, insbesondere 10⁻⁶ g/h·m³ bis 100 g/h·m³, vorzugsweise 10⁻⁵ g/h·m³ bis 10 g/h·m³, eingestellt wird.

Weiterhin kann es erfindungsgemäß insbesondere vorgesehen sein, dass in der Gegenstrom-Filtervorrichtung ein Austausch (d. h. Ersatz von mit Verunreinigungen beladenem Adsorptionsmaterial durch regeneriertes bzw. unbeladenes bzw. frisches Adsorptionsmaterial) im Bereich von 0,1 bis 90 Gew.-%, insbesondere 0,5 bis 80 Gew.-%, vorzugsweise 1 bis 70 Gew.-%, bevorzugt 1,5 bis 60 Gew.-%, besonders bevorzugt 2,5 bis 55 Gew.-%, ganz besonders bevorzugt 5 bis 50 Gew.-%, durchgeführt wird, bezogen auf das Volumen des Adsorptionsmaterials in der insbesondere losen Schüttung und bezogen auf einen Zeitraum von 24 h. Hierdurch wird gleichermaßen gewährleistet, dass nicht erschöpftes bzw. regeneriertes Adsorptionsmaterial in für die Behandlung bzw. Aufreinigung des Rohwassers ausreichender Menge in der Schüttung vorliegt. Infolge des kontinuierlichen Austauschs des Adsorptionsmaterials erschöpft die Schüttung in der Gegenstrom-Filterkolonne quasi nicht.

Was das im Rahmen des erfindungsgemäßen Verfahrens eingesetzte Adsorptionsmaterial anbelangt, so kann das Adsorptionsmaterial ausgewählt werden aus der Gruppe von kornförmigen, insbesondere kugelförmigen Adsorptionsmaterialien. Derartige Adsorptionsmaterialien weisen ein besonders gutes Verhalten in der Schüttung auf, insbesondere was das Durchströmverhalten des zu behandelnden bzw. aufzureinigenden Wassers aber auch den Transport des Adsorptionsmaterials in der Schüttung selbst anbelangt.

Insbesondere kann das Adsorptionsmaterial ausgewählt werden aus der Gruppe von
(i) Aktivkohle, insbesondere kornförmiger Aktivkohle, vorzugsweise kugelförmiger Aktivkohle und/oder insbesondere Aktivkohle in Form von PBSAC (*Polymer-based Spherical Activated Carbon*);
(ii) Zeolithen, insbesondere natürlichen und/oder synthetischen Zeolithen;
(iii) Molekularsieben, insbesondere zeolithischen Molekularsieben, synthetischen Molekularsieben und/oder insbesondere synthetischen Molekularsieben auf Basis von Kohlenstoff, Oxiden und/oder Gläsern;
(iv) Metalloxid- und/oder Metallpartikeln;
(v) Ionenaustauscherharzen, insbesondere polydispersen und/oder monodispersen Kationen- und/oder Anionenaustauschern, insbesondere vom Geltyp und/oder vom makroporösen Typ;
(vi) anorganischen Oxiden, insbesondere Siliciumdioxiden, Silicagelen und/oder Aluminiumoxiden;
(vii) porösen organischen Polymeren und/oder porösen organisch-anorganischen Hybridpolymeren und/oder porösen organisch-anorganischen Hybridpolymeren und/oder metallorganischen Gerüstmaterialien, insbesondere MOFs (*Metall Organic Framework*), COFs (*Covalent Organic Framework*), ZIFs (*Zeolithe Imidazolate Framework*), POMs (*Polymer Organic Material*) und/oder OFCs;
(viii) mineralischen Granulaten;
(ix) Klathraten; sowie
(x) deren Mischungen und/oder Kombinationen.

In erfindungsgemäß bevorzugter Weise kann das Adsorptionsmaterial aus Aktivkohle, insbesondere aus kornförmiger, vorzugsweise kugelförmiger Aktivkohle, gebildet werden.

Die jeweiligen Adsorptionsmaterialien, welche im Rahmen des erfindungsgemäßen Verfahrens eingesetzt werden können, sind dem Fachmann als solche wohlbekannt, und der Fachmann ist jederzeit in der Lage, das jeweilige Adsorptionsmaterial im Lichte der erfindungsgemäßen Verfahrensführung gemäß den vorliegenden Ausführungen insbesondere zur Gewährleistung einer hohen Adsorptionseffizienz und der erfindungsgemäß vorgesehenen insbesondere thermischen Regenerierung auszuwählen.

Erfindungsgemäß verwendbare Aktivkohlen, welche insbesondere auf Basis korn- bzw. kugelförmiger Aktivkohle eingesetzt werden können, sind beispielsweise von der Blücher GmbH, Erkrath, Deutschland oder von der Adsor-Tech GmbH, Premnitz, Deutschland, erhältlich. Zudem kann in Bezug auf die erfindungsgemäß einsetzbare Aktivkohle auf die auf die Anmelderin selbst zurückgehende europäische Patentanmeldung EP 1 918 022 A1 sowie auf die parallele US 2008/0107589 A1 verwiesen werden, deren jeweilige Offenbarung hiermit durch Bezugnahme vollumfänglich eingeschlossen ist. Insbesondere kann die erfindungsgemäß eingesetzte Aktivkohle durch Carbonisierung von insbesondere synthetischen Ausgangsmaterialien bzw. Polymeren mit nachfolgender Aktivierung erhalten werden. Die erfindungsgemäß eingesetzte Aktivkohle kann beispielsweise durch Carbonisierung und nachfolgende Aktivierung von gelförmigen sulfonierten Styrol/Divinylbenzol-Copolymeren, insbesondere sulfonierten divinylbenzolvernetzten Polystyrolen, in Kornform, bevorzugt in Kugelform, erhalten werden.

Darüber hinaus kann zu weiterführenden Einzelheiten zu den erfindungsgemäß einsetzbaren MOF-Materialien insbesondere verwiesen werden auf die internationale Patentanmeldung WO 2009/096184 A1 sowie auf die parallele deutsche Patentanmeldung DE 10 2008 005 218 A1, deren jeweilige Offenbarung hiermit durch Bezugnahme vollumfänglich eingeschlossen ist.

Die erfindungsgemäß eingesetzten Adsorptionsmaterialien, insbesondere Aktivkohlen, weisen neben ihren hervorragenden physikalischen Eigenschaften (d. h. große mechanische Stabilität, geringer Abrieb bzw. geringe Staubbildung und infolgedessen hervorragende Transporteigenschaften sowohl innerhalb der Schüttung als auch im Rahmen des Regenerationsprozesses) darüber hinaus auch hervorragende Adsorptionseigenschaften im Hinblick auf die aus dem zu behandelnden bzw. aufzureinigenden Wasser zu entfernenden Verunreinigungen auf. Insbesondere kann im Rahmen der vorliegenden Erfindung eine gewissermaßen maßgeschneiderte Aktivkohle eingesetzt werden, welche der Komplexität, den Molekülgrößen, sowie den spezifischen Polaritäten der zu entfernenden Verunreinigungen bzw. Mikroschadstoffe mit dem diesbezüglichen Einfluss auf das Adsorptionsverhalten Rechnung trägt. Dabei kommt insbesondere unter Berücksichtigung der Polaritäten und der in der Wasserphase resultierenden Hydrathüllen der entsprechenden Molekülgröße der zu entfernenden Verunreinigungen eine große Bedeutung insofern zu, als für eine optimale Adsorption ein sehr spezifisches Adsorptionsporensystem mit einer darauf abgestimmten speziellen Oberflächenchemie des Adsorptionsmaterials bzw. der eingesetzten Aktivkohle von Vorteil ist. Wie zuvor angeführt, können die im Rahmen der vorliegenden Erfindung eingesetzten Adsorptionsmaterialien bzw. Aktivkohlen diesbezüglich gewissermaßen individuell angepasst bzw. maßgeschneidert werden, was zu einer weiterführenden Optimierung der Adsorptionseigenschaften führt. Infolgedessen resultieren signifikante Vorteile auch gegenüber herkömmlichen Adsorptionsmaterialien, insbesondere was die Adsorptionsleistung, -selektivität und die damit in Verbindung stehenden Einsatzzeiten anbelangt, was insgesamt auch zu reduzierten Kosten führt.

Insbesondere kann das im Rahmen des erfindungsgemäßen Verfahrens eingesetzte Adsorptionsmaterial, insbesondere die vorzugsweise kornförmige Aktivkohle, eine monodisperse Teilchengrößenverteilung oder eine heterodisperse Teilchengrößenverteilung aufweisen.

Im Rahmen der vorliegenden Erfindung ist es zudem bevorzugt, dass das Adsorptionsmaterial, insbesondere die vorzugsweise kornförmige Aktivkohle, Teilchengrößen, insbesondere Teilchendurchmesser, im Bereich von 0,001 bis 5 mm, insbesondere 0,005 bis 3 mm, vorzugsweise 0,01 bis 2 mm, besonders bevorzugt 0,015 bis 1,5 mm, ganz besonders bevorzugt 0,05 bis 1 mm, aufweist.

Insbesondere sollte das Adsorptionsmaterial, insbesondere die vorzugsweise kornförmige Aktivkohle, mittlere Teilchengrößen, insbesondere mittlere Teilchendurchmesser (D50), im Bereich von 0,01 bis 2 mm, insbesondere 0,05 bis 1,5 mm, vorzugsweise 0,1 bis 1 mm, aufweisen.

Die entsprechenden Teilchengrößen bzw. Durchmesser können insbesondere auf Basis der Methode nach ASTM D2862-97/04 bestimmt werden.

Die Auswahl spezieller Teilchengrößen bzw. Teilchendurchmesser führt im Lichte der vorliegenden Erfindung zum einen zu einer besonders gleichmäßigen Schüttung innerhalb der Gegenstrom-Filtervorrichtung und zu verbesserten Transporteigenschaften des Aktivkohlematerials, insbesondere im Rahmen des Rezyklierung-bzw. Regenerierung, aber auch im Hinblick auf das (Transport-)Verhalten des Adsorptionsmaterials in der insbesondere losen Schüttung. Zum anderen führen die angegebenen Teilchengrößen zu einem weiter verbesserten Strömungsverhalten des Wassers in der Schüttung.

Zudem sollte das Adsorptionsmaterial, insbesondere die vorzugsweise kornförmige Aktivkohle, eine Abriebfestigkeit (*ball pan hardness*) bzw. Abriebshärte von mindestens 90 %, insbesondere mindestens 95 %, vorzugsweise mindestens 97 %, besonders bevorzugt mindestens 98 %, ganz besonders bevorzugt mindestens 99 %, aufweisen. Die Abriebfestigkeit wird insbesondere gemäß der ASTM D3802-05 bestimmt. Die hohe Abriebfestigkeit führt zu geringen Abrieben der Aktivkohle insbesondere im Rahmen der zugrundeliegenden Transportvorgänge, was die Einsatzdauer gleichermaßen verlängert.

In diesem Zusammenhang sollte das Adsorptionsmaterial, insbesondere die vorzugsweise kornförmige Aktivkohle, eine Druck- bzw. Berstfestigkeit (Gewichtsbelastbarkeit) pro Adsorptionspartikel und/oder -teilchen, insbesondere pro Aktivkohlekügelchen, von mindestens 5 Newton, insbesondere mindestens 10 Newton, vorzugsweise mindestens 20 Newton, aufweisen. Insbesondere kann das Adsorptionsmaterial, insbesondere die vorzugsweise kornförmige Aktivkohle, eine Druck- bzw. Berstfestigkeit (Gewichtsbelastbarkeit) pro Adsorptionspartikel und/oder -teilchen, insbesondere pro Aktivkohlekügelchen, im Bereich von 10 bis 50 Newton, insbesondere 12 bis 45 Newton, vorzugsweise 15 bis 40 Newton, aufweisen.

Im Rahmen der vorliegenden Erfindung ist es gleichermaßen von Vorteil, wenn das Adsorptionsmaterial, insbesondere die vorzugsweise kornförmige Aktivkohle, zumindest im Wesentlichen staubfrei ist. Hierdurch wird z. B. eine etwaige Schlammbildung in der Gegenstrom-Filtervorrichtung verhindert.

Gleichermaßen sollte das Adsorptionsmaterial, insbesondere die vorzugsweise kornförmige Aktivkohle, einen Aschegehalt von höchstens 1 Gew.-%, insbesondere höchstens 0,8 Gew.-%, vorzugsweise höchstens 0,6 Gew.-%, bevorzugt höchstens 0,5 Gew.-%, besonders bevorzugt höchstens 0,2 Gew.-%, aufweisen. Der Aschegehalt wird insbesondere gemäß der ASTM D2866-94/04 bestimmt.

Das Adsorptionsmaterial, insbesondere die vorzugsweise kornförmige Aktivkohle, sollte einen Oberflächensauerstoffgehalt von höchstens 10 Gew.-%, insbesondere höchstens 8 Gew.-%, vorzugsweise höchstens 6 Gew.-%, bevorzugt höchstens 5 Gew.-%, aufweisen. Zudem sollte das Adsorptionsmaterial, insbesondere die vorzugsweise kornförmige Aktivkohle, hydrophob ausgebildet ist und/oder hydrophobe Oberflächeneigenschaften aufweisen. Der Oberflächensauerstoffgehalt kann insbesondere mittels ESCA-Verfahren (*Electron Spectroscopy for Chemical Analysis*) bestimmt werden.

Insbesondere kann das Adsorptionsmaterial, insbesondere die vorzugsweise kornförmige Aktivkohle, eine spezifische Oberfläche (BET-Oberfläche) von mindestens 500 m²/g, insbesondere mindestens 750 m²/g, vorzugsweise mindestens 1.000 m²/g, besonders bevorzugt mindestens 1.200 m²/g, aufweisen. Insbesondere kann das Adsorptionsmaterial, insbesondere die vorzugsweise kornförmige Aktivkohle, eine spezifische Oberfläche (BET-Oberfläche) im Bereich von 500 bis 4.000 m²/g, insbesondere 750 bis 3.000 m²/g, vorzugsweise 1.000 bis 2.500 m²/g, besonders bevorzugt 1.100 bis 2.000 m²/g, aufweisen.

Die Bestimmung der spezifischen Oberfläche gemäß BET ist dem Fachmann grundsätzlich bekannt. Sämtliche BET-Oberflächenangaben beziehen sich insbesondere auf die Bestimmung gemäß ASTM D6556-04. Im Rahmen der vorliegenden Erfindung wird zur Bestimmung der BET-Oberfläche insbesondere die sogenannte MultiPoint-BET-Bestimmungsmethode (MP-BET) in einem Partialdruckbereich p/p₀ von 0,05 bis 0,1 angewendet.

Zudem sollte das Adsorptionsmaterial, insbesondere die vorzugsweise kornförmige Aktivkohle, ein Adsorptionsvolumen V_{ads} von mindestens 250 cm³/g, insbesondere mindestens 300 cm³/g, vorzugsweise mindestens 350 cm³/g, besonders bevorzugt mindestens 400 cm³/g, aufweisen. Insbesondere sollte das Adsorptionsmaterial, insbesondere die vorzugsweise kornförmige Aktivkohle, ein Adsorptionsvolumen V_{ads} im Bereich von 250 bis 3.000 cm³/g, insbesondere 300 bis 2.000 cm³/g, vorzugsweise 350 bis 2.500 cm³/g, aufweisen.

Bei dem Adsorptionsvolumen V_{ads} handelt es sich um eine dem Fachmann wohlbekannte Größe zur Charakterisierung der eingesetzten partikulären Adsorptionsmaterialien. Auch die diesbezüglichen Bestimmungsmethoden sind dem Fachmann an sich wohlbekannt. Insbesondere handelt es sich bei dem Adsorptionsvolumen V_{ads} um das gewichtsbezogene adsorbierte N₂-Volumen, welches im Allgemeinen bei einem Partialdruck p/p₀ von 0,995 bestimmt wird.

Zudem sollte das Adsorptionsmaterial, insbesondere die vorzugsweise kornförmige Aktivkohle, ein Gesamtporenvolumen nach Gurvich von mindestens 0,50 cm³/g, insbesondere mindestens 0,55 cm³/g, vorzugsweise mindestens 0,60 cm³/g, besonders bevorzugt mindestens 0,65 cm³/g, ganz besonders bevorzugt mindestens 0,70 cm³/g, aufweisen. In diesem Zusammenhang sollte das Adsorptionsmaterial, insbesondere die vorzugsweise kornförmige Aktivkohle, ein Gesamtporenvolumen nach Gurvich im Bereich von 0,50 bis 2,0 cm³/g, insbesondere 0,55 bis 1,5 cm³/g, vorzugsweise 0,60 bis 1,2 cm³/g, besonders bevorzugt 0,65 bis 1,0 cm³/g, aufweisen.

Was die Bestimmung des Gesamtporenvolumens nach Gurvich anbelangt, so handelt es sich um eine dem Fachmann auf diesem Gebiet an sich bekannte Mess- bzw. Bestimmungsmethode. Zu weitergehenden Einzelheiten bezüglich der Bestimmung des Gesamtporenvolumens nach Gurvich kann beispielsweise verwiesen werden auf L. Gurvich (1915), J. Phys. Chem. Soc. Russ. 47, 805, sowie auf S. Lowell et al., Characterization of Porous Solids and Powders: Surface Area Pore Size and Density, Kluwer Academic Publishers, Article Technologies Series, Seiten 111 ff.

Zudem kann das Adsorptionsmaterial, insbesondere die vorzugsweise kornförmige Aktivkohle, eine Gesamtporosität im Bereich von 10 % bis 80 %, insbesondere 20 % bis 75 %, vorzugsweise 25 % bis 70 %, bezogen auf das Gesamtvolumen des Adsorptionsmaterials, aufweisen. Weiterhin kann das Adsorptionsmaterial, insbesondere die vorzugsweise kornförmige Aktivkohle, ein spezifisches Gesamtporenvolumen im Bereich von 0,01 bis 4,0 cm³/g, insbesondere 0,1 bis 3,0 cm³/g, vorzugsweise 0,2 bis 2,0 cm³/g, aufweisen. Insbesondere kann der Anteil an Poren mit Porendurchmessern ≤ 75 Å, mindestens 65 %, insbesondere mindestens 70 %, vorzugsweise mindestens 75 %, betragen. Zudem kann das Adsorptionsmaterial, insbesondere die vorzugsweise kornförmige Aktivkohle, bezogen auf das Gesamtporenvolumen, insbesondere auf das Gesamtporenvolumen nach Gurvich, einen Anteil an Mikroporen, insbesondere an Mikroporen mit Porendurchmessern von ≤ 30 Å, insbesondere ≤ 25 Å, vorzugsweise ≤ 20 Å, von mindestens 70 %, insbesondere mindestens 75 %, vorzugsweise mindestens 80 %, bevorzugt mindestens 85 %, besonders bevorzugt mindestens 90 %, aufweisen.

Das Mikroporenvolumen kann insbesondere nach Carbon Black bestimmt werden. Die Bestimmungsmethode nach Carbon Black ist dem Fachmann an sich bekannt, so dass es diesbezüglich keiner weitergehenden Einzelheiten bedarf. Zudem kann zu weitergehenden Einzelheiten der Bestimmung der Porenoberfläche und des Porenvolumens nach Carbon Black beispielsweise verwiesen werden auf R. W. Magee, Evaluation of the External Surface Area of Carbon Black by Nitrogen Adsorption, Presented at the Meeting of the Rubber Division of the American Chem. Soc., October 1994, z. B. referiert in: Quantachrome Instruments, AUTO-SORB-1, AS1 WinVersion 1.50, Operating Manual, OM, 05061, Quantachrome Instruments 2004, Florida, USA, Seiten 71 ff.

Weiterhin sollte das Adsorptionsmaterial, insbesondere die vorzugsweise kornförmige Aktivkohle, eine Iodzahl von mindestens 1.000 mg/g, insbesondere mindestens 1.250 mg/g, bevorzugt mindestens 1.500 mg/g, aufweisen. Insbesondere sollte das Adsorptionsmaterial, insbesondere die vorzugsweise kornförmige Aktivkohle, eine Iodzahl im Bereich von 1.000 bis 2.100 mg/g, insbesondere 1.250 bis 2.050 mg/g, vorzugsweise 1.500 bis 2.000 mg/g, aufweisen. Die Iodzahl wird insbesondere gemäß der ASTM D4607-94/99 bestimmt.

Schließlich sollte das Adsorptionsmaterial, insbesondere die vorzugsweise kernförmige Aktivkohle, eine Schüttdichte (*Bulk Density*), im Bereich von 250 bis 700 g/l, insbesondere 300 bis 625 g/l, vorzugsweise 300 bis 600 g/l, besonders bevorzugt 350 bis 550 g/l, aufweisen, wobei die Schüttdichte insbesondere gemäß der ASTM B527-93/00 bestimmt wird. Die erfindungsgemäß vorgesehenen Schüttdichten führen gleichermaßen zu einem optimierten Verhalten des Adsorptionsmaterials insbesondere in der losen Schüttung, einhergehend mit einem optimierten Strömungsverhalten des zu behandelnden bzw. aufzureinigenden Wassers in der Schüttung.

Wie zuvor angeführt, kann das erfindungsgemäß verwendete und mit den Verunreinigungen beladene Adsorptionsmaterial einer insbesondere thermischen Regenerierung zum Erhalt eines unbeladenen bzw. regenerierten bzw. frischen Adsorptionsmaterials unterzogen werden, welches nach durchgeführter Regeneration der Gegenstrom-Filtervorrichtung erneut zugeführt werden kann.

Vor diesem Hintergrund wird im Folgenden auf besondere Ausführungsformen und Einzelheiten zu der Regenerierung des Adsorptionsmaterials Stellung genommen:
In diesem Zusammenhang ist es im Rahmen der vorliegenden Erfindung von besonderem Vorteil, wenn das aus der Gegenstrom-Filtervorrichtung herausgeführte und/oder entfernte Adsorptionsmaterial, insbesondere das mit den Verunreinigungen beladene Adsorptionsmaterial, getrocknet wird und/oder einer insbesondere kontinuierlichen und/oder insbesondere thermischen Regenerierung und/oder Rezyklierung unterzogen und gegebenenfalls nachfolgend erneut befeuchtet wird. Zu diesem Zweck kann insbesondere eine Regenerationsvorrichtung verwendet werden, welche Bestandteil der nachfolgend noch definierten erfindungsgemäßen Aufreinigungs-Anlage sein kann und welche insbesondere umfasst:
   - gegebenenfalls mindestens eine Trocknungs- und/oder Entfeuchtungseinrichtung bzw. -vorrichtung zur Trocknung und/oder Entfeuchtung des aus der Gegenstrom-Filtervorrichtung herausgeführten und/oder entfernten Adsorptionsmaterials und/oder des mit den Verunreinigungen beladenen Adsorptionsmaterials, insbesondere wobei die Trocknungs- und/oder Entfeuchtungseinrichtung stromabwärts zu der Gegenstrom-Filtervorrichtung angeordnet wird, bezogen auf die Transportrichtung des Adsorptionsmaterials,
   - mindestens eine Regenerations- und/oder Desorptionseinrichtung bzw. -vorrichtung, insbesondere zur vorzugsweise thermischen Regeneration des aus der Gegenstrom-Filtervorrichtung herausgeführten und/oder entfernten Adsorptionsmaterials und/oder des mit den Verunreinigungen beladenen Adsorptionsmaterials und/oder zur Bereitstellung von regeneriertem und/oder ungebrauchtem Adsorptionsmaterial, insbesondere wobei die Regenerations- und/oder Desorptionseinrichtung stromabwärts zu der Gegenstrom-Filtervorrichtung und/oder stromabwärts zu der Trocknungs- und/oder Entfeuchtungseinrichtung angeordnet wird und/oder insbesondere wobei die Regenerations- und/oder Desorptionseinrichtung stromaufwärts zu der Gegenstrom-Filtervorrichtung angeordnet wird, jeweils bezogen auf die Transportrichtung des Adsorptionsmaterials,
   - gegebenenfalls mindestens eine Befeuchtungseinrichtung bzw. bzw. -vorrichtung, insbesondere zur Befeuchtung des regenerierten und/oder ungebrauchten Adsorptionsmaterials, insbesondere wobei die Befeuchtungseinrichtung stromabwärts zu der Regenerations- und/oder Desorptionseinrichtung angeordnet wird und/oder insbesondere wobei die Befeuchtungseinrichtung stromaufwärts zu der Gegenstrom-Filtervorrichtung angeordnet wird, jeweils bezogen auf die Transportrichtung des Adsorptionsmaterials.

Insbesondere kann es im Rahmen der vorliegenden Erfindung vorgesehen sein, dass das aus der Gegenstrom-Filtervorrichtung herausgeführte und/oder entfernte Adsorptionsmaterial und/oder das mit den Verunreinigungen beladene Adsorptionsmaterial insbesondere unter Verwendung der Trocknungs- und/oder Entfeuchtungseinrichtung getrocknet wird. In diesem Zusammenhang kann der Restfeuchtigkeitsgehalt des getrockneten Adsorptionsmaterials auf einen Wert von höchstens 1 Gew.-%, insbesondere höchstens 0,5 Gew.-%, vorzugsweise höchstens 0,2 Gew.-%, bezogen auf das Adsorptionsmaterial, eingestellt werden. Das im Rahmen der Entfeuchtung erhaltene Restwasser kann beispielsweise der Gegenstrom-Filtervorrichtung als Rohwasser erneut zugeführt werden.

Dabei kann die Trocknung in insbesondere aufeinanderabfolgende Vor- und/oder Haupttrocknungsschritte unterteilt werden. Insbesondere können im Rahmen der Trocknung, insbesondere Vortrocknung, beispielsweise Schrägklärer und/oder Bandtrockner eingesetzt werden. Zudem können im Rahmen der Trocknung, insbesondere Haupttrocknung, Bandtrockner und/oder Wirbelschichttrockner eingesetzt werden. Insbesondere kann die Zuführung und/oder der Transport des insbesondere in Form einer Suspension vorliegenden Adsorptionsmaterials (d. h. in Restwasser suspendiertes Adsorptionsmaterial) über Rohrleitungen unter Verwendung von entsprechenden Pumpvorrichtungen und/oder Suspensionsfördervorrichtungen, insbesondere Strahlpumpen und/oder Schlauchpumpen, den vorgenannten Trocknungs- und/oder Entfeuchtungseinrichtungen zugeführt werden.

Weiterhin kann das aus der Gegenstrom-Filtervorrichtung herausgeführte und/oder entfernte Adsorptionsmaterial insbesondere nach durchgeführter Trocknung, vorzugsweise wie zuvor definiert, einer insbesondere thermischen Regeneration und/oder Desorption, insbesondere unter Freisetzung und/oder Desorption der in dem Adsorptionsmaterial adsorbierten Verunreinigungen, insbesondere unter Verwendung der Regenerations- und/oder Desorptionseinrichtung, unterzogen werden. In diesem Zusammenhang wird insbesondere derart verfahren, dass die in dem Adsorptionsmaterial vorhandenen Verunreinigungen desorbiert werden bzw. das regenerierte bzw. unbeladene bzw. frische Adsorptionsmaterial erhalten wird. Insbesondere kann das gegebenenfalls getrocknete Adsorptionsmaterial unter Verwendung von geeigneten Fördervorrichtungen, wie einer Rüttelrinne, einer insbesondere pneumatischen Fördervorrichtung und/oder einer Bandvorrichtung, der Regenerations- bzw. Desorptionseinrichtung zugeführt werden. Bei der Regenerations- und/oder Desorptionseinrichtung handelt es sich erfindungsgemäß insbesondere um einen vorzugsweise indirekt beheizten Drehrohrofen, eine Hochtemperatur-Wirbelschichtvorrichtung und/oder einen Mikrowellenofen. Infolge der insbesondere thermischen Desorption auf deren Basis die Verunreinigungen mithilfe von thermischer Energie aus dem Adsorptionsmaterial entfernt bzw. ausgetrieben werden, wird ein desorbiertes bzw. regeneriertes bzw. ungebrauchtes bzw. frisches Adsorptionsmaterial erhalten.

Im Rahmen der Regeneration des Adsorptionsmaterials kann erfindungsgemäß insbesondere derart verfahren werden, dass das Adsorptionsmaterial insbesondere in der Regenerations- und/oder Desorptionseinrichtung auf Temperaturen im Bereich von 150 °C bis 1.000 °C, insbesondere 200 °C bis 950 °C, vorzugsweise 250 °C bis 900 °C, bevorzugt 250 °C bis 500 °C, insbesondere für einen Zeitraum von 1 min bis 300 min, insbesondere 10 min bis 200 min, erwärmt wird. In diesem Zusammenhang kann die Erwärmung beispielsweise unter InertgasAtmosphäre oder allenfalls leicht oxidierender Atmosphäre durchgeführt werden.

Was die aus dem Adsorptionsmaterial entfernten Verunreinigungen anbelangt, so können die auf diese Weise freigesetzten und/oder desorbierten Verunreinigungen einer thermischen Endverwertung, insbesondere Verbrennung, zugeführt werden, wobei diesbezüglich dem Fachmann an sich bekannte Verbrennungsvorrichtungen eingesetzt werden können.

Im Rahmen der insbesondere thermischen Regeneration kann es erfindungsgemäß gleichermaßen vorgesehen sein, dass das regenerierte bzw. frische Adsorptionsmaterial abgekühlt bzw. in eine Bevorratungseinrichtung bzw. -vorrichtung eingebracht und/oder zwischengespeichert wird. In diesem Zusammenhang kann der Transport des von den Verunreinigungen befreiten Adsorptionsmaterials ausgehend von der Regenerations- bzw. Desorptionseinrichtung in die Bevorratungsvorrichtung unter Verwendung der zuvor für den Transport des Adsorptionsmaterials von der Trocknungsvorrichtung zu der Regenerations- bzw. Desorptionseinrichtung angeführten Vorrichtungen erfolgen. Die Bevorratung des regenerierten bzw. unbeladenen bzw. frischen Adsorptionsmaterials insbesondere in der zuvor angeführten Bevorratungsvorrichtung ist mit dem Vorteil verbunden, dass die erneut in die Gegenstrom-Filtervorrichtung geführte Menge an regeneriertem bzw. unbeladenem bzw. frischem Adsorptionsmaterial bedarfsgerecht eingestellt bzw. dosiert werden kann.

Weiterhin kann im Rahmen der vorliegenden Erfindung derart verfahren werden, dass das regenerierte bzw. unbeladene bzw. frische Adsorptionsmaterial insbesondere unter Verwendung der Befeuchtungseinrichtung befeuchtet und/oder in Wasser eingebracht wird. Diesbezüglich können entsprechende Förder- bzw. Befeuchtungseinrichtungen, wie beispielsweise Strahlpumpen und/oder Schlauchpumpen, eingesetzt werden. Auf diese Weise wird insbesondere eine vorzugsweise wässrige Suspension des regenerierten bzw. ungebrauchten bzw. frischen Adsorptionsmaterials erhalten. Für die Befeuchtung des Adsorptionsmaterials kann dabei insbesondere entsprechendes Rohwasser verwendet werden. Die Förder- bzw. Befeuchtungseinrichtungen können gleichermaßen bzw. gleichzeitig zum Transport des Adsorptionsmaterials zu der bzw. in die Gegenstrom-Filtervorrichtung eingesetzt werden, insbesondere sofern es sich hierbei um Strahlpumpen bzw. Schlauchpumpen handelt.

Das auf diese Weise erhaltene regenerierte bzw. unbeladene bzw. frische und vorzugsweise befeuchtete Adsorptionsmaterial kann nachfolgend insbesondere unter Druckbeaufschlagung erneut in die Gegenstrom-Filtervorrichtung geführt bzw. eingebracht werden, vorzugsweise über entsprechende Rohrleitungen, welche mit dem Adsorptionsmaterial-Einlass der Gegenstrom-Vorrichtung verbunden werden.

Sofern zum Transport des Adsorptionsmaterials, insbesondere in Form einer vorzugsweise wässrigen Dispersion, entsprechende Pumpeinrichtungen, beispielsweise auf Basis von Strahl- und/oder Schlauchpumpen, eingesetzt werden, kann das diesbezügliche Treibwasser gleichermaßen dem Rohwasser entnommen werden. Die eingesetzten Pumpvorrichtungen können gleichermaßen zur Befeuchtung des Adsorptionsmaterials eingesetzt werden.

Was das erfindungsgemäße Verfahren weiterhin anbelangt, so kann das Verfahren nach der Erfindung mit einem Umlauffaktor, berechnet als Quotient aus Menge des sich in der Regenerierung und/oder Rezyklierung, insbesondere in der Regenerationsvorrichtung, befindlichen Adsorptionsmaterials [kg] und Menge des sich in der Gegenstrom-Filtervorrichtung befindlichen Adsorptionsmaterials [kg], im Bereich von 0,1 bis 100, insbesondere 0,5 bis 75, vorzugsweise 0,75 bis 50, bevorzugt 1 bis 40, besonders bevorzugt 1,25 bis 30, durchgeführt werden. Im Rahmen der vorliegenden Erfindung kann somit derart verfahren werden, dass ein relativ großer Anteil an Adsorptionsmaterial insbesondere in Form der vorzugsweise losen Schüttung in der Gegenstrom-Filtervorrichtung vorliegt und so zu Zwecken der Aufreinigung des Rohwassers eingesetzt wird, was eine verfahrensspezifische Optimierung darstellt. Der Umlauffaktor kann insbesondere auch gemäß der allgemeinen Formel F_{U} = m_{Ads,DP} / m_{Ads,AP} berechnet werden (mit F_{U}: Umlauffaktor; m_{Ads,DP}: Masse bzw. Menge des Adsorptionsmaterials im Regenerations- bzw. Desorptionsprozess; m_{Ads,AP}: Masse bzw. Menge des Adsorptionsmaterials in der Gegenstrom-Filtervorrichtung).

Die vorliegende Erfindung betrifft gleichermaßen gemäß diesem Aspekt der vorliegenden Erfindung ein Verfahren zur Behandlung bzw. Aufreinigung von Wasser, insbesondere von Abwasser oder Trinkwasser, bevorzugt zur adsorptiven Entfernung von anorganisch oder organisch, insbesondere organisch basierten Verunreinigungen, wie Spurenstoffen und/oder Mikroschadstoffen. Das Verfahren wird insbesondere wie zuvor definiert durchgeführt, wobei zu behandelndes bzw. aufzureinigendes Wasser zu Zwecken der Behandlung und/oder Aufreinigung mit einem insbesondere partikulären Adsorptionsmaterial in Kontakt gebracht wird, wobei das Adsorptionsmaterial in insbesondere loser Schüttung in einer nachfolgend definierten Gegenstrom-Filtervorrichtung, insbesondere Gegenstrom-Adsorptionsfilterkolonne, angeordnet wird und von dem zu behandelnden und/oder aufzureinigenden Wasser zur adsorptiven Entfernung der Verunreinigungen durchströmt wird. Weiterhin wird das in der Gegenstrom-Filtervorrichtung angeordnete Adsorptionsmaterial der Schüttung im Gegenstrom zum Strom des zu behandelnden und/oder aufzureinigenden Wassers insbesondere kontinuierlich entfernt und regeneriert. In diesem Zusammenhang wird zudem in zumindest im Wesentlichen gleichen Mengen, wie Adsorptionsmaterial aus der Schüttung entfernt wird, regeneriertes und/oder ungebrauchtes Adsorptionsmaterial, vorzugsweise regeneriertes Adsorptionsmaterial, im Gegenstrom zum Strom des zu behandelnden und/oder aufzureinigenden Wassers zugeführt.

Insbesondere kann das erfindungsgemäße Verfahren auch unter Verwendung der nachfolgend definierten Aufreinigungs-Anlage nach der Erfindung durchgeführt werden, welche eine Regenerationsvorrichtung sowie die Gegenstrom-Filtervorrichtung nach der Erfindung umfassen kann.

Wie zuvor angeführt, wird das erfindungsgemäße Verfahren durch die diesbezüglichen Verfahrensunteransprüche sowie der Bezugnahme auf die Figurendarstellungen weiterführend beschrieben.

Weiterhin betrifft die vorliegende Erfindung - gemäß einem **weiteren** Aspekt der vorliegenden Erfindung - die in dem entsprechenden unabhängigen Anspruch definierte erfindungsgemäße Aufreinigungs-Anlage, insbesondere zur Behandlung und/oder Aufreinigung von Wasser, insbesondere von Abwasser oder Trinkwasser, zur adsorptiven Entfernung von anorganisch oder organisch, insbesondere organisch basierten Verunreinigungen, wie Spurenstoffen und/oder Mikroschadstoffen, wobei die Anlage aufweist:
- mindestens eine Gegenstrom-Filtervorrichtung, wie nachfolgend definiert, zur Behandlung und/oder Aufreinigung von Wasser und zur insbesondere kontinuierlichen Aufnahme, Speicherung und Abgabe mindestens eines vorzugsweise partikulären Adsorptionsmaterials, insbesondere wie zuvor definiert, insbesondere wobei im Betriebs- und/oder Anwendungszustand das zu behandelnde und/oder aufzureinigende Wasser und das Adsorptionsmaterial in der Gegenstrom-Filtervorrichtung im Gegenstrom und/oder entgegengesetzt zueinander geführt sind,
   wobei die Gegenstrom-Filtervorrichtung mindestens ein Gehäuse aufweist, wobei das Gehäuse mindestens eine Adsorptions- und/oder Gegenstromzone sowie mindestens einen Wasser-Eintrittsbereich und mindestens einen Wasser-Austrittsbereich aufweist,
   wobei die Adsorptions- und/oder Gegenstromzone strömungstechnisch zwischen dem Wasser-Eintrittsbereich und dem Wasser-Austrittsbereich angeordnet ist und/oder wobei die Adsorptions- und/oder Gegenstromzone stromabwärts zu dem Wasser-Eintrittsbereich und stromaufwärts zu dem Wasser-Austrittsbereich, bezogen auf die Strömungsrichtung des Wassers, angeordnet ist und
   wobei der Wasser-Eintrittsbereich mindestens einen Adsorptionsmaterial-Auslass und wobei der Wasser-Austrittsbereich mindestens einen Adsorptionsmaterial-Einlass aufweist,
- gegebenenfalls mindestens eine Trocknungs- und/oder Entfeuchtungseinrichtung zur Trocknung und/oder Entfeuchtung von mit den Verunreinigungen beladenem Adsorptionsmaterial, insbesondere wobei die Trocknungs- und/oder Entfeuchtungseinrichtung stromabwärts zu der Gegenstrom-Filtervorrichtung angeordnet ist, bezogen auf die Transportrichtung des Adsorptionsmaterials,
- mindestens eine Regenerations- und/oder Desorptionseinrichtung, insbesondere zur Regeneration von mit den Verunreinigungen beladenem Adsorptionsmaterial und/oder zur Bereitstellung von regeneriertem und/oder unbeladenem und/oder frischem Adsorptionsmaterial, insbesondere wobei die Regenerations- und/oder Desorptionseinrichtung (R) stromabwärts zu der Gegenstrom-Filtervorrichtung und/oder stromabwärts zu der Trocknungs- und/oder Entfeuchtungseinrichtung angeordnet ist, jeweils bezogen auf die Transportrichtung des Adsorptionsmaterials,
- gegebenenfalls mindestens eine Befeuchtungseinrichtung, insbesondere zur Befeuchtung von regeneriertem und/oder unbeladenem und/oder frischem Adsorptionsmaterial, wobei die Befeuchtungseinrichtung stromabwärts zu der Regenerations- und/oder Desorptionseinrichtung angeordnet ist, bezogen auf die Transportrichtung des Adsorptionsmaterials.

Die erfindungsgemäße Aufreinigungs-Anlage eignet sich insbesondere zur Verwendung im Rahmen des zuvor beschrieben Verfahrens nach der Erfindung. Insbesondere ermöglicht die erfindungsgemäße Aufreinigungs-Anlage das erfindungsgemäße Prinzip, wonach das Adsorptionsmaterial einerseits und das zu behandelnde bzw. aufzureinigende Wasser andererseits zu Zwecken der Aufreinigung des Wassers bzw. der Entfernung von Verunreinigungen, wie Spurenstoffen bzw. Mikroschadstoffen, aus dem Wasser im Gegenstrom zueinander geführt sind. Zudem ermöglicht die erfindungsgemäße Aufreinigungs-Anlage eine gleichzeitige Aufreinigung von Rohwasser und Regeneration des Adsorptionsmaterial mit der diesbezüglichen Rückführung des regenerierten Adsorptionsmaterials zur weiteren bzw. erneuten Aufreinigung von Rohwasser, so dass insgesamt eine leistungsfähige Aufreinigungs-Anlage nach der Erfindung bereitstellt, welche die Umsetzung sämtlicher Verfahrensaspekte der vorliegenden Erfindung bei geringem Platzbedarf und kostengünstigem Betrieb ermöglicht. Insbesondere ermöglicht die erfindungsgemäße Aufreinigungs-Anlage optimierte Umlauffaktoren, da ein großer Anteil des sich in der Anlage insgesamt befindlichen Adsorptionsmaterial zu Zwecken der Aufreinigung von Rohwasser einsetzt werden kann. Aufgrund der speziellen erfindungsgemäßen technischen Konzeption der Aufreinigungs-Anlage nach der Erfindung sind zudem hohe spezifische Massedurchsätze möglich, da, bezogen auf die Menge an eingesetztem Sorptionsmaterial, große Mengen bzw. Volumen an aufgereinigtem Wasser bzw. Filtrat erhalten werden. Schließlich ermöglicht die erfindungsgemäße Aufreinigungs-Anlage eine effiziente Aufreinigung von Rohwasser, wobei insbesondere aufgrund der Verwendung einer speziellen Gegenstrom-Filtervorrichtung, insbesondere wie nachfolgend noch definiert, Durchbrüche der in Rede stehenden Verunreinigungen verhindert werden und somit ein hochreines Filtrat erhalten werden kann, was insbesondere auch für die Bereitstellung von Trinkwasser von hoher Bedeutung ist.

Für diesbezüglich weitere Ausführungen zu der erfindungsgemäßen Aufreinigungs-Anlage kann, wie zuvor angeführt, auf die die erfindungsgemäße Aufreinigungs-Anlage betreffenden Unteransprüche und auf die entsprechenden Figurendarstellungen verwiesen werden.

Darüber hinaus betrifft die vorliegende Erfindung - gemäß einem **weiteren** Aspekt der vorliegenden Erfindung - die erfindungsgemäße Gegenstrom-Filtervorrichtung, insbesondere Gegenstrom-Adsorptionsfilterkolonne, bevorzugt kontinuierliche Gegenstrom-Adsorptionsfilterkolonne, insbesondere zur Behandlung und/oder Aufreinigung von Wasser, insbesondere von Abwasser oder Trinkwasser, bevorzugt zur adsorptiven Entfernung von anorganisch oder organisch, insbesondere organisch basierten Verunreinigungen, wie Spurenstoffen und/oder Mikroschadstoffen, und zur insbesondere kontinuierlichen Aufnahme, Speicherung und Abgabe mindestens eines vorzugsweise partikulären Adsorptionsmaterials,
- wobei die Gegenstrom-Filtervorrichtung mindestens ein Gehäuse aufweist, wobei das Gehäuse mindestens eine Adsorptions- und/oder Gegenstromzone sowie mindestens einen Wasser-Eintrittsbereich und mindestens einen Wasser-Austrittsbereich aufweist,
- wobei die Adsorptions- und/oder Gegenstromzone strömungstechnisch zwischen dem Wasser-Eintrittsbereich und dem Wasser-Austrittsbereich angeordnet ist und/oder wobei die Adsorptions- und/oder Gegenstromzone stromabwärts zu dem Wasser-Eintrittsbereich und stromaufwärts zu dem Wasser-Austrittsbereich, bezogen auf die Strömungsrichtung des Wassers, angeordnet ist,
- wobei der Wasser-Eintrittsbereich mindestens einen Wasser-Zulauf und mindestens einen Adsorptionsmaterial-Auslass und wobei der Wasser-Austrittsbereich mindestens einen Wasser-Ablauf und mindestens einen Adsorptionsmaterial-Einlass aufweist,
- wobei das Verhältnis des Durchmessers D1 der Adsorptions- und/oder Gegenstromzone zum Durchmesser D2 des Wasser-Eintrittsbereichs [Verhältnis Durchmesser D1 : Durchmesser D2] mindestens 1 : 1,1 beträgt und
   wobei das Verhältnis des Durchmessers D1 der Adsorptions- und/oder Gegenstromzone zum Durchmesser D3 des Wasser-Austrittsbereichs [Verhältnis Durchmesser D1 : Durchmesser D3] mindestens 1 : 1,1 beträgt, und
   wobei das Verhältnis des Durchmessers D1 der Adsorptions- und/oder Gegenstromzone zum Durchmesser D3 des Wasser-Austrittsbereichs [Verhältnis Durchmesser D1 : Durchmesser D3] mindestens 1 : 1,1 beträgt, und
   wobei die Gegenstrom-Filtervorrichtung einen ersten Übergangsbereich und einen zweiten Übergangsbereich aufweist,
- wobei der erste Übergangsbereich strömungstechnisch zwischen dem Wasser-Eintrittsbereich und der Adsorptions- und/oder Gegenstromzone angeordnet ist und/oder wobei der erste Übergangsbereich stromabwärts zu dem Wasser-Eintrittsbereich und stromaufwärts zu der Adsorptions- und/oder Gegenstromzone, bezogen auf die Strömungsrichtung des Wassers, angeordnet ist,
   wobei der erste Übergangsbereich konisch ausgebildet ist und sich ausgehend vom Wasser-Eintrittsbereich mit dem Durchmesser D2 in Richtung der Adsorptions- und/oder Gegenstromzone mit dem Durchmesser D1 verjüngt und
- wobei der zweite Übergangsbereich strömungstechnisch zwischen dem Wasser-Austrittsbereich und der Adsorptions- und/oder Gegenstromzone angeordnet ist und/oder wobei der zweite Übergangsbereich stromabwärts zu der Adsorptions- und/oder Gegenstromzone und stromaufwärts zu dem Wasser-Austrittsbereich, bezogen auf die Strömungsrichtung des Wassers, angeordnet ist,
   wobei der zweite Übergangsbereich konisch ausgebildet ist und sich ausgehend vom Wasser-Austrittsbereich mit dem Durchmesser D3 in Richtung der Adsorptions- und/oder Gegenstromzone mit dem Durchmesser D1 verjüngt.

Aufgrund der speziellen apparativen Ausgestaltung der Gegenstrom-Filtervorrichtung nach der Erfindung kann zum einen das der vorliegenden Erfindung zugrundeliegende Prinzip des gegenläufigen Transport von Rohwasser einerseits und Adsorptionsmaterial andererseits in der Gegenstrom-Filtervorrichtung umgesetzt werden. Zum anderen ermöglicht die erfindungsgemäße Gegenstrom-Filtervorrichtung bei gleichzeitig hoher Aufreinigung des Rohwassers hohe Leerrohr- bzw. Filtergeschwindigkeiten, was zu hohen Durchsätzen an Rohwasser und der Gewinnung großer Mengen an aufgereinigtem Filtrat führt.

Zudem zeichnet sich die erfindungsgemäße Filter-Vorrichtung durch einen kompakten und somit platzsparenden Aufbau aus, insbesondere auch was die Adsorptions- bzw. Gegenstromzone anbelangt. Wie nachfolgend noch ausgeführt, kann die Adsorptions- bzw. Gegenstromzone einen geringeren Durchmesser bzw. eine geringere Querschnittsfläche als die entsprechenden Wasser Ein- bzw. Austrittsbereiche der erfindungsgemäßen Filtervorrichtung aufweisen, was gleichermaßen eine Erhöhung der Leerrohr- bzw. Filtergeschwindigkeit erlaubt bzw. hierzu führt, wobei gemäß einer erfindungsgemäß bevorzugten und nachfolgend noch angeführten Ausführungsform spezielle Übergangsbereiche zwischen der Adsorptions- und/oder Gegenstromzone und dem Wasser-Eintrittsbereich bzw. dem Wasser-Austrittsbereich angeordnet sind, welche zu einer strömungstechnischen Optimierung der jeweiligen Transportprozesse von Wasser und Adsorptionsmaterial führt.

In diesem Zusammenhang ist auch das erfindungsgemäße Prinzip des gegenläufigen Transports von Rohwasser und Adsorptionsmaterial hohen Leerrohr- bzw. Filtergeschwindigkeiten zuträglich, da erfindungsgemäß gewissermaßen immer regeneriertes bzw. unbeladenes bzw. frisches Adsorptionsmaterial dem eigentlichen Aufreinigungsprozess zugeführt wird, was hohe Durchflussmengen bzw. Strömungsgeschwindigkeiten in Bezug auf das Rohwasser bei gleichzeitig effizienter Aufreinigung (Vermeidung von Durchbrüchen von Spurenstoffen bzw. Mikroschadstoffen) ermöglicht.

Für weitere Ausführungen zu der erfindungsgemäßen Gegenstrom-Filtervorrichtung kann, wie zuvor angeführt, auf die entsprechenden abhängigen Vorrichtungsansprüche sowie auf die entsprechenden Figurendarstellungen verwiesen werden.

Schließlich betrifft die vorliegende Erfindung - gemäß einem **weiteren** Aspekt der vorliegenden Erfindung - die Verwendung einer Aufreinigungs-Anlage, insbesondere wie vorliegend definiert, bzw. einer Gegenstrom-Filtervorrichtung, insbesondere wie vorliegend definiert, bzw. eines Adsorptionsmaterials, insbesondere wie vorliegend definiert, in einem Verfahren zur Behandlung bzw. Aufreinigung von Wasser, insbesondere von Abwasser oder Trinkwasser, bevorzugt zur adsorptiven Entfernung von anorganisch oder organisch, insbesondere organisch basierten Verunreinigungen, insbesondere wie vorliegend definiert.

Im Folgenden wird die vorliegende Erfindung anhand bevorzugter Ausführungsbeispiele bzw. Ausführungsformen darstellenden Zeichnungen bzw. Figurendarstellungen näher erläutert. Im Zusammenhang mit der Erläuterung dieser bevorzugten Ausführungsbeispiele der vorliegenden Erfindung, welche jedoch in Bezug auf die vorliegende Erfindung keinesfalls beschränkend sind, werden auch weitergehende Vorteile, Eigenschaften, Aspekte und Merkmale der vorliegenden Erfindung aufgezeigt.

In den Figurendarstellungen zeigt:

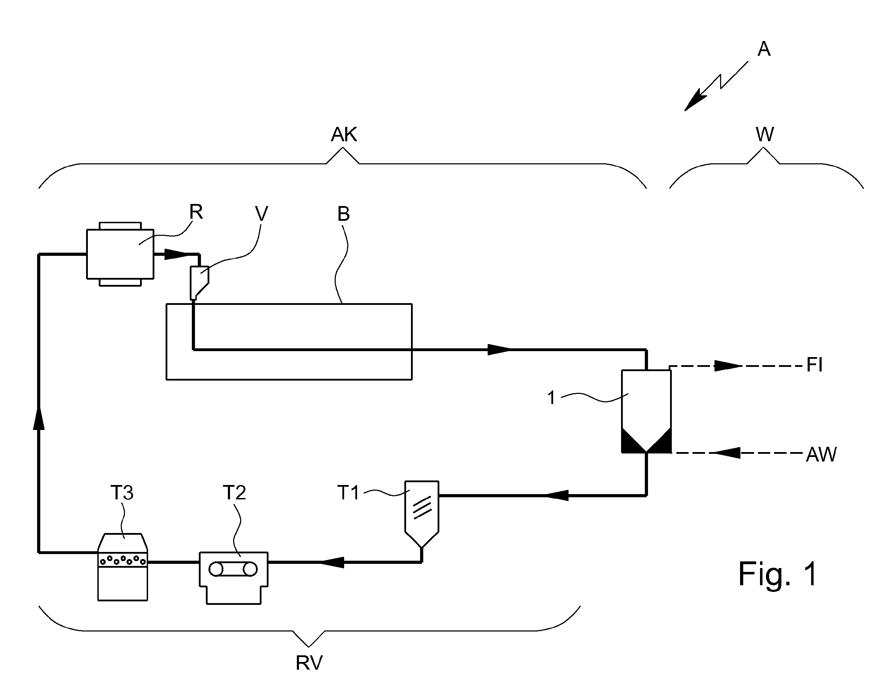

- Fig. 1: eine schematische Darstellung bzw. Übersicht der erfindungsgemäßen Aufreinigungs-Anlage A, vorzugsweise zur Behandlung bzw. Aufreinigung von Wasser bzw. Rohwasser AW, bevorzugt zur adsorptiven Entfernung von anorganisch oder organisch, insbesondere organisch basierten Verunreinigungen, wie Spurenstoffen und/oder Mikrostoffen, gemäß einer erfindungsgemäßen Ausführungsform;

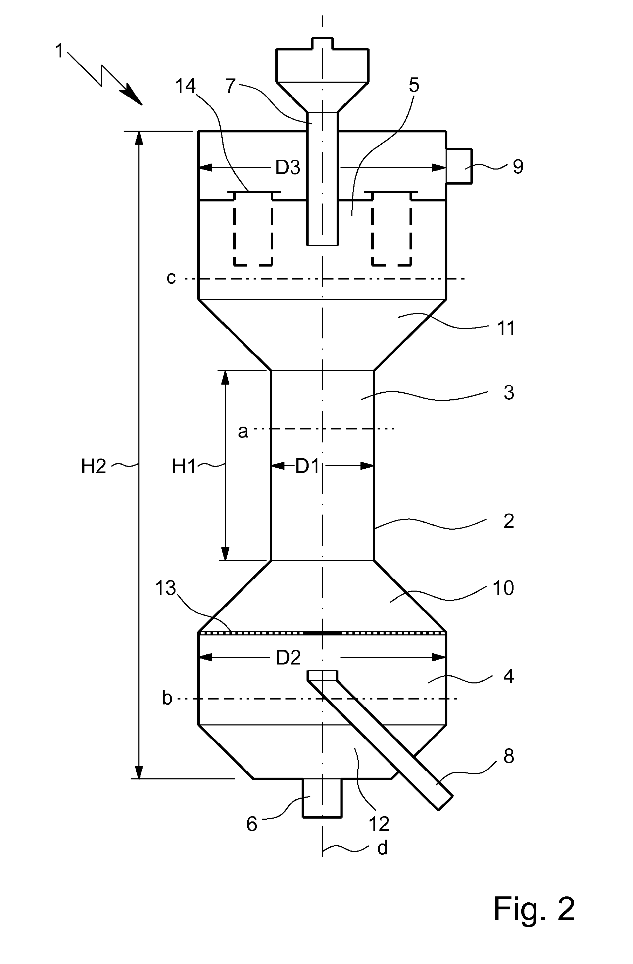

- Fig. 2: eine schematische Schnittdarstellung der erfindungsgemäßen GegenstromFiltervorrichtung 1, insbesondere Gegenstrom-Adsorptionsfilterkolonne, gemäß einer erfindungsgemäß bevorzugten Ausführungsform, wobei die GegenstromFiltervorrichtung 1 mindestens ein Gehäuse 2 aufweist, wobei das Gehäuse 2 mindestens eine Adsorptions- und/oder Gegenstromzone 3 sowie mindestens einen Wasser-Eintrittsbereich 4 und mindestens einen Wasser-Austrittsbereich 5 aufweist und wobei der Wasser-Eintrittsbereich 4 mindestens einen Adsorptionsmaterial-Auslass 6 und wobei der Wasser-Austrittsbereich 5 mindestens einen Adsorptionsmaterial-Einlass 7 aufweist;

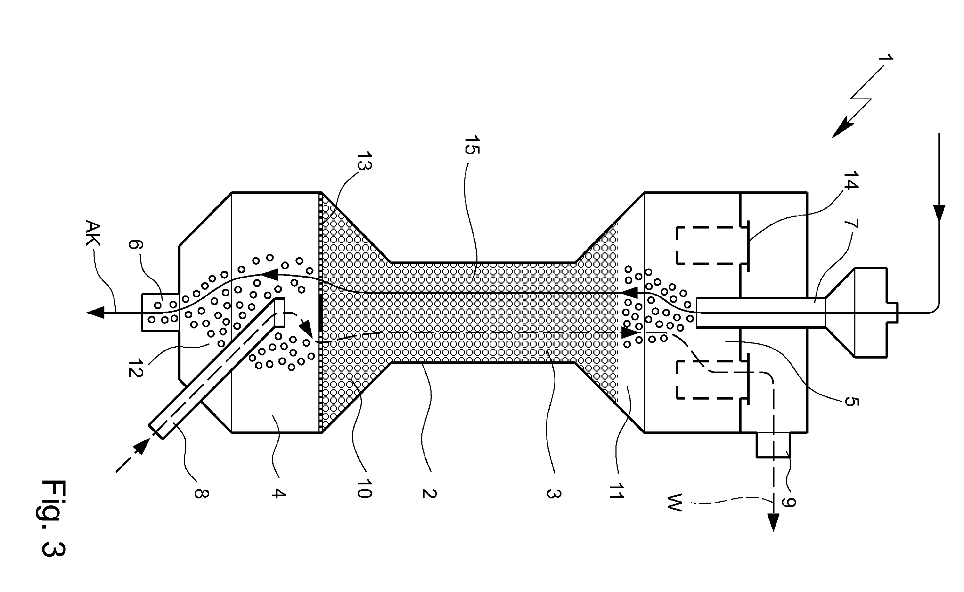

- Fig. 3: eine weitere schematische Schnittdarstellung der erfindungsgemäßen Gegenstrom-Filtervorrichtung 1, insbesondere Gegenstrom-Adsorptionsfilterkolonne, gemäß einer erfindungsgemäß bevorzugten Ausführungsform und mit einer Veranschaulichung der in der Gegenstrom-Filtervorrichtung 1 vorliegenden Strömung bzw. Transport des Wassers W einerseits und des Adsorptionsmaterials AK andererseits so der in der Gegenstrom-Filtervorrichtung befindlichen insbesondere losen Schüttung 15 des Adsorptionsmaterials.

Fig. 1 schematisiert eine bevorzugte Ausführungsform der erfindungsgemäßen Aufreinigungs-Anlage, wie sie nachfolgend weiterführend definiert wird:
Insbesondere betrifft die vorliegende Erfindung auch eine wie in Fig. 1 dargestellte Aufreinigungs-Anlage A, insbesondere zur Behandlung und/oder Aufreinigung von Wasser AW, insbesondere von Abwasser oder Trinkwasser, zur adsorptiven Entfernung von anorganisch oder organisch, insbesondere organisch basierten Verunreinigungen, wie Spurenstoffen und/oder Mikroschadstoffen, wobei die Anlage A aufweist:
   - mindestens eine wie zuvor definierte Gegenstrom-Filtervorrichtung 1, insbesondere Gegenstrom-Adsorptionsfilterkolonne, zur Behandlung und/oder Aufreinigung von Wasser AW und zur insbesondere kontinuierlichen Aufnahme, Speicherung und Abgabe mindestens eines vorzugsweise partikulären Adsorptionsmaterials, insbesondere wie zuvor definiert, insbesondere wobei im Betriebs- und/oder Anwendungszustand das zu behandelnde und/oder aufzureinigende Wasser AW und das Adsorptionsmaterial in der Gegenstrom-Filtervorrichtung im Gegenstrom und/oder entgegengesetzt zueinander geführt sind,
   - wobei die Gegenstrom-Filtervorrichtung 1 mindestens ein Gehäuse 2 aufweist, wobei das Gehäuse 2 mindestens eine Adsorptions- und/oder Gegenstromzone 3 sowie mindestens einen Wasser-Eintrittsbereich 4 und mindestens einen Wasser-Austrittsbereich 5 aufweist,
   - wobei die Adsorptions- und/oder Gegenstromzone 3 strömungstechnisch zwischen dem Wasser-Eintrittsbereich 4 und dem Wasser-Austrittsbereich 5 angeordnet ist und/oder wobei die Adsorptions- und/oder Gegenstromzone 3 stromabwärts zu dem Wasser-Eintrittsbereich 4 und stromaufwärts zu dem Wasser-Austrittsbereich 5, bezogen auf die Strömungsrichtung des Wassers, angeordnet ist und
   - wobei der Wasser-Eintrittsbereich 4 mindestens einen Adsorptionsmaterial-Auslass 6und wobei der Wasser-Austrittsbereich 5 mindestens einen Adsorptionsmaterial-Einlass 7 aufweist,
   - gegebenenfalls mindestens eine Trocknungs- und/oder Entfeuchtungseinrichtung T1, T2, T3 zur Trocknung und/oder Entfeuchtung von mit den Verunreinigungen beladenem Adsorptionsmaterial, insbesondere wobei die Trocknungs- und/oder Entfeuchtungseinrichtung T1, T2, T3 stromabwärts zu der Gegenstrom-Filtervorrichtung 1 angeordnet ist, bezogen auf die Transportrichtung des Adsorptionsmaterials,
   - mindestens eine Regenerations- und/oder Desorptionseinrichtung R, insbesondere zur Regeneration von mit den Verunreinigungen beladenem Adsorptionsmaterial und/oder zur Bereitstellung von regeneriertem und/oder unbeladenem und/oder frischem Adsorptionsmaterial, insbesondere wobei die Regenerations- und/oder Desorptionseinrichtung R stromabwärts zu der Gegenstrom-Filtervorrichtung 1 und/oder stromabwärts zu der Trocknungs- und/oder Entfeuchtungseinrichtung T1, T2, T3 angeordnet ist, jeweils bezogen auf die Transportrichtung des Adsorptionsmaterials,
   - gegebenenfalls mindestens eine Befeuchtungseinrichtung B, insbesondere zur Befeuchtung von regeneriertem und/oder ungebrauchtem Adsorptionsmaterial, wobei die Befeuchtungseinrichtung B stromabwärts zu der Regenerations- und/oder Desorptionseinrichtung R angeordnet ist, bezogen auf die Transportrichtung des Adsorptionsmaterials.

Was die Trocknungs- und/oder Entfeuchtungsanlage T1, T2, T3 der erfindungsgemäßen Aufreinigungs-Anlage, wie zuvor definiert, anbelangt, so kann diese ausgewählt sein aus der Gruppe von Bandtrocknern, Wirbelschichttrocknern und Schrägklärern und deren Kombinationen. Insbesondere kann die Trocknungs- und/oder Entfeuchtungseinrichtung T1, T2, T3 mindestens eine Haupttrocknungs- und/oder Hauptentfeuchtungseinrichtung T2, T3, insbesondere ausgewählt aus Bandtrocknern und/oder Wirbelschichttrocknern, und gegebenenfalls mindestens eine Vortrocknungs- und/oder Vorentfeuchtungseinrichtung T1, T2, insbesondere ausgewählt aus Schrägklärern und Bandtrocknern, umfassen. In diesem Zusammenhang sollte die Vortrocknungs- und/oder Vorentfeuchtungseinrichtung T1, T2 stromaufwärts zu der Haupttrocknungs- und/oder Hauptentfeuchtungseinrichtung T2, T3 angeordnet sein, bezogen auf die Transportrichtung des Adsorptionsmaterials.

Erfindungsgemäß kann es zudem vorgesehen sein, dass die jeweiligen Trocknungs- und/oder Entfeuchtungseinrichtungen T1, T2, T3, unabhängig voneinander, mit Rückführeinrichtungen zum Abtransport von entzogenem Restwasser ausgerüstet sind, insbesondere zur erneuten Einspeisung und/oder Rückführung des Restwassers in den Wasserfluss und/oder -strom W, vorzugsweise zur Rückführung in den Wasser-Eintrittsbereich 8 der Gegenstrom-Filtervorrichtung 1.

Insbesondere kann die Trocknungs- und/oder Entfeuchtungseinrichtung T1, T2, T3 mit dem Adsorptionsmaterial-Auslass 6 der Gegenstrom-Filtervorrichtung 1 verbunden sein, insbesondere mittels einer Rohrleitung, durch welche das insbesondere mit Restwasser versehene und in einer Suspension vorliegende Adsorptionsmaterial transportiert wird.

Weiterhin kann die Regenerations- und/oder Desorptionseinrichtung R ausgewählt sein aus der Gruppe von Drehrohröfen, insbesondere indirekt beheizten Drehrohröfen; Bandöfen, insbesondere indirekt beheizten Bandöfen; Wirbelschichttrocknern, insbesondere Hochtemperatur-Wirbelschichttrocknern; und Mikrowellenöfen.

Was die Regenerations- und/oder Desorptionseinrichtung R weiterhin anbelangt, so kann diese zudem Mittel und/oder Einrichtungen zum Abtransport und/oder zur Weiterbehandlung, insbesondere zur thermischen Zersetzung, von desorbierten und/oder aus dem Adsorptionsmaterial freigesetzten Verunreinigungen aufweisen.

Im Rahmen der vorliegenden Erfindung kann es vorgesehen sein, dass die Trocknungs- und/oder Entfeuchtungseinrichtung T1, T2, T3, insbesondere die Haupttrocknungs- und/oder Hauptentfeuchtungseinrichtung T2, T3, bevorzugt die Haupttrocknungs- und/oder Hauptentfeuchtungseinrichtung T3 mit der Regenerations- und/oder Desorptionseinrichtung R verbunden ist, insbesondere mittels einer Rohrleitung, einer Rütteltransporteinrichtung, einer insbesondere pneumatischen Fördereinrichtung und/oder einer Bandtransporteinrichtung. Hierdurch kann das getrocknete Adsorptionsmaterial zu der Regenerations- bzw. Adsorptionseinrichtung geführt werden.

Insbesondere kann der Adsorptionsmaterial-Auslass 6 der Gegenstrom-Filtervorrichtung mit der Regenerations- und/oder Desorptionseinrichtung R verbunden sein, insbesondere mittels einer Rohrleitung, insbesondere für den erfindungsgemäß weniger bevorzugten Fall, dass ohne Trocknungs- und/oder Entfeuchtungseinrichtung T1, T2, T3 verfahren wird.

Insbesondere kann die Befeuchtungseinrichtung B ausgewählt sein aus der Gruppe von Rührkesseln, Sprühtürmen, Bandbefeuchtern, (Wasser-)Strahlpumpen, Schlauchpumpen und deren Kombinationen.

Weiterhin kann die Aufreinigungs-Anlage A nach der Erfindung außerdem mindestens eine Bevorratungseinrichtung V, insbesondere zur Lagerung und/oder Zwischenspeicherung von regeneriertem und/oder unbeladenem und/oder frischem Adsorptionsmaterial, aufweisen. In diesem Zusammenhang kann die Bevorratungseinrichtung V stromabwärts zu der Regenerations- und/oder Desorptionseinrichtung R bzw. stromaufwärts zu der Befeuchtungseinrichtung B angeordnet sein, bezogen auf die Transportrichtung des Adsorptionsmaterials.

Was die Regenerations- und/oder Desorptionseinrichtung R weiterhin anbelangt, so kann diese mit der Bevorratungseinrichtung V bzw. der Befeuchtungseinrichtung B verbunden sein, insbesondere mittels einer Rohrleitung, einer Rütteltransporteinrichtung, einer insbesondere pneumatischen Fördereinrichtung und/oder Bandtransporteinrichtung. Insbesondere kann die Bevorratungseinrichtung V und/oder die Befeuchtungseinrichtung B mit dem Adsorptionsmaterial-Einlass der Gegenstrom-Filtervorrichtung 1 verbunden sein, insbesondere mittels einer Rohrleitung.

Erfindungsgemäß ist es insbesondere vorgesehen, dass die Aufreinigungs-Anlage A im Betriebs- und/oder Anwendungszustand einen Wasserfluss und/oder -strom W insbesondere mit einem in die Gegenstrom-Filtervorrichtung 1 eintretenden Fluss und/oder Strom von zu behandelndem und/oder aufzureinigendem Wasser AW und insbesondere mit einem aus der Gegenstrom-Filtervorrichtung austretenden Fluss und/oder Strom von aufgereinigtem Wasser und/oder Filtrat FI aufweist und/oder ermöglicht. Insbesondere sollte die Aufreinigungs-Anlage A im Betriebs- und/oder Anwendungszustand einen insbesondere zyklischen Adsorptionsmitteltransport bzw. Adsorptionsmittelfluss AK aufweisen und/oder ermöglichen. In diesem Zusammenhang ist es erfindungsgemäß insbesondere vorgesehen, dass der Wasserfluss und/oder Wasserstrom W und der Adsorptionsmitteltransport bzw. Adsorptionsmittelfluss AK in der Gegenstrom-Filtervorrichtung 1 im Gegenstrom zueinander verlaufen und/oder zueinander gegenläufig sind.

Insbesondere kann die erfindungsgemäße Aufreinigungs-Anlage die erfindungsgemäße Gegenstrom-Filtervorrichtung, wie nachfolgend definiert, aufweisen.

Weiterhin schematisiert Fig. 2 eine bevorzugte Ausführungsform der Gegenstrom-Filtervorrichtung 1 nach der Erfindung.

Insbesondere zeigt Fig. 2 die erfindungsgemäße Gegenstrom-Filtervorrichtung 1, insbesondere Gegenstrom-Adsorptionsfilterkolonne, insbesondere zur Behandlung und/oder Aufreinigung von Wasser, insbesondere von Abwasser oder Trinkwasser, zur adsorptiven Entfernung von anorganisch oder organisch, insbesondere organisch basierten Verunreinigungen, wie Spurenstoffen und/oder Mikroschadstoffen, und zur insbesondere kontinuierlichen Aufnahme, Speicherung und Abgabe mindestens eines vorzugsweise partikulären Adsorptionsmaterials,
wobei die Gegenstrom-Filtervorrichtung 1 mindestens ein Gehäuse 2 aufweist, wobei das Gehäuse 2 mindestens eine Adsorptions- und/oder Gegenstromzone 3 sowie mindestens einen Wasser-Eintrittsbereich 4 und mindestens einen Wasser-Austrittsbereich 5 aufweist, wobei die Adsorptions- und/oder Gegenstromzone 3 strömungstechnisch zwischen dem Wasser-Eintrittsbereich 4 und dem Wasser-Austrittsbereich 5 angeordnet ist und/oder wobei die Adsorptions- und/oder Gegenstromzone 3 stromabwärts zu dem Wasser-Eintrittsbereich 4 und stromaufwärts zu dem Wasser-Austrittsbereich 5, bezogen auf die Strömungsrichtung des Wassers, angeordnet ist,
wobei der Wasser-Eintrittsbereich 4 mindestens einen Wasser-Zulauf 8 und mindestens einen Adsorptionsmaterial-Auslass 6 und wobei der Wasser-Austrittsbereich 5 mindestens einen Wasser-Ablauf 9 und mindestens einen Adsorptionsmaterial-Einlass 7 aufweist, wobei das Verhältnis des Durchmessers D1 der Adsorptions- und/oder Gegenstromzone 3 zum Durchmesser D2 des Wasser-Eintrittsbereichs 4 [Verhältnis Durchmesser D1 : Durchmesser D2] mindestens 1 : 1,1 beträgt und
wobei das Verhältnis des Durchmessers D1 der Adsorptions- und/oder Gegenstromzone 3 zum Durchmesser D3 des Wasser-Austrittsbereichs 5 [Verhältnis Durchmesser D1 : Durchmesser D3] mindestens 1 : 1,1 beträgt, und
wobei die Gegenstrom-Filtervorrichtung 1 einen ersten Übergangsbereich 10 und einen zweiten Übergangsbereich 11 aufweist,
wobei der erste Übergangsbereich 10 strömungstechnisch zwischen dem Wasser-Eintrittsbereich 4 und der Adsorptions- und/oder Gegenstromzone 3 angeordnet ist und/oder wobei der erste Übergangsbereich 10 stromabwärts zu dem Wasser-Eintrittsbereich 4 und stromaufwärts zu der Adsorptions- und/oder Gegenstromzone 3, bezogen auf die Strömungsrichtung des Wassers, angeordnet ist,
wobei der erste Übergangsbereich 10 konisch ausgebildet ist und sich ausgehend vom Wasser-Eintrittsbereich 4 mit dem Durchmesser D2 in Richtung der Adsorptions- und/oder Gegenstromzone 3 mit dem Durchmesser D1 verjüngt und
wobei der zweite Übergangsbereich 11 strömungstechnisch zwischen dem Wasser-Austrittsbereich 5 und der Adsorptions- und/oder Gegenstromzone 3 angeordnet ist und/oder wobei der zweite Übergangsbereich 11 stromabwärts zu der Adsorptions- und/oder Gegenstromzone 3 und stromaufwärts zu dem Wasser-Austrittsbereich 5, bezogen auf die Strömungsrichtung des Wassers, angeordnet ist,
wobei der zweite Übergangsbereich 11 konisch ausgebildet ist und sich ausgehend vom Wasser-Austrittsbereich 5 mit dem Durchmesser D3 in Richtung der Adsorptions- und/oder Gegenstromzone 3 mit dem Durchmesser D1 verjüngt.

Der Wasser-Eintrittsbereich 4 weist somit mindestens einen Wasser-Zulauf 8 auf bzw. der Wasser-Austrittsbereich 5 weist somit mindestens einen Wasser-Ablauf 9 auf.

Gleichermaßen sollte im Betriebs- und/oder Anwendungszustand in der Adsorptions- und/oder Gegenstromzone das zu behandelnde und/oder aufzureinigende Wasser und das Adsorptionsmaterial im Gegenstrom und/oder entgegengesetzt zueinander geführt sein und/oder miteinander in Kontakt gebracht sein.

Die erfindungsgemäße Gegenstrom-Filtervorrichtung ist, wie in Fig. 1 dargestellt, insbesondere derart konzipiert, dass die Adsorptions- und/oder Gegenstromzone 3 zumindest im Wesentlichen rohrförmig und/oder in Form eines Rohres ausgebildet ist.

Gemäß einer erfindungsgemäß bevorzugten Ausführungsform beträgt das Verhältnis der Höhe H1 zum Durchmesser D1 der Adsorptions- und/oder Gegenstromzone 3 [Verhältnis Höhe H1 : Durchmesser D1] mindestens 1,5 : 1, insbesondere mindestens 2 : 1, vorzugsweise mindestens 2,5 : 1, bevorzugt mindestens 3 : 1. In diesem Zusammenhang sollte das Verhältnis der Höhe H1 zum Durchmesser D1 der Adsorptions- und/oder Gegenstromzone 3 [Verhältnis Höhe H1 : Durchmesser D1] im Bereich von 1,5 : 1 bis 20 : 1, insbesondere 2 : 1 bis 15 : 1, vorzugsweise 2,5 : 1 bis 10 : 1, bevorzugt 3 : 1 bis 8 : 1, liegt.

Insbesondere sollte die Gegenstrom-Filtervorrichtung 1 der Adsorptions- und/oder Gegenstromzone 1 eine Höhe H1 von mindestens 0,5 m, insbesondere mindestens 0,75 m, vorzugsweise mindestens 1 m, bevorzugt mindestens 2 m, besonders bevorzugt mindestens 3 m, aufweisen. Gleichermaßen sollte die Adsorptions- und/oder Gegenstromzone 3 eine Höhe H1 im Bereich von 0,5 m bis 10 m, insbesondere im Bereich von 0,75 m bis 8 m, vorzugsweise 1 m bis 7 m, bevorzugt 2 m bis 7 m, besonders bevorzugt 3 m bis 5 m, aufweisen.

Insbesondere sollte die Adsorptions- und/oder Gegenstromzone 3 der Gegenstrom-Filtervorrichtung 1 einen Durchmesser D1 von höchstens 2,5 m, insbesondere höchstens 2 m, vorzugsweise höchstens 1,5 m, bevorzugt höchstens 1,25 m, besonders bevorzugt höchstens 1 m, aufweisen. Gleichermaßen sollte die Adsorptions- und/oder Gegenstromzone einen Durchmesser D1 im Bereich von 0,05 m bis 2,5 m, insbesondere im Bereich von 0,1 m bis 2 m, vorzugsweise 0,25 m bis 1,5 m, bevorzugt 0,5 m bis 1,25 m, besonders bevorzugt 0,5 m bis 1 m, aufweisen.

Gemäß einer erfindungsgemäß bevorzugten Ausführungsform beträgt das Verhältnis der Gesamthöhe H2 der Gegenstrom-Filtereinrichtung 1 zur Höhe H1 der Adsorptions- und/oder Gegenstromzone 3 [Verhältnis Gesamthöhe H2 : Höhe H1] mindestens 1,25 : 1, insbesondere mindestens 1,5 : 1, vorzugsweise mindestens 1,75 : 1, bevorzugt mindestens 2 : 1. In diesem Zusammenhang sollte das Verhältnis der Gesamthöhe H2 der Gegenstrom-Filtereinrichtung 1 zur Höhe H1 der Adsorptions- und/oder Gegenstromzone 3 [Verhältnis Gesamthöhe H2 : Höhe H1] höchstens 5 : 1, insbesondere höchstens 4,75 : 1, vorzugsweise höchstens 4,5 : 1, bevorzugt höchstens 4 : 1, betragen. Zudem sollte das Verhältnis der Gesamthöhe H2 der Gegenstrom-Filtereinrichtung 1 zur Höhe H1 der Adsorptions- und/oder Gegenstromzone 3 [Verhältnis Gesamthöhe H2 : Höhe H1] im Bereich von 1,25 : 1 bis 5 : 1, insbesondere 1,5 : 1 bis 4,75 : 1, vorzugsweise 1,75 : 1 bis 4,5 : 1, bevorzugt 2 : 1 bis 4 : 1, liegen.

Zudem beträgt das Verhältnis des Durchmessers D1 der Adsorptions- und/oder Gegenstromzone 3 zum Durchmesser D2 des Wasser-Eintrittsbereichs 4 [Verhältnis Durchmesser D1 : Durchmesser D2] mindestens 1 : 1,1, insbesondere mindestens 1 : 1,25, vorzugsweise mindestens 1 : 1,5, bevorzugt mindestens 1 : 1,75, besonders bevorzugt mindestens 1 : 2. In diesem Zusammenhang sollte das Verhältnis des Durchmessers D1 der Adsorptions- und/oder Gegenstromzone 3 zum Durchmesser D2 des Wasser-Eintrittsbereichs 4 [Verhältnis Durchmesser D1 : Durchmesser D2] im Bereich von 1 : 1,1 bis 1 : 5, insbesondere 1 : 1,25 bis 1 : 3, vorzugsweise 1 : 1,5 bis 1 : 2,5 , bevorzugt 1 : 1,5 bis 1 : 2, liegen.

Das Verhältnis des Durchmessers D1 der Adsorptions- und/oder Gegenstromzone 3 zum Durchmesser D3 des Wasser-Austrittsbereichs 5 [Verhältnis Durchmesser D1 : Durchmesser D3] beträgt mindestens 1 : 1,1, insbesondere mindestens 1 : 1,25, vorzugsweise mindestens 1 : 1,5, bevorzugt mindestens 1 : 1,75, besonders bevorzugt mindestens 1 : 2. In diesem Zusammenhang sollte das Verhältnis des Durchmessers D1 der Adsorptions- und/oder Gegenstromzone 3 zum Durchmesser D3 des Wasser-Austrittsbereichs 5 [Verhältnis Durchmesser D1 : Durchmesser D3] im Bereich von 1 : 1,1 bis 1 : 5, insbesondere 1 : 1,25 bis 1 : 3, vorzugsweise 1 : 1,5 bis 1 : 2,5 , bevorzugt 1 : 1,5 bis 1 : 2, liegen.

Erfindungsgemäß ist es auch aus strömungstechnischen Aspekten von Vorteil, wenn die Adsorptions- und/oder Gegenstromzone 3 einen zumindest im Wesentlichen kreisförmigen und/oder kreisrunden Querschnitt a aufweist.

In diesem Zusammenhang sollte auch der Wasser-Eintrittsbereich 4 einen zumindest im Wesentlichen kreisförmigen und/oder kreisrunden Querschnitt b aufweisen.

Gleichermaßen kann es im Rahmen der vorliegenden Erfindung vorgesehen sein, dass der Wasser-Austrittsbereich 5 einen zumindest im Wesentlichen kreisförmigen und/oder kreisrunden Querschnitt c aufweist.

Erfindungsgemäß ist es zudem bevorzugt, dass die Querschnittsfläche a der Adsorptions- und/oder Gegenstromzone 3 kleiner ist als die Querschnittsfläche b des Wasser-Eintrittsbereichs 4 und/oder kleiner ist als die Querschnittsfläche c des Wasser-Austrittsbereichs 5.

Insbesondere kann es erfindungsgemäß vorgesehen sein, dass die Querschnittsfläche b des Wasser-Eintrittsbereichs 4 und die Querschnittsfläche c des Wasser-Austrittsbereichs 5 zumindest im Wesentlichen gleich groß ausgebildet sind.

In Bezug auf die Adsorptions- bzw. Gegenstromzone 3 liegt somit gemäß einer erfindungsgemäß bevorzugten Ausführungsform gewissermaßen eine Verjüngung bzw. ein geringerer Durchmesser bzw. eine geringere Querschnittsfläche im Vergleich zu dem Wasser-Eintrittsbereich 4 bzw. dem Wasser-Austrittsbereich 5 vor, was insbesondere zu einer Optimierung der in der Adsorptions- bzw. Gegenstromzone 3 vorliegenden Strömungen bzw. Stofftransporte bzw. Stoffflüsse von Wasser und Adsorptionsmaterial führt, insbesondere im Hinblick auf die Vermeidung bzw. Verringerung von Verwirbelungen oder dergleichen oder aber im Hinblick auf die Vermeidung von sogenannten Totzonen verringerter bzw. nicht vorhandener Strömung, einhergehend mit der Ausbildung einer stabilen Schüttung des Adsorptionsmaterials und einer Optimierung des Inkontaktbringens von Wasser einerseits und Adsorptionsmaterial andererseits. Zudem lassen sich hierdurch auch große Leerrohr- bzw. Filtergeschwindigkeiten umsetzen.

Was die erfindungsgemäße Gegenstrom-Filtervorrichtung 1 weiterhin anbelangt, so kann es vorgesehen sein, dass die Adsorptions- und/oder Gegenstromzone 3, der Wasser-Eintrittsbereich 4 und/oder der Wasser-Austrittsbereich 5 angeordnet sind derart, dass der zumindest im Wesentlichen kreisförmige und/oder kreisrunde Querschnitt a der Adsorptions- und/oder Gegenstromzone 3, der zumindest im Wesentlichen kreisförmige und/oder kreisrunde Querschnitt b des Wasser-Eintrittsbereichs 4 und/oder der zumindest im Wesentlichen kreisförmige und/oder kreisrunde Querschnitt c des Wasser-Austrittsbereichs 5 zumindest im Wesentlichen konzentrisch entlang der Längsachse d der Gegenstrom-Filtervorrichtung 1 angeordnet sind.

Die Gegenstrom-Filtervorrichtung 1 weist einen ersten Übergangsbereich 10 auf. In diesem Zusammenhang sollte der erste Übergangsbereich 10 strömungstechnisch zwischen dem Wasser-Eintrittsbereich 4 und der Adsorptions- und/oder Gegenstromzone 3 angeordnet sein. Darüber hinaus sollte der erste Übergangsbereich 10 stromabwärts zu dem Wasser-Eintrittsbereich 4 und stromaufwärts zu der Adsorptions- und/oder Gegenstromzone 3, bezogen auf die Strömungsrichtung des Wassers, angeordnet sein.

Darüber hinaus ist der erste Übergangsbereich 10 kegelstumpfförmig und/oder konisch ausgebildet. Zudem verjüngt sich der erste Übergangsbereich 10 ausgehend vom Wasser-Eintrittsbereich 4 mit dem Durchmesser D2 in Richtung der Adsorptions- und/oder Gegenstromzone 3 mit dem Durchmesser D1, was gleichermaßen strömungstechnische Vorteile mit sich bringt, da gewissermaßen eine Trichterfunktion zur Fokussierung des Wasserstroms bereitgestellt wird.

Weiterhin weist die Gegenstrom-Filtervorrichtung 1 einen zweiten Übergangsbereich 11 auf. In diesem Zusammenhang sollte der zweite Übergangsbereich 11 strömungstechnisch zwischen dem Wasser-Austrittsbereich 5 und der Adsorptions- und/oder Gegenstromzone 3 angeordnet sein. Insbesondere sollte der zweite Übergangsbereich 11 stromabwärts zu der Adsorptions- und/oder Gegenstromzone 3 stromaufwärts zu dem Wasser-Austrittsbereich 5, bezogen auf die Strömungsrichtung des Wassers, angeordnet sein.

Was den zweiten Übergangsbereich 11 weiterhin anbelangt, so ist dieser kegelstumpfförmig bzw. konisch ausgebildet. Zudem verjüngt sich der zweite Übergangsbereich 11 ausgehend vom Wasser-Austrittsbereich 5 mit dem Durchmesser D3 in Richtung der Adsorptions- und/oder Gegenstromzone 3 mit dem Durchmesser D1. Der zweite Übergangsbereich 11 führt insbesondere zu einer optimierten Zufuhr des Adsorptionsmaterials in die Adsorptions- bzw. Gegenstromzone und zum Erhalt einer gleichmäßigen bzw. optimal strukturierten Schüttung des Adsorptionsmaterials.

Die jeweiligen Übergangsbereiche 10, 11 verjüngen sich somit insbesondere ausgehend von dem Durchmesser D2, D3 des Wasser-Eintrittsbereichs 4 bzw. des Wasser-Austrittbereichs 5 auf den Durchmesser D1 der Adsorptions- und/oder Gegenstromzone 3.

Was darüber hinaus den Wasser-Zulauf 8 der erfindungsgemäßen Gegenstrom-Filtervorrichtung 1 anbelangt, so sollte dieser angeordnet sein derart, dass die durch die Öffnung des Wasser-Zulaufs 8 definierte Querschnittsfläche zumindest im Wesentlichen senkrecht zur Längsachse d der Gegenstrom-Filtervorrichtung positioniert ist. Hierdurch kann das Wasser optimal in die Vorrichtung hineingeleitet werden.

Darüber hinaus kann es erfindungsgemäß vorgesehen sein, dass die Gegenstrom-Filtervorrichtung 1, insbesondere der Wasser-Eintrittsbereich 4, mindestens eine Verteilereinrichtung 13 aufweist. In diesem Zusammenhang sollte die Verteilereinrichtung 13 strömungstechnisch zwischen dem Wasser-Zulauf 8 des Wasser-Eintrittsbereichs 4 und der Adsorptions- und/oder Gegenstromzone 3 und/oder zwischen dem Wasser-Zulauf 8 des Wasser-Eintrittsbereichs 4 und dem ersten Übergangsbereich 10 angeordnet sein. Gleichermaßen sollte die Verteilereinrichtung 13 stromabwärts zu dem Wasser-Zulauf 8 und/oder stromabwärts zu dem Adsorptionsmaterial-Auslass 6, vorzugsweise stromabwärts zu dem Wasser-Zulauf 8 und dem Adsorptionsmaterial-Auslass 6, angeordnet sein, bezogen auf die Strömungsrichtung des Wassers. Mit anderen Worten ist die Verteilereinrichtung 13 insbesondere stromaufwärts zu dem Wasser-Zulauf 8 und/oder dem Adsorptionsmaterial-Austritt 6, bezogen auf die Transportrichtung des Adsorptionsmaterials, angeordnet. Das Vorhandensein einer Verteilereinrichtung 13 optimiert den Eintritt des zu behandelnden bzw. aufzureinigenden Wassers in die Adsorptions- bzw. Gegenstromzone 3, was die Filterleistung der erfindungsgemäßen Gegenstrom-Filtervorrichtung 1 weiter optimiert.

In diesem Zusammenhang sollte die Verteilereinrichtung 13 zumindest im Wesentlichen durchgängig und/oder durchlässig für das zu behandelnde und/oder aufzureinigende Wasser sein. Zudem sollte die Verteilereinrichtung 13 zumindest im Wesentlichen durchgängig und/oder durchlässig für das partikuläre Adsorptionsmaterial sein, d. h. die Verteileinrichtung 13 sollte Öffnungen und/oder Poren aufweisen, welche größer sind als die Teilchengröße des Adsorptionsfiltermaterials, so dass das verbrauchte Adsorptionsmaterial von der Adsorptions- und/oder Gegenstromzone 3 zu dem Auslass 6 gelangen kann. Beispielsweise können Netze oder Gitter zum Einsatz kommen.

Gemäß einer weiteren erfindungsgemäßen Ausführungsform kann der Wasser-Zulauf 8 des Wasser-Eintrittsbereichs 4 mit einer Abdeckeinrichtung ausgerüstet sein. Insbesondere kann dem Wasser-Zulauf des Wasser-Eintrittsbereichs eine Abdeckeinrichtung zugeordnet sein. In diesem Zusammenhang sollte die Abdeckeinrichtung strömungstechnisch zwischen dem Wasser-Zulauf des Wasser-Eintrittsbereichs und der Adsorptions- und/oder Gegenstromzone und/oder zwischen dem Wasser-Zulauf des Wasser-Eintrittsbereichs und dem ersten Übergangsbereich angeordnet sein. Zudem sollte die Abdeckeinrichtung Bestandteil der Verteilereinrichtung sein bzw. von der Verteilereinrichtung ausgebildet sein. Die Abdeckeinrichtung verhindert insbesondere ein Eindringen von Adsorptionsmaterial in den Wasser-Zulauf, insbesondere für den Fall, dass die Gegenstrom-Filtervorrichtung nicht in Betrieb ist bzw. der Zustrom von Wasser unterbrochen ist.

Weiterhin sollte der Adsorptionsmaterial-Auslass 6 stromabwärts zu dem Wasser-Zulauf 8 des Wasser-Eintrittsbereichs 4 angeordnet sein, bezogen auf die Transportrichtung des Adsorptionsmaterials. Mit anderen Worten sollte der Adsorptionsmaterial-Auslass 6 stromaufwärts zu dem Wasser-Zulauf 8 des Wasser-Eintrittsbereichs 4 angeordnet sein, bezogen auf die Strömungsrichtung des Wassers. Zudem sollte der Adsorptionsmaterial-Auslass 6 in einem Endabschnitt 12 des Wasser-Eintrittsbereichs 4 angeordnet sein. Insbesondere sollte der Adsorptionsmaterial-Auslass 6 an einem ersten Ende der Gegenstrom-Filtervorrichtung 1 angeordnet sein.

Erfindungsgemäß ist es zudem von Vorteil, wenn der Endabschnitt 12 stromabwärts zu dem Wasser-Zulauf 8 angeordnet ist, bezogen auf die Transportrichtung des Adsorptionsmaterials. Insbesondere sollte der Endabschnitt kegelstumpfförmig und/oder konisch ausgebildet sein. In diesem Zusammenhang ist es erfindungsgemäß gleichermaßen von Vorteil, wenn sich der Endabschnitt in Richtung des Adsorptionsmaterial-Auslasses 6 verjüngt. Auf diese Art und Weise wird gewissermaßen eine Trichter- bzw. Sammelfunktion in Bezug auf das zu entfernende Adsorptionsmaterial bereitgestellt.

Zudem sollte der Adsorptionsmaterial-Auslass 6 angeordnet sein derart, dass die durch die Öffnung des Adsorptionsmaterial-Auslasses 6 definierte Querschnittsfläche zumindest im Wesentlichen senkrecht zur Längsachse d der Gegenstrom-Filtervorrichtung 1 positioniert ist, was die Abfuhr des Adsorptionsfiltermaterials verbessert.

Insbesondere sollte der Adsorptionsmaterial-Einlass 7 stromaufwärts zu dem Wasser-Ablauf 9 des Wasser-Austrittsbereichs 5 angeordnet sein. Zudem sollte der Wasser-Ablauf 9 des Wasser-Austrittsbereichs 5 stromabwärts zu dem Adsorptionsmaterial-Einlass 7 angeordnet sein, jeweils bezogen auf die Strömungsrichtung des Wassers.

Im Rahmen der vorliegenden Erfindung kann es gleichermaßen vorgesehen sein, dass die Gegenstrom-Filtervorrichtung 1, insbesondere der Wasser-Austrittsbereich 5, mindestens eine Trenneinrichtung 14 aufweist. In diesem Zusammenhang kann es vorgesehen sein, dass die Trenneinrichtung 14 strömungstechnisch zwischen dem Wasser-Ablauf 9 des Wasser-Austrittsbereichs 5 und der Adsorptions- und/oder Gegenstromzone 3 und/oder zwischen dem Wasser-Ablauf 9 des Wasser-Austrittsbereichs 5 und dem zweiten Übergangsbereich 11 angeordnet ist.

Zudem sollte die Trenneinrichtung 14 stromaufwärts zu dem Wasser-Ablauf 9 und/oder stromabwärts zu dem Adsorptionsmaterial-Einlass 7, vorzugsweise stromaufwärts zu dem Wasser-Ablauf 5 und stromabwärts zu dem Adsorptionsmaterial-Einlass 7, angeordnet sein.

Insbesondere sollte die Trenneinrichtung 14 in diesem Zusammenhang strömungstechnisch zwischen dem Wasser-Ablauf 9 und dem Adsorptionsmittel-Einlass 7 angeordnet sein.

Die Trennvorrichtung 14 verhindert insbesondere ein Eindringen von Adsorptionsmaterial in den Wasser-Ablauf 9 bzw. in das abzuführende Filtrat.

In diesem Zusammenhang sollte die Trenneinrichtung 14 zumindest im Wesentlichen durchgängig und/oder durchlässig für das zu behandelnde und/oder aufzureinigende Wasser sein. Zudem sollte die Trenneinrichtung 14 zumindest im Wesentlichen nicht durchgängig und/oder undurchlässig für das partikuläre Adsorptionsmaterial sein.

Gleichermaßen ist es erfindungsgemäß von Vorteil, wenn die Trenneinrichtung 14 mindestens ein Filterelement umfasst oder hieraus besteht. Hierbei kann es sich beispielsweise um ein Filtervlies oder dergleichen handeln. Insbesondere sollte die Poren- bzw. Maschengröße bzw. die Größe der Durchtrittsöffnungen des Filterelements kleiner als die Teilchen- bzw. Korngröße des Adsorptionsmaterials sein.

Weiterhin kann es im Rahmen der vorliegenden Erfindung vorgesehen sein, dass der Adsorptionsmaterial-Einlass 6 angeordnet ist derart, dass die durch die Öffnung des Adsorptionsmaterial-Einlasses 6 definierte Querschnittsfläche zumindest im Wesentlichen senkrecht zur Längsachse d der Gegenstrom-Filtervorrichtung 1 positioniert ist.

Gemäß einer erfindungsgemäß bevorzugten Ausführungsform ist die Gegenstrom-Filtervorrichtung 1 insbesondere im Betriebs- und/oder Anwendungszustand zumindest im Wesentlichen vertikal angeordnet und/oder ausgerichtet, bezogen auf die Längsachse d der Gegenstrom-Filtervorrichtung 1. In diesem Zusammenhang ist der Wasser-Eintrittsbereich 4 somit gewissermaßen unten angeordnet bzw. bildet ein unteres Ende aus. In diesem Zusammenhang ist der Wasser-Austrittsbereich 5 in diesem Fall sozusagen oben angeordnet bzw. bildet ein oberes Ende aus.

Gemäß dieser Ausführungsform kann es erfindungsgemäß vorgesehen sein, dass im Betriebs- und/oder Anwendungszustand das zu behandelnde und/oder aufzureinigende Wasser von dem unteren Wasser-Eintrittsbereich 4 durch die Adsorptions- und/oder Gegenstromzone 3 zu dem oberen Wasser-Austrittsbereich 5 fließt und/oder geführt ist. Insbesondere kann im Betriebs- und/oder Anwendungszustand das zu behandelnde und/oder aufzureinigende Wasser von unten und/oder von dem unteren Ende durch die Adsorptions- und/oder Gegenstromzone 3 nach oben und/oder zu dem oberen Ende fließen und/oder geführt sein.

Weiterhin kann es gemäß dieser erfindungsgemäßen Ausführungsform mit der vertikalen Positionierung der Gegenstrom-Filtervorrichtung 1 vorgesehen sein, dass im Betriebs- und/oder Anwendungszustand das Adsorptionsmaterial von dem oberen Wasser-Austrittsbereich 5 durch die Adsorptions- und/oder Gegenstromzone 3 zu dem unteren Wasser-Eintrittsbereich 4 geführt ist. Insbesondere sollte im Betriebs- und/oder Anwendungszustand das Adsorptionsmaterial von oben und/oder von dem oberen Ende durch die Adsorptions- und/oder Gegenstromzone nach unten und/oder zu dem unteren Ende geführt sein.

Was darüber hinaus das Adsorptionsmaterial in der erfindungsgemäßen Gegenstrom-Filtervorrichtung 1 anbelangt, so sollte das Adsorptionsmaterial in der Gegenstrom-Filtervorrichtung 1, insbesondere in der Adsorptions- und/oder Gegenstromzone 3 in Form einer Schüttung vorliegen. Das Vorhandensein des partikulären Adsorptionsmaterials in Form einer insbesondere losen Schüttung ist mit dem Vorteil verbunden, dass zum einen eine optimale Durchströmung des Adsorptionsmaterials mit dem zu behandelnden bzw. aufzureinigendem Wasser realisiert ist und dass zum anderen das Adsorptionsmaterial als solches sehr gut aus der Schüttung abgeführt bzw. der Schüttung hinzugefügt werden kann.

Auf Basis der speziellen apparativen Ausgestaltung der erfindungsgemäßen Gegenstrom-Filtervorrichtung 1 können sehr hohe Leerrohr- bzw. Filtergeschwindigkeiten erreicht werden: In diesem Zusammenhang kann die Gegenstrom-Filtervorrichtung 1 ausgebildet sein derart, dass im Betriebs- und/oder Anwendungszustand eine Leerrohrgeschwindigkeit und/oder Filtergeschwindigkeit, berechnet als Quotient aus Volumenstrom [m³/h] und Querschnittsfläche [m²], bezogen auf die Adsorptions- und/oder Gegenstromstromzone und bezogen auf das zu behandelnde und/oder aufzureinigende Wasser, von mindestens 10 m/h, insbesondere mindestens 20 m/h, vorzugsweise mindestens 25 m/h, bevorzugt mindestens 30 m/h, vorliegt bzw. eingestellt ist.

Insbesondere ist die Gegenstrom-Filtervorrichtung 1 ausgebildet derart, dass im Betriebs- und/oder Anwendungszustand eine Leerrohrgeschwindigkeit und/oder Filtergeschwindigkeit, berechnet als Quotient aus Volumenstrom [m³/h] und Querschnittsfläche [m²], bezogen auf die Adsorptions- und/oder Gegenstromstromzone und bezogen auf das zu behandelnde und/oder aufzureinigende Wasser, im Bereich von 10 m/h bis 120 m/h, insbesondere 20 m/h bis 100 m/h, vorzugsweise 25 m/h bis 80 m/h, bevorzugt 30 m/h bis 70 m/h, besonders bevorzugt 40 m/h bis 60 m/h, vorliegt bzw. eingestellt ist.

Gleichermaßen können auf Basis der erfindungsgemäßen Gegenstrom-Filtervorrichtung 1 auch optimale Massedurchsätze eingestellt werden: Insbesondere kann es in diesem Zusammenhang vorgesehen sein, dass die Gegenstrom-Filtervorrichtung 1 nach der Erfindung ausgebildet ist derart, dass im Betriebs- und/oder Anwendungszustand ein insbesondere Filtrat-spezifischer Massedurchsatz, berechnet als Quotient aus Massedurchsatz an Adsorptionsmaterial in der Gegenstrom-Filtervorrichtung [g/h] und erzeugtem Volumen an aufgereinigtem Wasser und/oder Filtrat [m³], im Bereich von 10⁻⁷ g/h·m³ bis 1.000 g/h·m³, insbesondere 10⁻⁶ g/h·m³ bis 100 g/h·m³, vorzugsweise 10⁻⁵ g/h·m³ bis 10 g/h·m³, vorliegt bzw. eingestellt ist. Auf Basis der erfindungsgemäßen Gegenstrom-Filtervorrichtung ist es somit möglich, dass nur geringe Mengen Adsorptionsmaterial zur Aufreinigung von mit Spurenstoffen bzw. Mikroverunreinigungen kontaminiertem Wasser eingesetzt werden. Der Filtrat-spezifische Massedurchsatz kann insbesondere auch gemäß der allgemeinen Formel V_{F,m} = m_{Ads,D,AP} / V_{F} berechnet werden (mit V_{F,m}: Filtrat-spezifischer Massedurchsatz; m_{Ads,D,AP}: Massedurchsatz des Adsorptionsmaterials in der Gegenstrom-Filtervorrichtung; V_{F}: erzeugtes Volumen an aufgereinigtem Wasser und/oder Filtrat bzw. erzeugtes Filtratvolumen).

Schließlich veranschaulicht Fig. 3 das der vorliegenden Erfindung zugrundeliegende Prinzip des entgegengesetzten Transports von zu behandelndem bzw. aufzureinigendem Wasser einerseits und von Adsorptionsmaterial andererseits in der erfindungsgemäßen Gegenstrom-Filtervorrichtung 1, insbesondere Gegenstrom-Adsorptionsfilterkolonne, vorzugsweise wie zuvor definiert, und des Inkontaktbringens von Wasser und Adsorptionsmaterial insbesondere in der Adsorptions- und/oder Gegenstromzone 3 der Gegenstrom-Filtervorrichtung 1 nach der Erfindung.

Fig. 3 verdeutlicht zudem die bzw. den im Betriebs- bzw. Anwendungszustand in der Gegenstrom-Filtervorrichtung 1 vorliegende Strömung bzw. Transport des Wassers W einerseits und des Adsorptionsmaterials AK andererseits im Gegenstrom zueinander. Dabei fließt das zu behandelnde Wasser W ausgehend von dem Wasser-Eintrittsbereich 4 durch die Adsorptions- bzw. Gegenstromzone 3 in den Wasser-Austrittsbereich 5, während das Adsorptionsmaterial ausgehend von dem Wasser-Austrittsbereich 5 durch die Adsorptions- bzw. Gegenstromzone 3, in welcher das Adsorptionsmaterial bevorzugt als lose Schüttung 15 vorliegt, in den Wasser-Eintrittsbereich 4 fließt bzw. transportiert wird. Dadurch, dass das Adsorptionsmaterial ausgehend von dem Wasser-Austrittsbereich 5 der Schüttung 15 insbesondere kontinuierlich zugeführt und zudem der Schüttung 15 in Richtung des Wasser-Eintrittsbereichs 4 insbesondere kontinuierlich entnommen wird, erfolgt ein insbesondere kontinuierlicher Austausch des Adsorptionsmaterials in der Schüttung 15 (und zwar insbesondere zeitgleich zu dem Transport des Wassers), so dass die Schüttung 15 gewissermaßen nicht erschöpft und keine Betriebsunterbrechungen zum Austausch des Adsorptionsmaterials erforderlich sind.

Weitere Ausgestaltungen, Abwandlungen, Variationen, Modifikationen, Besonderheiten und Vorteile der vorliegenden Erfindung sind für den Fachmann beim Lesen der Beschreibung ohne Weiteres erkennbar und realisierbar, ohne dass er dabei den Rahmen der vorliegenden Erfindung verlässt.

Die vorliegende Erfindung wird anhand der nachfolgenden Ausführungsbeispiele veranschaulicht, welche die vorliegende Erfindung jedoch keinesfalls beschränken sollen.

### 1. Durchführung des erfindungsgemäßen Verfahrens gemäß einer bevorzugten Ausführungsform der vorliegenden Erfindung:

Das erfindungsgemäße Verfahren kann gemäß einer speziellen Ausführungsform der vorliegenden Erfindung wie nachfolgend beschrieben durchgeführt werden:
Das erfindungsgemäße Verfahren kann beispielsweise unter Verwendung eines speziellen Adsorptionsmaterials in Form von kugelförmiger Aktivkohle durchgeführt werden, wobei diesbezüglich insbesondere eine Aktivkohle in Form von PBSAC (*Polymer-based Spherical Activated Carbon*) eingesetzt wird.

Das erfindungsgemäße Verfahren kann dabei insbesondere mit dem Ziel einer vorzugsweise vollständigen Entfernung von Spurenstoffen aus einem aufzureinigenden bzw. zu behandelnden Wasser nach Durchtritt durch die erfindungsgemäß eingesetzte Gegenstrom-Filtervorrichtung bzw. Adsorptionsstufe durchgeführt werden, wobei eine derartige Verfahrensführung beispielsweise auch in einem Trinkwasserwerk zur Behandlung bzw. Aufreinigung von Trinkwasser umgesetzt werden kann. Das zu behandelnde bzw. aufzureinigende Wasser, welches im Rahmen der erfindungsgemäßen Verfahrensführung der Gegenstrom-Filtervorrichtung zugeführt wird, kann dabei synonym auch als Rohwasser bezeichnet werden, während das aufgereinigte Wasser als Filtrat in entsprechender Weise bezeichnet werden kann.

Was die im Rahmen des erfindungsgemäßen Verfahrens gemäß dieser bevorzugten Ausführungsform eingesetzte Gegenstrom-Filtervorrichtung anbelangt, so handelt es sich hierbei beispielsweise um eine wie in den entsprechenden Vorrichtungsansprüchen definierte Gegenstrom-Filtervorrichtung, welche insbesondere als kontinuierliche Gegenstrom-Adsorptionsfilterkolonne ausgebildet ist. Dabei kann die entsprechende Gegenstrom-Filtervorrichtung im Rahmen der erfindungsgemäßen Verfahrensführung insbesondere zumindest im Wesentlichen vertikal, bezogen auf die Längsachse der Gegenstrom-Filtervorrichtung, aufgestellt bzw. betrieben werden, so dass gewissermaßen ein oberes Ende und ein unteres Ende in Bezug auf die Gegenstrom-Filtervorrichtung vorliegt bzw. definiert werden kann.

In diesem Fall strömt unter Betriebs- bzw. Anwendungsbedingungen das zu behandelnde bzw. aufzureinigende Wasser bzw. Rohwasser insbesondere unter Druckbeaufschlagung in die Gegenstrom-Filtervorrichtung, wobei das Wasser gewissermaßen von unten bzw. am unteren Ende der Gegenstrom-Filtervorrichtung in die Gegenstrom-Filtervorrichtung eintritt. In diesem Zusammenhang kann die Gegenstrom-Filtervorrichtung einen Verteiler aufweisen, welcher das zu behandelnde bzw. aufzuarbeitende Wasser bzw. Rohwasser in eine Adsorptions- bzw. Gegenstromzone der Gegenstrom-Filtervorrichtung führt.

Gleichzeitig wird durch ein oberes Ende der Gegenstrom-Filtervorrichtung bzw. von oben regeneriertes bzw. unbeladenes Adsorptionsmaterial in Form der speziellen Aktivkohle der Gegenstrom-Filtervorrichtung zugeführt, wobei dies gleichermaßen unter Druckbeaufschlagung erfolgen kann, wobei der diesbezügliche Druck zum Einführen des Adsorptionsmaterials größer als der Druck in der Gegenstrom-Filtervorrichtung bzw. in der Adsorptionszone sein sollte. Das Adsorptionsmaterial gelangt nachfolgend sozusagen von oben in die Adsorptions- bzw. Gegenstromzone, in welcher es eine insbesondere lose Schüttung ausbildet und wobei das Adsorptionsmaterial insbesondere in der Schüttung von oben nach unten absinkt bzw. transportiert wird.

Gleichzeitig strömt das zu behandelnde bzw. aufzureinigende Wasser bzw. Rohwasser in der Adsorptions- bzw. Gegenstromzone von unten nach oben und somit im Gegenstrom zu dem Adsorptionsmaterial, so dass die Entfernung bzw. Adsorption der Spurenstoffe bzw. Mikroschadstoffe aus dem Rohwasser im Gegenstrom stattfinden kann. Auf diese Weise wird das Wasser von den Verunreinigungen befreit und das Adsorptionsmaterial mit den Verunreinigungen beladen, wobei das Adsorptionsmaterial mit der höchsten Beladung an Verunreinigungen sich in entsprechender Weise im unteren Bereich der Adsorptions- und/oder Gegenstromzone befindet.

Das aufgereinigte bzw. von den Spurenstoffen bzw. Mikroschadstoffen befreite Wasser kann anschließend durch eine mechanische Trennvorrichtung in den oberen Bereich bzw. in das obere Ende und somit gewissermaßen in den Kopf der Gegenstrom-Filtervorrichtung eintreten, wobei das gereinigte Wasser zur weiteren Verwendung, beispielsweise als Trinkwasser, aus diesem Bereich ausgeleitet bzw. abgeführt werden kann.

Eine in der Gegenstrom-Filtervorrichtung vorhandene Trennvorrichtung dient insbesondere zum Rückhalt des Adsorptionsmaterials, wobei die diesbezügliche Trennvorrichtung beispielsweise in Form eines Filtervlieses bzw. Drahtnetzes ausgebildet sein kann.

Auf der anderen Seite und somit gewissermaßen im unteren Bereich bzw. im Fuß der Gegenstrom-Filtervorrichtung kann das mit den Verunreinigungen beladene Adsorptionsmaterial entnommen werden, beispielsweise unter Verwendung einer Strahlpumpe, Schlauchpumpe oder dergleichen.

Anschließend kann das beladene Adsorptionsmaterial einer Desorptions-Vorrichtung bzw. Regenerations-Vorrichtung zugeführt werden, welche mehrere Aggregate bzw. Einrichtungen umfassen kann.

In diesem Zusammenhang kann es beispielsweise vorgesehen sein, dass das Adsorptionsmaterial vor Trocknung, beispielsweise mittels eines Schrägklärers bzw. Bandtrockners, von der anhaftenden Feuchtigkeit bzw. von Restwasser befreit wird. Anschließend kann das Adsorptionsmaterial einer zusätzlichen Haupttrocknung unterzogen werden, wobei hierzu beispielsweise Bandtrockner und/oder Wirbelschichttrockner eingesetzt werden können. Hierdurch kann insbesondere Restfeuchtigkeit, welche sich im Porenvolumen bzw. -raum des Adsorptionsmaterials enthalten ist, entfernt werden.

Über eine entsprechende Fördereinrichtung, beispielsweise in Form einer Rüttelrinne, einer pneumatischen Förderung bzw. eines Förderbandes, kann das so getrocknete und mit den Schadstoffen beladene Adsorptionsmaterial einer thermischen Regeneration zugeführt werden. Hierzu können beispielsweise Einrichtungen in Form eines insbesondere indirekt beheizten Drehrohrofens, einer Hochtemperaturwirbelschichteinrichtung oder eines Mikrowellenofens eingesetzt werden. In der thermischen Regeneration werden die Verunreinigungen insbesondere mit Hilfe von thermischer Energie aus dem Adsorptionsmaterial ausgetrieben bzw. entfernt, so dass eine Desorption der entsprechenden Mikroschadstoffe erfolgt. Die desorbierten Stoffe liegen dabei insbesondere im gasförmigen Zustand vor und können einer thermischen Endverwertung, insbesondere einer Verbrennung, zugeführt werden. Das Adsorptionsmaterial wird durch die thermische Regeneration gewissermaßen wieder in den ursprünglichen Zustand bzw. in einen unbeladenen Zustand versetzt bzw. überführt, so dass die Adsorptionskapazität des Adsorptionsmaterials wieder hergestellt wird.

Das so rezyklierte bzw. unbeladene Adsorptionsmaterial kann beispielsweise in einer Bevorratungsvorrichtung zwischengelagert werden und mittels einer geeigneten Befeuchtungs- bzw. Fördereinrichtung, wie einer Strahlpumpe und/oder einer Schlauchpumpe, mit Wasser benetzt und insbesondere unter Druckbeaufschlagung der Gegenstrom-Filtervorrichtung erneut zugeführt werden.

Aufgrund der erfindungsgemäßen Verfahrensführung kann insgesamt ein kleiner Umlauffaktor in Bezug auf die eingesetzte Aufreinigungs-Anlage realisiert werden, d. h. ein relativ großer Teil des im Rahmen der erfindungsgemäßen Verfahrensführung eingesetzten Adsorptionsmaterials befindet sich während der Verfahrensführung in der Gegenstrom-Filtervorrichtung, und nur ein relativ geringer Teil des Adsorptionsmaterials liegt im Regenerationsabschnitt vor, was mit verfahrenstechnischen Vorteilen einhergeht, da ein hoher Anteil des Adsorptionsmaterials den verfahrensspezifischen Zweck der Aufreinigung von Wasser erfüllen kann. Gleichermaßen können aufgrund der erfindungsgemäßen Verfahrensführung hohe spezifische Massedurchsätze realisiert werden, da in Bezug auf die Menge an eingesetztem Adsorptionsmaterial große Filtratvolumen erzeugt werden können.

### 2. Untersuchungen zur Effizienz der erfindungsgemäßen Aufreinigungs-Anlage bzw. der erfindungsgemäßen Gegenstrom-Filtervorrichtung:

a1) Im Folgenden wird die Leistungsfähigkeit der erfindungsgemäßen Aufreinigungs-Anlage bzw. der erfindungsgemäßen Gegenstrom-Filtervorrichtung in Bezug auf die Aufreinigung von kontaminiertem Rohwasser im Dauerbetrieb untersucht. Das zu behandelnde bzw. aufzureinigende Wasser enthält dabei im Mittel folgende Verunreinigungen bzw. Spurenstoffe:

**Tabelle 1: Spurenstoffe im zu behandelnden bzw. aufzureinigenden Wasser (Rohwasser)**

| Bezeichnung | Mittlere Konzentration am Eingang der Gegenstrom-Filtervorrichtung | Einheit |
|---|---|---|
| Amidotrizoesäure | 290 | ng/l |
| lopamidol | 97 | ng/l |
| Perfluoroctansulfonat (PFOS) | 260 | |
| Methyl-tert-butylether (MTBE) | 0,57 | µg/l |
| *Dissolved Organic Carbons* (DOC) | 0,4-0,7 | mg/l |

Die eingesetzte Gegenstrom-Filtervorrichtung, insbesondere wie zuvor definiert, weist eine Höhe H1 von etwa 3,50 m mit einem Durchmesser D2 bzw. D3 des Wasser-Eintrittsbereichs bzw. des Wasser-Austrittsbereichs von etwa 1,60 m auf. Die räumlichen Dimensionen der zylindrisch ausgebildeten Adsorptions- bzw. Gegenstromzone der Gegenstrom-Filtervorrichtung betragen zudem für die Höhe H1 1,75 m und für den Durchmesser D1 0,8 m. Das Volumen des Schüttbetts der eingesetzten Aktivkohle in der Gegenstrom-Filtervorrichtung beträgt etwa 0,85 m³.
Als Adsorptionsmaterial wird eine spezielle kornförmige Aktivkohle (PBSAC) mit einem Porenvolumen nach Gurvich von 1,124 cm³/g und einer Abriebshärte von 98,7 % eingesetzt.
Die Leerrohr- bzw. Filtergeschwindigkeit wird auf einen Wert von etwa 55 m/h eingestellt.
Zudem wurde die Gegenstrom-Filtervorrichtung nach der Erfindung bzw. die erfindungsgemäße Aufreinigungs-Anlage mit einem Umlauffaktor, berechnet als Quotient aus der Menge des sich in der Regenerierung bzw. Rezyklierung befindlichen Adsorptionsmaterials und Menge des sich in der Gegenstrom-Filtervorrichtung befindlichen Adsorptionsmaterials, von etwa 10 verfahren.
Zudem wird die erfindungsgemäße Gegenstrom-Filtervorrichtung mit einem spezifischen Massedurchsatz, berechnet als Quotient aus Massedurchsatz an Adsorptionsmaterial und erzeugtem Volumen an behandeltem bzw. aufgereinigtem Wasser bzw. Filtrat, von etwa 5 g/h . m³ betrieben.
Die eingesetzte Aufreinigungs-Anlage enthält darüber hinaus eine erste Trocknungs- bzw. Entfeuchtungseinrichtung in Form eines Schrägklärers, eine zweite Trocknungs- bzw. Entfeuchtungseinrichtung in Form eines Bandtrockners sowie eine dritte Haupttrocknungs- bzw. Entfeuchtungseinrichtung in Form eines Wirbelschichttrockners, welche aufeinander abfolgend angeordnet sind.
Den entsprechenden Trocknungs- bzw. Entfeuchtungseinrichtungen ist eine Regenerations- bzw. Desorptionseinrichtung in Form eines indirekt beheizten Drehrohrofens nachgeschaltet.
Die Aufreinigungs-Anlage weist zudem eine der Regenerations- bzw. Desorptionseinrichtung nachgeschaltete Bevorratungseinrichtung und eine Befeuchtungs- bzw. Transporteinrichtung in Form einer Wasserstrahlpumpe, welche wiederum der Regenerations- bzw. Desorptionseinrichtung nachgeschaltet ist, auf.
Das aus der Gegenstrom-Filtervorrichtung entnommene, mit den Verunreinigungen beladene Adsorbenz wird durch die entsprechenden Trocknungs- bzw. Entfeuchtungseinrichtungen geleitet, wobei der Restfeuchtigkeitsgehalt des so getrockneten Adsorptionsmaterials etwa 0,8 Gew.-%, bezogen auf das Adsorptionsmaterial, beträgt.
Nachfolgend wird das Adsorptionsmaterial in die Regenerations- bzw. Desorptionseinrichtung überführt. Dort erfolgt eine thermische Behandlung, einhergehend mit der Desorption der zuvor adsorbierten Verunreinigungen.
Das so erhaltene aufgereinigte bzw. regenerierte bzw. frische Adsorptionsmaterial wird in der Bevorratungsvorrichtung zwischengespeichert, nachfolgend mittels der Befeuchtungs- bzw. Transporteinrichtung befeuchtet, wobei diesbezüglich gleichermaßen das zugrundeliegende Rohwasser verwendet wird, und nachfolgend der Gegenstrom-Filtervorrichtung erneut zugeführt.
Was darüber hinaus das aus der Gegenstrom-Filtervorrichtung entnommene behandelte bzw. aufgereinigte Wasser bzw. Filtrat anbelangt, so wurde dies während der gesamten Versuchs- bzw. Betriebsdauer kontinuierlich auf etwaige Durchbrüche der zugrundeliegenden Verunreinigungen untersucht.
Für den einen Versuchs- bzw. Betriebszeitraum von 7 Tagen konnte keinerlei Durchbruch festgestellt werden; das erhaltene Filtrat war für den gesamten Zeitraum frei von den zuvor angeführten Verunreinigungen.
a2) Der in Abschnitt a1) angeführte Versuch wird wiederholt, wobei jedoch eine Gegenstrom-Filtervorrichtung verwendet wird, bei welcher der Durchmesser D1 der Adsorptions- bzw. Gegenstromzone den jeweiligen Durchmessern D2 bzw. D3 des Wasser-Eintrittsbereichs bzw. des Wasser-Austrittsbereichs entspricht, so dass eine insgesamt zylinderförmige Gegenstrom-Filtervorrichtung ohne Verjüngung vorliegt. Bei einer Leerrohr- bzw. Filtergeschwindigkeit von 55 m/h wird für Amidotrizoesäure ein Durchbruch nach einer Betriebsdauer von etwa 118 h festgestellt werden. Für lopamidol beträgt die Durchbruchszeit etwa 125 h, während für PFOS eine Durchbruchszeit von 115 h ermittelt wird. In Bezug auf MTBE kann ein Durchbruch nach 72 h ermittelt werden. Für die DOC-Verunreinigungen beträgt die Durchbruchszeit etwa 65 h. Bei einer reduzierten Leerrohr- bzw. Filtergeschwindigkeit von 10 m/h kann über den Versuchs- bzw. Betriebszeitraum von 7 Tagen kein Durchbruch festgestellt werden. Zudem kann beobachtet werden, dass die Schüttung der Aktivkohle nicht vollständig homogen bzw. gleichmäßig ausgebildet ist.
b) Im Rahmen eines entsprechenden Vergleichs wird eine nichterfindungsgemäße Filtervorrichtung in Form eines in Bezug auf das Adsorptionsmaterial geschlossenen Filtersystems eingesetzt. Die Vergleichs-Filtervorrichtung weist eine Höhe von 2 m und einen Durchmesser von 1,50 m auf und enthält Aktivkohle in Form eines Schüttbetts mit einem Volumen von 0,85 m³, welche während des Versuchsbetriebs nicht ausgetauscht wird. Als Adsorptionsmaterial wird eine teilchenförmige Formkohle eingesetzt. Das System wird mit einer Leerrohr- bzw. Filtergeschwindigkeit von 8 m/h betrieben, wobei in diesem Zusammenhang das zuvor definierte und mit den entsprechenden Verunreinigungen kontaminierte Rohwasser eingesetzt wird. In Bezug auf Amidotrizoesäure konnte ein Durchbruch nach etwa 38 h Betriebsdauer festgestellt werden. Für lopamidol beträgt die Durchbruchszeit etwa 40 h, während für PFOS eine Durchbruchszeit von 42 h ermittelt wird. In Bezug auf MTBE kann ein Durchbruch bereits nach 17 h ermittelt werden. Für die DOC-Verunreinigungen beträgt die Durchbruchszeit etwa 21 h.

Die zuvor angeführten Untersuchungen zeigen die hervorragenden Filtereigenschaften der erfindungsgemäßen Konzeption auf Basis der erfindungsgemäßen Aufreinigungs-Anlage bzw. der erfindungsgemäßen Gegenstrom-Filtervorrichtung sowie des entsprechenden erfindungsgemäßen Verfahrens, wobei in diesem Zusammenhang in Bezug auf kontaminiertes Rohwasser eine hervorragende Aufreinigung zum Erhalt eines schadstofffreien Filtrats.

### 3. Untersuchungen zur adsorptiven Entfernung von Spurenstoffen für verschiedene Adsorbentien:

Weiterhin wird das Durchbruchsverhalten für relevanten Spurenverunreinigungen an verschiedenen Adsorbentien in einer halbtechnischen Versuchsanlagen ermittelt. Zur Bewertung des Adsorptionsverhaltens verschiedener Spurenverunreinigungen wird eine Aktivkohlefilteranlage aus vier parallelen Filtersäulen errichtet, wobei die jeweiligen Filtersäulen (Filter 1 bis 4) einen Durchmesser von 0,095 m mit einer entsprechenden Fläche von 0,07 m² aufweisen. Das zu untersuchende Adsorptionsmaterial wurde in einer Schütthöhe von jeweils etwa 1,27 m eingesetzt, wobei die entsprechenden Aktivkohlemengen zwischen 3,2 und 5,5 kg variieren. Während der Versuchs- bzw. Betriebsdauer wird das Adsorptionsmaterial nicht ausgetauscht. Die jeweiligen Filtersäulen werden mit einer Leerrohr- bzw. Filtergeschwindigkeit von 10 m/h betrieben. Die erste Filtersäule wurde mit einer speziell handelsüblichen Formkohle betrieben, während die zweite bis vierte Filtersäule mit Aktivkohle in Form von PBSAC betrieben wird, wie in Tabelle 2 gezeigt, was die Aktivkohle PBSAC I bis III anbelangt, so weist PBSAC I den geringsten und PBSAC II den höchsten Aktivierungsgrad auf.

**Tabelle 2: Produktspezifikationen der Adsorbentien**

| | | Filter 1 | Filter 2 | Filter 4 | Filter 3 |
|---|---|---|---|---|---|
| Adsorbens | | herkömmliche Formkohle | PBSAC I | PBSAC II | PBSAC III |
| BET | m²/g | 850 | 1.506 | 1.733 | 2.084 |
| Jodzahl | mg/g | 850 | 1.400 | 1.584 | 1.767 |
| Körnung | mm | 0,5-2,6 | ca. 0,5 | ca. 0,45 | ca. 0,45 |
| Rütteldichte | kg/m³ | 460 | 535 | 479 | 355 |
| Aschegehalt | Gew.-% | 1,2 | 0,8 | 0,2 | 0,3 |

Als Zulauf zur Versuchsanlage dient Reinwasser, welchem aus einem Vorlagebehälter ein Gemisch von verschiedenen Spurenstoffen zudosiert wird. Diesbezüglich wurde Amidotrizoesäure, lopamidol, PFOS, DMS, MTBE sowie EDTA zudosiert. Tabelle 3 zeigt die mittlere Zulaufkonzentration der Spurenstoffe:

**Tabelle 3: Mittlere Zulaufkonzentration der Spurenstoffe**

| | **Zulaufkonzentration Mittelwert** |
|---|---|
| Amidotrizoesäure | 290 ng/l |
| lopamidol | 97 ng/l |
| PFOS | 260 ng/l |
| MTBE | 3,9 µg/l |
| N,N-Dimethylsulfamid (DMS) | 0,8 µg/l |

Für die einzelnen Spurenverunreinigungen werden die jeweiligen Durchbruchskurven ermittelt, wobei als jeweiliger Grenzwert für den Durchbruch eine relative Konzentration von 0,1 angenommen wird (d. h. Quotient aus Ablaufkonzentration und Zulaufkonzentration). Als Durchbruchszeit fungiert der spezifische Durchsatz (durchgesetzte Wassermenge pro kg Adsorbenz). Die nachfolgende Tabelle zeigt die diesbezüglich ermittelten Werte:

**Tabelle 4: Durchbruchverhalten der jeweiligen Spurenverunreinigungen (Durchbruch bei spezifischem Durchsatz [m³/kg]):**

| | Filter 1 | Filter 2 | Filter 4 | Filter 3 |
|---|---|---|---|---|
| Aktivkohlen | herkömmliche Formkohle | PBSAC I | PBSAC II | PBSAC III |
| Amidotrizoesäure | 10 | 25 | 40 | 225 |
| lopamidol | 17 | 54 | 82 | 264 |
| PFOS | 20 | 38 | 60 | >234 |
| MTBE | >5 | 15 | 37 | 35 |
| DMS | >5 | 7 | 8 | 7 |

Tabelle 4 verdeutlicht, dass die Aktivkohlen auf Basis von PBSAC I bis III mit den in Tabelle 2 angeführten Spezifikationen ein signifikant besseres Durchbruchverhalten als die herkömmliche Formkohle aufweisen. Derartige Aktivkohlen eignen sich in besonderer Weise für das erfindungsgemäße Verfahren bzw. zur Verwendung in der erfindungsgemäßen Aufreinigungs-Anlage bzw. der erfindungsgemäßen Gegenstrom-Filtervorrichtung. Zudem ist in Bezug auf die vorliegende Vergleichsuntersuchung anzuführen, dass das nach Beendigung der Aufreinigung entnommene Adsorptionsmaterial in Form der eingesetzten herkömmlichen Formkohle einen deutlichen Abrieb, einhergehend mit einer Schlammbildung, aufweist.

Die vorliegenden Untersuchungen zeigen somit insgesamt die hervorragenden Eigenschaften des erfindungsgemäßen Verfahrens sowie der entsprechenden erfindungsgemäßen Aufreinigungs-Anlage und Gegenstrom-Filtervorrichtung. Zudem wird die Überlegenheit der erfindungsgemäß bevorzugt eingesetzten Adsorbentien aufgezeigt.

### Bezugszeichenliste:

- A: Aufreinigungs-Anlage
- RV: Regenerations-Vorrichtung
- T1: Trocknungs- und/oder Entfeuchtungseinrichtung
- T2: Trocknungs- und/oder Entfeuchtungseinrichtung
- T3: Trocknungs- und/oder Entfeuchtungseinrichtung
- R: Regenerations- und/oder Desorptionseinrichtung
- V: Bevorratungsvorrichtungseinrichtung
- B: Befeuchtungseinrichtung
- AK: Adsorptionsmaterialtransport
- W: Wasserfluss und/oder -strom
- AW: zu behandelndes bzw. aufzureinigendes Wasser
- FI: aufgereinigtes Wasser bzw. Filtrat
- 1: Gegenstrom-Filtervorrichtung
- 2: Gehäuse
- 3: Adsorptions- und/oder Gegenstromzone
- 4: Wasser-Eintrittsbereich
- 5: Wasser-Austrittsbereich
- 6: Adsorptionsmaterial-Auslass
- 7: Adsorptionsmaterial-Einlass
- 8: Wasser-Zulauf
- 9: Wasser-Ablauf
- 10: erster Übergangsbereich
- 11: zweiter Übergangsbereich
- 12: Endabschnitt des Wasser-Eintrittsbereichs
- 13: Verteilereinrichtung
- 14: Trenneinrichtung
- 15: Schüttung des Adsorptionsmaterials
- H1: Höhe der Adsorptions- und/der Gegenstromzone
- D1: Durchmesser der Adsorptions- und/oder Gegenstromzone
- H2: Gesamthöhe der Gegenstrom-Filtereinrichtung
- D2: Durchmesser des Wasser-Eintrittsbereichs
- D3: Durchmesser des Wasser-Austrittsbereichs
- a: Querschnitt bzw. Querschnittsfläche der Adsorptions- und/oder Gegenstromzone
- b: Querschnitt bzw. Querschnittsfläche des Wasser-Eintrittsbereichs
- c: Querschnitt bzw. Querschnittsfläche des Wasser-Austrittsbereichs
- d: Längsachse der Gegenstrom-Filtervorrichtung

## Patentansprüche

1. Gegenstrom-Filtervorrichtung (1), insbesondere zur Behandlung und/oder Aufreinigung von Wasser zur adsorptiven Entfernung von anorganisch oder organisch basierten Verunreinigungen und zur insbesondere kontinuierlichen Aufnahme, Speicherung und Abgabe mindestens eines vorzugsweise partikulären Adsorptionsmaterials,
wobei die Gegenstrom-Filtervorrichtung (1) mindestens ein Gehäuse (2) aufweist, wobei das Gehäuse (2) mindestens eine Adsorptions- und/oder Gegenstromzone (3) sowie mindestens einen Wasser-Eintrittsbereich (4) und mindestens einen Wasser-Austrittsbereich (5) aufweist,
• wobei die Adsorptions- und/oder Gegenstromzone (3) strömungstechnisch zwischen dem Wasser-Eintrittsbereich (4) und dem Wasser-Austrittsbereich (5) angeordnet ist und/oder wobei die Adsorptions- und/oder Gegenstromzone (3) stromabwärts zu dem Wasser-Eintrittsbereich (4) und stromaufwärts zu dem Wasser-Austrittsbereich (5), bezogen auf die Strömungsrichtung des Wassers, angeordnet ist,
• wobei der Wasser-Eintrittsbereich (4) mindestens einen Wasser-Zulauf (8) und mindestens einen Adsorptionsmaterial-Auslass (6) und wobei der Wasser-Austrittsbereich (5) mindestens einen Wasser-Ablauf (9) und mindestens einen Adsorptionsmaterial-Einlass (7) aufweist,
• wobei das Verhältnis des Durchmessers (D1) der Adsorptions- und/oder Gegenstromzone (3) zum Durchmesser (D2) des Wasser-Eintrittsbereichs (4) [Verhältnis Durchmesser (D1) : Durchmesser (D2)] mindestens 1 : 1,1 beträgt und
wobei das Verhältnis des Durchmessers (D1) der Adsorptions- und/oder Gegenstromzone (3) zum Durchmesser (D3) des Wasser-Austrittsbereichs (5) [Verhältnis Durchmesser (D1) : Durchmesser (D3)] mindestens 1 : 1,1 beträgt, und
wobei die Gegenstrom-Filtervorrichtung (1) einen ersten Übergangsbereich (10) und einen zweiten Übergangsbereich (11) aufweist,
• wobei der erste Übergangsbereich (10) strömungstechnisch zwischen dem Wasser-Eintrittsbereich (4) und der Adsorptions- und/oder Gegenstromzone (3) angeordnet ist und/oder wobei der erste Übergangsbereich (10) stromabwärts zu dem Wasser-Eintrittsbereich (4) und stromaufwärts zu der Adsorptions- und/oder Gegenstromzone (3), bezogen auf die Strömungsrichtung des Wassers, angeordnet ist,
wobei der erste Übergangsbereich (10) konisch ausgebildet ist und sich ausgehend vom Wasser-Eintrittsbereich (4) mit dem Durchmesser (D2) in Richtung der Adsorptions- und/oder Gegenstromzone (3) mit dem Durchmesser (D1) verjüngt und
• wobei der zweite Übergangsbereich (11) strömungstechnisch zwischen dem Wasser-Austrittsbereich (5) und der Adsorptions- und/oder Gegenstromzone (3) angeordnet ist und/oder wobei der zweite Übergangsbereich (11) stromabwärts zu der Adsorptions- und/oder Gegenstromzone (3) und stromaufwärts zu dem Wasser-Austrittsbereich (5), bezogen auf die Strömungsrichtung des Wassers, angeordnet ist,
wobei der zweite Übergangsbereich (11) konisch ausgebildet ist und sich ausgehend vom Wasser-Austrittsbereich (5) mit dem Durchmesser (D3) in Richtung der Adsorptions- und/oder Gegenstromzone (3) mit dem Durchmesser (D1) verjüngt.

2. Gegenstrom-Filtervorrichtung nach Anspruch 1,
wobei im Betriebs- und/oder Anwendungszustand in der Adsorptions- und/oder Gegenstromzone (3) das zu behandelnde und/oder aufzureinigende Wasser und das Adsorptionsfiltermaterial im Gegenstrom und/oder entgegengesetzt zueinander geführt sind und/oder miteinander in Kontakt gebracht sind und/oder
wobei das Verhältnis der Höhe (H1) zum Durchmesser (D1) der Adsorptions- und/oder Gegenstromzone (3) [Verhältnis Höhe (H1) : Durchmesser (D1)] mindestens 1,5 : 1 beträgt und/oder wobei das Verhältnis der Höhe (H1) zum Durchmesser (D1) der Adsorptions- und/oder Gegenstromzone (3) [Verhältnis Höhe (H1) : Durchmesser (D1)] im Bereich von 1,5 : 1 bis 20 : 1 liegt und/oder
wobei das Verhältnis des Durchmessers (D1) der Adsorptions- und/oder Gegenstromzone (3) zum Durchmesser (D2) des Wasser-Eintrittsbereichs (4) [Verhältnis Durchmesser (D1) : Durchmesser (D2)] mindestens 1 : 1,25 beträgt und/oder wobei das Verhältnis des Durchmessers (D1) der Adsorptions- und/oder Gegenstromzone (3) zum Durchmesser (D2) des Wasser-Eintrittsbereichs (4) [Verhältnis Durchmesser (D1) : Durchmesser (D2)] im Bereich von 1 : 1,1 bis 1 : 5 liegt und/oder
wobei das Verhältnis des Durchmessers (D1) der Adsorptions- und/oder Gegenstromzone (3) zum Durchmesser (D3) des Wasser-Austrittsbereichs (5) [Verhältnis Durchmesser (D1) : Durchmesser (D3)] mindestens 1 : 1,25 beträgt und/oder wobei das Verhältnis des Durchmessers (D1) der Adsorptions- und/oder Gegenstromzone (3) zum Durchmesser (D3) des Wasser-Austrittsbereichs (5) [Verhältnis Durchmesser (D1) : Durchmesser (D3)] im Bereich von 1 : 1,1 bis 1 : 5 liegt.

3. Gegenstrom-Filtervorrichtung nach Anspruch 1 oder 2,
wobei die Adsorptions- und/oder Gegenstromzone (3) einen zumindest im Wesentlichen kreisförmigen und/oder kreisrunden Querschnitt (a) aufweist und/oder
wobei der Wasser-Eintrittsbereich (4) einen zumindest im Wesentlichen kreisförmigen und/oder kreisrunden Querschnitt (b) aufweist und/oder
wobei der Wasser-Austrittsbereich (5) einen zumindest im Wesentlichen kreisförmigen und/oder kreisrunden Querschnitt (c) aufweist und/oder
wobei die Querschnittsfläche (a) der Adsorptions- und/oder Gegenstromzone (3) kleiner als die Querschnittsfläche (b) des Wasser-Eintrittsbereichs (4) und/oder kleiner als die Querschnittsfläche (c) des Wasser-Austrittsbereichs (5) ist und/oder
wobei die Querschnittsfläche (b) des Wasser-Eintrittsbereichs (4) und die Querschnittsfläche (c) des Wasser-Austrittsbereichs (5) zumindest im Wesentlichen gleich groß ausgebildet sind und/oder
wobei die Gegenstrom-Filtervorrichtung (1), insbesondere der Wasser-Eintrittsbereich (4), mindestens eine Verteilereinrichtung (13) aufweist, insbesondere wobei die Verteilereinrichtung (13) strömungstechnisch zwischen dem Wasser-Zulauf (8) des Wasser-Eintrittsbereichs (4) und der Adsorptions- und/oder Gegenstromzone (3) und/oder zwischen dem Wasser-Zulauf (8) des Wasser-Eintrittsbereichs (4) und dem ersten Übergangsbereich (10) angeordnet ist und/oder insbesondere wobei die Verteilereinrichtung (13) stromabwärts zu dem Wasser-Zulauf (8) und/oder stromabwärts zu dem Adsorptionsmaterial-Auslass (6), vorzugsweise stromabwärts zu dem Wasser-Zulauf (8) und dem Adsorptionsmaterial-Auslass (6), angeordnet ist, bezogen auf die Strömungsrichtung des Wassers.

4. Gegenstrom-Filtervorrichtung nach einem der vorangehenden Ansprüche,
wobei der Adsorptionsmaterial-Auslass (6) stromabwärts zu dem Wasser-Zulauf (8) des Wasser-Eintrittsbereichs (4) angeordnet ist und/oder wobei der Adsorptionsmaterial-Auslass (6) in einem Endabschnitt des Wasser-Eintrittsbereichs (4) angeordnet ist, bezogen auf die Transportrichtung des Adsorptionsmaterials, und/oder wobei der Adsorptionsmaterial-Auslass (6) an einem ersten Ende der Gegenstrom-Filtervorrichtung (1) angeordnet ist und/oder
wobei der Adsorptionsmaterial-Einlass (7) stromaufwärts zu dem Wasser-Ablauf (9) des Wasser-Austrittsbereichs (4) angeordnet ist und/oder wobei der Wasser-Ablauf (9) des Wasser-Austrittsbereichs (4) stromabwärts zu dem Adsorptionsmaterial-Einlass (7) angeordnet ist, jeweils bezogen auf die Strömungsrichtung des Wassers, und/oder
wobei die Gegenstrom-Filtervorrichtung (1), insbesondere der Wasser-Austrittsbereich (5), mindestens eine Trenneinrichtung (14) aufweist, insbesondere wobei die Trenneinrichtung (14) strömungstechnisch zwischen dem Wasser-Ablauf (9) des Wasser-Austrittsbereichs (5) und der Adsorptions- und/oder Gegenstromzone (3) und/oder zwischen dem Wasser-Ablauf (9) des Wasser-Austrittsbereichs (5) und dem zweiten Übergangsbereich (11) angeordnet ist und/oder insbesondere wobei die Trenneinrichtung (14) stromaufwärts zu dem Wasser-Ablauf (9) und/oder stromabwärts zu dem Adsorptionsmaterial-Einlass (7), vorzugsweise stromaufwärts zu dem Wasser-Ablauf (9) und stromabwärts zu dem Adsorptionsmaterial-Einlass (7), angeordnet ist, jeweils bezogen auf die Strömungsrichtung des Wassers, und/oder insbesondere wobei die Trenneinrichtung (14) strömungstechnisch zwischen dem Wasser-Ablauf (9) und dem Adsorptionsmittel-Einlass (7) angeordnet ist, und/oder
wobei das partikuläre Adsorptionsmaterial in der Gegenstrom-Filtervorrichtung (1), insbesondere in der Adsorptions- und/oder Gegenstromzone (3) in Form einer Schüttung (15), insbesondere in Form einer losen Schüttung, vorliegt.

5. Aufreinigungs-Anlage (A), insbesondere zur Behandlung und/oder Aufreinigung von Wasser (AW) zur adsorptiven Entfernung von anorganisch oder organisch basierten Verunreinigungen, wobei die Anlage (A) aufweist:
- mindestens eine Gegenstrom-Filtervorrichtung (1), wie in einem der vorangehenden Ansprüche definiert, zur Behandlung und/oder Aufreinigung von Wasser (AW) und zur insbesondere kontinuierlichen Aufnahme, Speicherung und Abgabe mindestens eines vorzugsweise partikulären Adsorptionsmaterials, insbesondere wie in Anspruch 10 oder 11 definiert, insbesondere wobei im Betriebs- und/oder Anwendungszustand das zu behandelnde und/oder aufzureinigende Wasser (AW) und das Adsorptionsmaterial in der Gegenstrom-Filtervorrichtung (1) im Gegenstrom und/oder entgegengesetzt zueinander geführt sind,
wobei die Gegenstrom-Filtervorrichtung (1) mindestens ein Gehäuse (2) aufweist, wobei das Gehäuse (2) mindestens eine Adsorptions- und/oder Gegenstromzone (3) sowie mindestens einen Wasser-Eintrittsbereich (4) und mindestens einen Wasser-Austrittsbereich (5) aufweist,
wobei die Adsorptions- und/oder Gegenstromzone (3) strömungstechnisch zwischen dem Wasser-Eintrittsbereich (4) und dem Wasser-Austrittsbereich (5) angeordnet ist und/oder wobei die Adsorptions- und/oder Gegenstromzone (3) stromabwärts zu dem Wasser-Eintrittsbereich (4) und stromaufwärts zu dem Wasser-Austrittsbereich (5), bezogen auf die Strömungsrichtung des Wassers, angeordnet ist und
wobei der Wasser-Eintrittsbereich (4) mindestens einen Adsorptionsmaterial-Auslass (6) und wobei der Wasser-Austrittsbereich (5) mindestens einen Adsorptionsmaterial-Einlass (7) aufweist,
- gegebenenfalls mindestens eine Trocknungs- und/oder Entfeuchtungseinrichtung (T1, T2, T3) zur Trocknung und/oder Entfeuchtung von mit den Verunreinigungen beladenem Adsorptionsmaterial, insbesondere wobei die Trocknungs- und/oder Entfeuchtungseinrichtung (T1, T2, T3) stromabwärts zu der Gegenstrom-Filtervorrichtung (1) angeordnet ist, bezogen auf die Transportrichtung des Adsorptionsmaterials,
- mindestens eine Regenerations- und/oder Desorptionseinrichtung (R), insbesondere zur Regeneration von mit den Verunreinigungen beladenem Adsorptionsmaterial und/oder zur Bereitstellung von regeneriertem und/oder unbeladenem und/oder frischem Adsorptionsmaterial, insbesondere wobei die Regenerations- und/oder Desorptionseinrichtung (R) stromabwärts zu der Gegenstrom-Filtervorrichtung (1) und/oder stromabwärts zu der Trocknungs- und/oder Entfeuchtungseinrichtung (T1, T2, T3) angeordnet ist, jeweils bezogen auf die Transportrichtung des Adsorptionsmaterials,
- gegebenenfalls mindestens eine Befeuchtungseinrichtung (B), insbesondere zur Befeuchtung von regeneriertem und/oder unbeladenem und/oder frischem Adsorptionsmaterial, wobei die Befeuchtungseinrichtung (B) stromabwärts zu der Regenerations- und/oder Desorptionseinrichtung (R) angeordnet ist, bezogen auf die Transportrichtung des Adsorptionsmaterials.

6. Aufreinigungs-Anlage nach Anspruch 5,
wobei die Trocknungs- und/oder Entfeuchtungseinrichtung (T1, T2, T3) ausgewählt ist aus der Gruppe von Bandtrocknern, Wirbelschichttrocknern und Schrägklärern und deren Kombinationen und/oder wobei die Trocknungs- und/oder Entfeuchtungseinrichtung (T1, T2, T3) mindestens eine Haupttrocknungs- und/oder Hauptentfeuchtungseinrichtung (T2, T3), insbesondere ausgewählt aus Bandtrocknern und/oder Wirbelschichttrocknern, und gegebenenfalls mindestens eine Vortrocknungs- und/oder Vorentfeuchtungseinrichtung (T1, T2), insbesondere ausgewählt aus Schrägklärern und Bandtrocknern, umfasst, insbesondere wobei die Vortrocknungs- und/oder Vorentfeuchtungseinrichtung (T1, T2) stromaufwärts zu der Haupttrocknungs- und/oder Hauptentfeuchtungseinrichtung (T2, T3) angeordnet ist, bezogen auf die Transportrichtung des Adsorptionsmaterials, und/oder
wobei die Regenerations- und/oder Desorptionseinrichtung (R) ausgewählt ist aus der Gruppe von Drehrohröfen, insbesondere indirekt beheizten Drehrohröfen; Bandöfen, insbesondere indirekt beheizten Bandöfen; Wirbelschichttrocknern, insbesondere Hochtemperatur-Wirbelschichttrocknern; und Mikrowellenöfen und/oder wobei die Befeuchtungseinrichtung (B) ausgewählt ist aus der Gruppe von Rührkesseln, Sprühtürmen, Bandbefeuchtern, (Wasser-)Strahlpumpen, Schlauchpumpen und deren Kombinationen und/oder
wobei die Aufreinigungs-Anlage (A) außerdem mindestens eine Bevorratungseinrichtung (V) aufweist, insbesondere wobei die Bevorratungseinrichtung (V) stromabwärts zu der Regenerations- und/oder Desorptionseinrichtung (R) und/oder stromaufwärts zu der Befeuchtungseinrichtung (B) angeordnet ist, bezogen auf die Transportrichtung des Adsorptionsmaterials, und/oder
wobei die Aufreinigungs-Anlage (A) im Betriebs- und/oder Anwendungszustand einen Wasserfluss und/oder -strom (W) insbesondere mit einem in die Gegenstrom-Filtervorrichtung (1) eintretenden Fluss und/oder Strom von zu behandelndem und/oder aufzureinigendem Wasser (AW) und insbesondere mit einem aus der Gegenstrom-Filtervorrichtung (1) austretenden Fluss und/oder Strom von aufgereinigtem Wasser und/oder Filtrat (FI) aufweist und/oder ermöglicht und/oder wobei die Aufreinigungs-Anlage (A) im Betriebs- und/oder Anwendungszustand einen insbesondere zyklischen Adsorptionsmitteltransport (AK) aufweist und/oder ermöglicht, insbesondere wobei der Wasserfluss und/oder -strom (W) und der Adsorptionsmitteltransport (AK) in der Gegenstrom-Filtervorrichtung (1) im Gegenstrom zueinander verlaufen und/oder zueinander gegenläufig sind.

7. Verfahren zur Behandlung und/oder Aufreinigung von Wasser zur adsorptiven Entfernung von anorganisch oder organisch basierten Verunreinigungen, wobei in einer Gegenstrom-Filtervorrichtung, wie in einem der Ansprüche 1 bis 4 definiert, das zu behandelnde und/oder aufzureinigende Wasser einerseits und ein insbesondere partikuläres Adsorptionsmaterial andererseits im Gegenstrom zueinander geführt werden derart, dass das zu behandelnde und/oder aufzureinigende Wasser durch eine in der Gegenstrom-Filtervorrichtung vorhandene Schüttung des Adsorptionsmaterials zur adsorptiven Entfernung der Verunreinigungen geleitet wird und die Schüttung durch Entfernen und Zuführen des Adsorptionsmaterials im Gegenstrom zu dem zu behandelnden Wasser ausgetauscht und regeneriert wird.

8. Verfahren nach Anspruch 7,
wobei das Adsorptionsmaterial kontinuierlich in die Gegenstrom-Filtervorrichtung eingebracht wird und/oder wobei das Adsorptionsmaterial kontinuierlich aus der Gegenstrom-Filtervorrichtung entfernt wird und/oder
wobei das Adsorptionsmaterial, insbesondere das aus der Gegenstrom-Filtervorrichtung entfernte und/oder mit den Verunreinigungen beladene Adsorptionsmaterial, einer kontinuierlichen und/oder thermischen Regenerierung und/oder Rezyklierung, insbesondere unter Entfernung und/oder Desorption der Verunreinigungen, zugeführt und/oder unterzogen wird und/oder wobei das regenerierte und/oder ungebrauchte Adsorptionsmaterial kontinuierlich wieder in die Gegenstrom-Filterkolonne eingebracht wird und/oder wobei das zu behandelnde und/oder aufzureinigende Wasser in den Wasser-Eintrittsbereich in die Gegenstrom-Filtervorrichtung kontinuierlich eingebracht wird und/oder wobei das behandelte und/oder aufgereinigte Wasser, insbesondere Filtrat, in dem Wasser-Austrittsbereich aus der Gegenstrom-Filtervorrichtung kontinuierlich entfernt wird und/oder
wobei das Adsorptionsmaterial in den Wasser-Austrittsbereich in die Gegenstrom-Filtervorrichtung kontinuierlich eingebracht wird und/oder wobei das Adsorptionsmaterial in dem Wasser-Austrittsbereich aus der Gegenstrom-Filtervorrichtung kontinuierlich entfernt wird und/oder
wobei das zu behandelnde und/oder aufzureinigende Wasser einerseits und das Adsorptionsmaterial andererseits in der Gegenstrom-Filtervorrichtung, insbesondere in der Adsorptions- und/oder Gegenstromzone, zumindest im Wesentlichen zueinander entgegengesetzte Strömungsrichtungen aufweisen und/oder wobei das zu behandelnde und/oder aufzureinigende Wasser einerseits und das Adsorptionsmaterial andererseits im Gegenstrom zueinander in der Gegenstrom-Filtervorrichtung, insbesondere in der Adsorptions- und/oder Gegenstromzone, strömen und/oder fließen und/oder miteinander in Kontakt gebracht werden.

9. Verfahren nach Anspruch 7 oder 8,
wobei das in die Gegenstrom-Filterkolonne eingebrachte zu behandelnde und/oder aufzureinigende Wasser durch die stromabwärts zu dem Wasser-Eintrittsbereich der Gegenstrom-Filtervorrichtung angeordnete Adsorptions- und/oder Gegenstromzone der Gegenstrom-Filtervorrichtung geführt wird, bezogen auf die Strömungsrichtung des Wassers, und/oder
wobei in der Adsorptions- und/oder Gegenstromstromzone der GegenstromFiltervorrichtung eine Leerrohrgeschwindigkeit und/oder Filtergeschwindigkeit, berechnet als Quotient aus Volumenstrom [m³/h] und Querschnittsfläche [m²] und bezogen auf das zu behandelnde und/oder aufzureinigende Wasser, von mindestens 10 m/h eingestellt wird und/oder
wobei das Adsorptionsmaterial zumindest im Wesentlichen kontinuierlich der Gegenstrom-Filtervorrichtung zugeführt wird und/oder wobei das Adsorptionsmaterial zumindest im Wesentlichen kontinuierlich durch die Gegenstrom-Filtervorrichtung geführt wird und/oder wobei das Adsorptionsmaterial zumindest im Wesentlichen kontinuierlich der Gegenstrom-Filtervorrichtung entnommen wird und/oder
wobei das in die Gegenstrom-Filterkolonne eingebrachte Adsorptionsmaterial durch eine stromabwärts zu dem Wasser-Austrittsbereich der Gegenstrom-Filtervorrichtung angeordnete Adsorptions- und/oder Gegenstromzone der Gegenstrom-Filtervorrichtung geführt wird, bezogen auf die Strömungsrichtung des Adsorptionsmaterials, und/oder wobei das Adsorptionsmaterial in der Gegenstrom-Filtervorrichtung, insbesondere in der Adsorptions- und/oder Gegenstromzone der Gegenstrom-Filtervorrichtung, in Form einer insbesondere losen Schüttung vorliegt und/oder
wobei das Adsorptionsmaterial nach Durchtritt und/oder Durchströmen der Adsorptions- und/oder Gegenstromzone der Gegenstrom-Filtervorrichtung in dem stromabwärts zu dem Wasser-Austrittsbereich der Gegenstrom-Filtervorrichtung und/oder stromabwärts zu der Adsorptions- und/oder Gegenstromzone der Gegenstrom-Filtervorrichtung, bezogen auf die Strömungsrichtung des Adsorptionsmaterials, angeordneten Wasser-Eintrittsbereich den Adsorptionsmaterial-Auslass aus der Gegenstrom-Filtervorrichtung entfernt wird.

10. Verfahren nach einem der Ansprüche 7 bis 9,
wobei das Adsorptionsmaterial ausgewählt wird aus der Gruppe von kornförmigen, insbesondere kugelförmigen Adsorptionsmaterialien und/oder
wobei das Adsorptionsmaterial ausgewählt wird aus der Gruppe von
(i) Aktivkohle, insbesondere kornförmiger Aktivkohle, vorzugsweise kugelförmiger Aktivkohle und/oder insbesondere Aktivkohle in Form von PBSAC (*Polymer-based Spherical Activated Carbon*);
(ii) Zeolithen, insbesondere natürlichen und/oder synthetischen Zeolithen;
(iii) Molekularsieben, insbesondere zeolithischen Molekularsieben, synthetischen Molekularsieben und/oder insbesondere synthetischen Molekularsieben auf Basis von Kohlenstoff, Oxiden und/oder Gläsern;
(iv) Metalloxid- und/oder Metallpartikeln;
(v) Ionenaustauscherharzen, insbesondere polydispersen und/oder monodispersen Kationen- und/oder Anionenaustauschern, insbesondere vom Geltyp und/oder vom makroporösen Typ;
(vi) anorganischen Oxiden, insbesondere Siliciumdioxiden, Silicagelen und/oder Aluminiumoxiden;
(vii) porösen organischen Polymeren und/oder porösen organisch-anorganischen Hybridpolymeren und/oder porösen organisch-anorganischen Hybridpolymeren und/oder metallorganischen Gerüstmaterialien, insbesondere MOFs (*Metall Organic Framework*), COFs (*Covalent Organic Framework*)*,* ZIFs (*Zeolithe Imidazolate Framework*)*,* POMs (*Polymer Organic Material*) und/oder OFCs;
(viii) mineralischen Granulaten;
(ix) Klathraten; sowie
(x) deren Mischungen und/oder Kombinationen; und/oder
wobei das Adsorptionsmaterial aus Aktivkohle, insbesondere aus kornförmiger, vorzugsweise kugelförmiger Aktivkohle, gebildet wird und/oder
wobei das Adsorptionsmaterial, insbesondere die vorzugsweise kornförmige Aktivkohle, mittlere Teilchengrößen, insbesondere mittlere Teilchendurchmesser (D50), im Bereich von 0,01 bis 2 mm aufweist und/oder
wobei das Adsorptionsmaterial, insbesondere die vorzugsweise kornförmige Aktivkohle, eine Abriebfestigkeit von mindestens 90 % aufweist und/oder
wobei das Adsorptionsmaterial, insbesondere die vorzugsweise kornförmige Aktivkohle, eine Druck- bzw. Berstfestigkeit (Gewichtsbelastbarkeit) pro Adsorptionspartikel und/oder -teilchen, insbesondere pro Aktivkohlekügelchen, von mindestens 5 Newton aufweist und/oder wobei das Adsorptionsmaterial, insbesondere die vorzugsweise kornförmige Aktivkohle, eine Druck- bzw. Berstfestigkeit (Gewichtsbelastbarkeit) pro Adsorptionspartikel und/oder -teilchen, insbesondere pro Aktivkohlekügelchen, im Bereich von 10 bis 50 Newton aufweist.

11. Verfahren nach einem der Ansprüche 7 bis 10,
wobei das Adsorptionsmaterial, insbesondere die vorzugsweise kornförmige Aktivkohle, eine spezifische Oberfläche (BET-Oberfläche) von mindestens 500 m²/g aufweist und/oder wobei das partikuläre Adsorptionsmaterial (A), insbesondere die vorzugsweise kornförmige Aktivkohle, eine spezifische Oberfläche (BET-Oberfläche) im Bereich von 500 bis 4.000 m²/g aufweist und/oder
wobei das Adsorptionsmaterial, insbesondere die vorzugsweise kornförmige Aktivkohle, ein Gesamtporenvolumen nach Gurvich von mindestens 0,50 cm³/g aufweist und/oder wobei das Adsorptionsmaterial, insbesondere die vorzugsweise kornförmige Aktivkohle, ein Gesamtporenvolumen nach Gurvich im Bereich von 0,50 bis 2,0 cm³/g aufweist und/oder
wobei das Adsorptionsmaterial, insbesondere die vorzugsweise kornförmige Aktivkohle, ein spezifisches Gesamtporenvolumen im Bereich von 0,01 bis 4,0 cm³/g aufweist, insbesondere wobei der Anteil an Poren mit Porendurchmessern s 75 A, mindestens 65 % beträgt und/oder wobei das Adsorptionsmaterial, insbesondere die vorzugsweise kornförmige Aktivkohle, bezogen auf das Gesamtporenvolumen, insbesondere auf das Gesamtporenvolumen nach Gurvich, einen Anteil an Mikroporen, insbesondere an Mikroporen mit Porendurchmessern von ≤ 30 A von mindestens 70 % aufweist und/oder wobei Adsorptionsmaterial, insbesondere die vorzugsweise kornförmige Aktivkohle, eine Schüttdichte (*Bulk Density*), im Bereich von 250 bis 700 g/l aufweist.

12. Verfahren nach einem der Ansprüche 7 bis 11, wobei das aus der Gegenstrom-Filtervorrichtung entfernte Adsorptionsmaterial, insbesondere das mit den Verunreinigungen beladene Adsorptionsmaterial, getrocknet wird und/oder einer kontinuierlichen und/oder thermischen Regenerierung und/oder Rezyklierung unterzogen und gegebenenfalls nachfolgend erneut befeuchtet wird, insbesondere unter Verwendung einer Regenerationsvorrichtung, welche umfasst:
- gegebenenfalls mindestens eine Trocknungs- und/oder Entfeuchtungseinrichtung zur Trocknung und/oder Entfeuchtung des aus der Gegenstrom-Filtervorrichtung entfernten Adsorptionsmaterials und/oder des mit den Verunreinigungen beladenen Adsorptionsmaterials,
- mindestens eine Regenerations- und/oder Desorptionseinrichtung, insbesondere zur thermischen Regeneration des aus der Gegenstrom-Filtervorrichtung entfernten Adsorptionsmaterials und/oder des mit den Verunreinigungen beladenen Adsorptionsmaterials und/oder zur Bereitstellung von regeneriertem und/oder ungebrauchtem Adsorptionsmaterial,
- gegebenenfalls mindestens eine Befeuchtungseinrichtung, insbesondere zur Befeuchtung des regenerierten und/oder ungebrauchten Adsorptionsmaterials.

13. Verfahren nach einem der Ansprüche 7 bis 12, wobei das aus der Gegenstrom-Filtervorrichtung entfernte Adsorptionsmaterial und/oder das mit den Verunreinigungen beladene Adsorptionsmaterial insbesondere unter Verwendung der Trocknungs- und/oder Entfeuchtungseinrichtung getrocknet wird, wobei der Restfeuchtigkeitsgehalt des getrockneten Adsorptionsmaterials auf einen Wert von höchstens 1 Gew.-%, bezogen auf das Adsorptionsmaterial, eingestellt wird.

14. Verfahren nach einem der Ansprüche 7 bis 13,
wobei das aus der Gegenstrom-Filtervorrichtung entfernte Adsorptionsmaterial und/oder das mit den Verunreinigungen beladene Adsorptionsmaterial, insbesondere nach durchgeführter Trocknung, vorzugsweise wie in Anspruch 12 oder 13 definiert, einer thermischen Regeneration und/oder Desorption, insbesondere unter Freisetzung und/oder Desorption der in der Aktivkohle adsorbierten Verunreinigungen, insbesondere unter Verwendung der Regenerations- und/oder Desorptionseinrichtung, unterzogen wird und/oder
wobei das regenerierte und/oder ungebrauchte Adsorptionsmaterial insbesondere unter Verwendung der Befeuchtungseinrichtung befeuchtet und/oder in Wasser eingebracht wird und/oder wobei das regenerierte und/oder ungebrauchte und vorzugsweise befeuchtete Adsorptionsmaterial insbesondere unter Druckbeaufschlagung in die Gegenstrom-Filtervorrichtung eingebracht wird und/oder
wobei das Verfahren mit einem Umlauffaktor, berechnet als Quotient aus Menge des sich in der Regenerierung und/oder Rezyklierung, insbesondere in der Regenerations-vorrichtung, befindlichen Adsorptionsmaterials [kg] und Menge des sich in der Gegenstrom-Filtervorrichtung befindlichen Adsorptionsmaterials [kg], im Bereich von 0,1 bis 100 durchgeführt wird.

15. Verwendung einer Aufreinigungs-Anlage, wie in einem der Ansprüche 5 oder 6 definiert, und/oder einer Gegenstrom-Filtervorrichtung, wie in einem der Ansprüche 1 bis 4 definiert, und/oder eines Adsorptionsmaterials, wie in Anspruch 10 oder 11 definiert, in einem Verfahren zur Behandlung und/oder Aufreinigung von Wasser zur adsorptiven Entfernung von anorganisch oder organisch basierten Verunreinigungen, wie in einem der Ansprüche 7 bis 14 definiert.

## Claims

1. Counter-flow filtration device (1), particularly for the treatment and/or purification of water for the adsorptive removal of inorganic or organic based contaminants and, in particular, continuous receiving, storing and delivery at least a preferably particulate adsorption material,
- wherein the counter-flow filtration device (1) comprises at least a housing (2), wherein the housing (2) comprises at least one adsorption and/or counter-flow zone (3) as well as at least one water inlet region (4) and at least one water outlet region (5),
- wherein the adsorption and/or counter-flow zone (3) is arranged fluidically between the water inlet region (4) and the water outlet region (5) and/or the adsorption and/or counter-flowzone (3) is arranged downstream of the water inlet region (4) and upstream of the water outlet region (5) relative to the direction of flow of the water,
- wherein the water inlet region (4) comprises at least one water inlet (8) and at least one adsorption material outlet (6) and wherein the water outlet region (5) comprises at least one water outlet (9) and at least one adsorption material inlet (7),
- wherein the ratio of the diameter (D1) of the adsorption and/or counter-flowzone (3) to the diameter (D2) of the water inlet region (4) [ratio of diameter (D1) : diameter (D2)] is at least 1 : 1.1, and
- wherein the ratio of the diameter (D1) of the adsorption and/or counter-flowzone (3) to the diameter (D3) of the water outlet region (5) [ratio of diameter (D1) : diameter (D3)] is at least 1: 1.1, and
- wherein the counter-flow filtration device (1) comprises a first transition region (10) and a second transition region (11),
- wherein the first transition region (10) is arranged fluidically between the water inlet region (4) and the adsorption and/or counter-flow zone (3) and/or wherein the first transition region (10) is arranged downstream of the water inlet region (4) and upstream of the adsorption and/or counter-flow zone (3), relative to the direction of flow of the water,
- wherein the first transition region (10), starting from the water inlet region (4) with the diameter (D2), is tapered to the diameter (D1) in the direction of the adsorption and/or counter-flow zone (3), and
- wherein the second transition region (11) is arranged fluidically between the water-outlet region (5) and the adsorption and/or counter-flow zone (3) and/or wherein the second transition region (11) is arranged downstream of the adsorption and/or counter-flow zone (3) and upstream of the water outlet region (5) with respect to the direction of flow of the water,
- wherein the second transition region (11), starting from the water outlet region (5) with the diameter (D3) is tapered to the diameter (D1) in the direction of the adsorption and/or counter-flow zone (3).

2. Counter-flow filtration device according to claim 1,
- wherein the water to be treated and/or purified and the adsorption filter are in the counter-flow and/or flow opposite each other and/or are brought into contact with each other in the adsorption and/or counter-flow zone (3) in the operation and/or application state, and/or
- wherein the ratio of the height (H1) to the diameter (D1) of the adsorption and/or counter-flow zone (3) [ratio of height (H1) : diameter (D1)] is at least 1.5 : 1 and/or the ratio of height (H1) to the diameter (D1) of the adsorption and/or counter-flow zone (3) [ratio of height (H1) : diameter (D1)] lies the range from 1.5: 1 to 20 : 1, and/or
- wherein the ratio of the diameter (D1) of the adsorption and/or counter-flow zone (3) to the diameter (D2) of the water inlet region (4) [ratio of diameter (D1) : diameter (D2)] is at least 1 : 1.25 and/or wherein the ratio of the diameter (D1) of the adsorption and/or counter-flow zone (3) to the diameter (D2) of the water inlet region (4) [ratio of diameter (D1) : diameter (D2)] lies in the range of 1 : 1.1 to 1 : 5, and/or
- wherein the ratio of the diameter (D1) of the adsorption and/or counter-flow zone (3) to the diameter (D3) of the water outlet region (5) [ratio of diameter (D1) : diameter (D3)] is at least 1 : 1.25 and/or wherein the ratio of the diameter (D1) of the adsorption and/or counter-flow zone (3) to the diameter (D3) of the water outlet region (5) [ratio of diameter (D1) : diameter (D3)] lies in the range of 1 : 1.1 to 1 : 5.

3. Counter-flow filtration device according to claim 1 or 2,
- wherein the adsorption and/or counter-flow zone (3) has an at least substantially circular and/or circular cross-section (a), and/or
- wherein the water inlet region (4) has an at least substantially circular and/or circular cross-section (b), and/or
- wherein the water outlet region (5) has an at least substantially circular and/or circular cross-section (c), and/or
wherein the cross-sectional region (a) of the adsorption and/or counter-flow zone (3) is smaller than the cross-sectional region (b) of the water inlet region (4) and/or smaller than the cross-sectional region (c) of the water outlet region (5), and/or
- wherein the cross-sectional region (b) of the water inlet region (4) and the cross-sectional region (c) of the water outlet region (5) are at least substantially the same size, and/or
- wherein the counter-flow filtration device (1), in particular the water inlet region (4), comprises at least a distributor device (13), in particular wherein the distributor device (13) is arranged fluidically between the water inlet (8) of the water inlet region (4) and the adsorption and/or counter-flow zone (3) and/or between the water inlet (8) of the water inlet region (4) and the first transition region (10) and/or in particular wherein the distributor device (13) is arranged downstream of the water inlet (8) and/or downstream of the adsorption material outlet (6), preferably downstream of the water inlet (8) and the adsorption material outlet (6), relative to the direction of flow of the water.

4. Counter-flow filtration device according to one of the preceding claims,
- wherein the adsorption material outlet (6) is arranged downstream of the water inlet (8) of the water inlet region (4) and/or wherein the adsorption material outlet (6) is arranged in an end section of the water inlet region (4), with respect to the transport direction of the adsorption material, and/or wherein the adsorption material outlet (6) is arranged at a first end of the counter-flow filtration device (1), and/or
- wherein the adsorption material inlet (7) is arranged upstream of the water outlet (9) of the water outlet region (4) and/or wherein the water outlet (9) of the water outlet region (4) is arranged downstream of the adsorption material inlet (7), in each case relative to the flow direction of the water, and/or
- wherein the counter-flow filtration device (1), in particular the water outlet region (5), comprises at least one separation means (14), in particular wherein the separationdevice (14) is arranged fluidically between the water-outlet (9) of the water outlet region (5) and the adsorption and/or counter-flow zone (3) and/or between the water outlet (9) of the water outlet region (5) and the second transition region (11), and/or in particular wherein the separation means (14) is arranged upstream of the water outlet (9) and/or downstream of the adsorption material inlet (7), preferably upstream of the water outlet (9) and downstream of the adsorption material inlet (7), in each case relative to the direction of flow of the water, and/or in particular wherein the separation means (14) is arranged fluidically between the water outlet (9) and the adsorption material inlet (7), and/or
- wherein the particulate adsorption material is provided in the counter-flow filtration device (1), particularly in the adsorption and/or counter-flow zone (3) in the form of a bed (15), in particular in the form of a loose bed.

5. Purification plant (A), in particular for the treatment and/or purification of water (AW) for adsorptive removal of inorganic or organic based contaminants, wherein the plant (A) comprises:
- at least one counter-flow filtration device (1) as defined in any of the preceding claims, for the treatment and/or purification of water (AW) and in particular the continuous receiving, storing and delivery of at least one preferably particulate adsorption material, in particular as defined in claim 10 or 11, in particular wherein the water (AW) to be treated and/or purified and the adsorption material in the counter-flow filtration device (1) are fed in the counter-flow and/or opposite to each other, in the operation and/or application state,
- wherein the counter-flow filtration device (1) comprises at least a housing (2), wherein the housing (2) comprises at least one adsorption and/or counter-flow zone (3) and at least one water inlet region (4) and at least one water outlet region (5),
- wherein the adsorption and/or counter-flow zone (3) is arrangedfluidically between the water inlet region (4) and the water outlet region (5) and/or the adsorption and/or counter-flow zone (3) is arranged downstream of the water-inlet region (4) and upstream of the water outlet region (5), relative to the direction of flow of the water, and
- wherein the water-inlet region (4) comprises at least one adsorption material outlet (6) and wherein the water outlet region (5) comprises at least one adsorption material inlet (7),
- optionally at least one drying and/or dehumidifying device (T1, T2, T3) for drying and/or dehumidification of the impurity-laden adsorption material, in particular wherein the drying and/or dehumidifying device (T1, T2, T3) is arranged downstream of the counter-flow filtration device (1), relative to the direction of transport of the adsorption material,
- at least one regeneration and/or desorption device (R), in particular for the regeneration of impurity-laden adsorption material and/or to provide regenerated and/or unladen and/or fresh adsorption material, in particular wherein the regeneration and/or desorption device (R) is arranged downstream of the counter-flow filtration device (1) and/or downstream of the drying and/or dehumidifying device (T1, T2, T3), in each case relative to the transport direction of the adsorption material,
- optionally at least one moisturizing device (B), in particular for the humidification of regenerated and/or unladen and/or fresh adsorption material, wherein the moisturizing device (B) is arranged downstream of the regeneration and/or desorption device (R), relative to the direction of transport of the adsorption material.

6. Purification plant according to claim 5,
- wherein the drying and/or dehumidifying device (T1, T2, T3) is selected from the group consisting of belt dryers, fluidized bed dryers and lamella separators and combinations thereof and/or wherein the drying and/or dehumidifying device (T1, T2, T3) comprises at least one main drying and/or dehumidifying device (T2, T3), in particular selected from belt dryers and/or fluidized bed dryers, and optionally at least one pre-drying and/or pre-dehumidifying device (T1, T2), in particular selected from lamella separators and belt dryers, in particular wherein the pre-drying and/or pre-dehumidifying device (T1, T2) is arranged upstream of the main drying and/or dehumidifying device (T2, T3), relative to the direction of transport of the adsorption material, and/or
- wherein the regeneration and/or desorption device (R) is selected from the group of rotary kilns, particularly indirectly-heated rotary kilns; belt furnaces, in particular indirectly-heated belt furnaces; fluidized bed dryers, in particular high-temperature fluidized bed dryers; and microwave ovens, and/or
- wherein the moisturizing device (B) is selected from the group of stirrer tanks, spray towers, belt moisturizers, (water) jet pumps, peristaltic pumps, and combinations thereof, and/or
- wherein the purification plant (A) further comprises at least a storage device (V), in particular wherein the storage device (V) is arranged downstream of the regeneration and/or desorption device (R) and/or upstream of the moisturizing device (B), relative to the transport direction of the adsorption material, and/or
- wherein,in the operation and/or application state, the purification plant (A) comprises and/or enabling a water flow and/or stream (W), in particular of a flow and/or stream of water to be treated and/or purified (AW) entering the counter-flow filtration device (1), and in particularof a flow and/or stream of purified water and/or filtrate (FI) exiting the counter-flow filtration device (1), and/or wherein the purification plant (A) comprises and/or enables a cyclic particulate adsorption material transport (AK) in the operating and/or application state, in particular wherein the flow and/or stream of water (W) and the adsorption material transport (AK) flow in the counter-flow filtration device (1) in counter-flow to each other and/or in opposite directions to each other.

7. Method for the treatment and/or purification of water for the adsorptive removal of inorganic or organic-based impurities, wherein,in a counter-flow filtration device as defined in any one of the claims 1 to 4, the water to be treated and/or purified, on the one hand, and a particular particulate adsorption material, on the other hand, are conveyed in counter-flow to one another in such a way that the water to be treated and/or purified is passed through an adsorptionmaterial bed provided in the counter-flow filtration device for the adsorptive removal of impurities, and wherein the bed is exchanged and regenerated by removing and feeding the adsorption material in counter-flow to the water to be treated.

8. Method according to claim 7,
- wherein the adsorption material is continuously introduced into the counter-flow filtration device and/or wherein the adsorption material is continuously removed from the counter-flow filtration device and/or
- wherein the adsorption material, in particular that removed from the counter-flow filtration device and/or with the impurity-laden adsorption material, is supplied to and/or subjected to continuous and/or thermal regeneration and/or recycling, in particular with removal and/or desorption of the impurities and/or wherein the regenerated and/or unused adsorption material is continuously fed back into the counter-flow filtration column, and/or
- wherein the water to be treated and/or purified is fed continuously into the counter-flow filtration device in the water inlet region and/or wherein the treated and/or purified water, in particular filtrate, is continuously removed from the water outlet region of the counter-flow filtration device, and/or
- wherein the adsorption material is fed continuously in the counter-flow filtration device in the water outlet region and/or wherein the adsorption material is removed continuously from the water outlet region of the counter-flow filtration device, and/or
- wherein the water to be treated and/or purified, on the one hand, and the adsorption material, on the other hand, flowat least substantially in mutually opposite flow directions in the counter-flow filtration device, in particular in the adsorption and/or counter-flow zone, and/or wherein the treated and/or purified water, on the one hand, and the adsorption material, on the other hand,flow and/or stream and/or are brought into contact in opposite flow directions in the counter-flow filtration device, in particular in the adsorption and/or counter-flow zone.

9. Method according to claim 7 or 8,
- wherein the water to be treated and/or purified is fed into the counter-flow filter column through the adsorption and/or counter-flow zone of the counter-flow filtration device downstream of the water inlet region of the counter-flow filtration device, relative to the flow direction of the water, and/or
- wherein the adsorption and/or counter-flow zone of the counter-flow filtration device is set to an empty pipe velocity and/or filtration rate, calculated as the ratio of the volume flow rate [m³/h] and cross-sectional area [m²], of at least 10 m/h, based on the water to be treated and/or to be purified, and/or
- wherein the adsorption material is fed at least substantially continuously to the counter-flow filtration device, and/or wherein the adsorption material is fed at least substantially continuously through the counter-flow filtration device, and/or wherein the adsorption material is at least substantially continuously removed from the counter-flow filtration device,and/or
- wherein the adsorption material introduced into the counter-flow filtration column passes through an adsorption and/or counter-flow zone of the counter-flow filtration device downstream of the water outlet region of the counter-flow filtration device, relativeto the flow direction of the adsorption material, and/or
- wherein the adsorption material is present in particular in the form of a loose bed in the counter-flow filtration device, in particular in the adsorption and/or counter-flow zone of the counter-flow filtration device,and/or
- wherein the adsorption material is removed from the counter-flow filtration device after passing and/or flowing through the adsorption and/or counter-flow zone of the counter-flow filtration device,via the adsorption outlet arranged downstream of the water inlet region of the water outlet region of the counter-flow filtration device and/or downstream of the adsorption and/or counter-flow zone of the counter-flow filtration device, relative to the flow direction of the adsorption material.

10. Method according to any one of the claims 7 to 9,
- wherein the adsorption material is selected from the group of granular, in particular spherical,adsorption materials, and/or
- wherein the adsorption material is selected from the group of
(i) activated carbon, in particular granular activated carbon, preferably spherical activated carbon and/or activated carbon, in particular in the form of PBSAC (polymer based spherical activated carbon);
(ii) zeolites, in particular natural and/or synthetic zeolites;
(iii) molecular sieves, particularly zeolitic molecular sieves, synthetic molecular sieves, and/or in particular synthetic molecular sieves based on carbon, oxides and/or glasses;
(iv) metal oxide and/or metal particles;
(v) ion-exchange resins, particularly polydisperse and/or monodisperse cation and/or anion exchangers, in particular gel-type and/or macroporous type;
(vi) inorganic oxides, in particular silicas, silica gels and/or aluminum oxides;
(vii) porous organic polymers and/or porous organic-inorganic hybrid polymers and/or porous organic-inorganic hybrid polymers and/or metal-organic framework materials, particularly MOFs (metal organic framework), COF (covalent organic framework), ZIF (zeolite imidazolate framework), POM (polymer organic material) and/or OFC;
(viii) mineral granules;
(ix) clathrates; as well as
(x) mixtures thereof and/or combinations thereof; and/or
- wherein the adsorption material is formed from activated carbon, in particular of granular, preferably spherical, activated carbon, and/or
- wherein the adsorption material, particularly the preferably granular activated carbon, has an average particle size, in particular average particle diameter (D50), in the range of 0.01 to 2 mm, and/or
- wherein the adsorption material, particularly the preferably granular activated carbon,has an abrasion resistance of at least 90%, and/or
- wherein the adsorption material, particularly the preferably granular activated carbon, comprises a pressure or burst strength (resistance to weight loading) per adsorption particle and/or particles, in particular per activated carbon bead, of at least 5 Newton, and/or wherein the adsorption material, in particular the preferably granular activated carbon, comprises a pressure or burst strength (resistance to weight loading) per adsorption particle and/or particles, in particular per activated carbon bead, in the range of 10 to 50 Newton.

11. Method according to any one of the claims 7 to 10,
- wherein the adsorption material, particularly the preferably granular activated carbon, comprises a specific surface region (BET surface area) of at least 500 m²/g and/or wherein the particulate adsorption material (A), particularly the preferably granular activated carbon, comprises a specific surface region (BET surface area) in the range of 500 to 4,000 m²/g, and/or
- wherein the adsorption material, particularly the preferably granular activated carbon, comprises a total pore volume according to Gurvich of at least 0.50 cm³/g, and/or wherein the adsorption material, particularly the preferably granular activated carbon, comprises a total pore volume according to Gurvich in the range from 0.50 to 2.0 cm³/g, and/or
- wherein the adsorption material, particularly the preferably granular activated carbon, comprises a specific total pore volume in the range from 0.01 to 4.0 cm³/g, in particular wherein the proportion of pores having pore diameters ≤ 75 A comprises at least 65%, and/or wherein the adsorption material, in particular the preferably granular activated carbon, based on the total pore volume, in particular with respect to the total pore volume according to Gurvich, comprises a proportion of micropores, in particular of micropores having pore diameters ≤ 30 A, of at least 70%, and/or
- wherein the adsorption material, particularly the preferably granular activated carbon, comprises a bulk density in the range of 250 to 700 g/l.

12. Method according to any one of the claims 7 to 11, wherein the adsorption material removed from the counter-flow filtration device, in particular the impurity-laden adsorption material, is dried and/or subjected to continuous and/or thermal regeneration and/or recycling and optionalsubsequentmoisturizing again, in particular using a regenerating device comprising:
- optionally at least one drying and/or dehumidifying device for drying and/or dehumidification of the adsorption material removed from the counter-flow adsorption filter device and/or from the impurity-laden adsorption material,
- at least one regeneration and/or desorption device, in particular for the thermal regeneration of the adsorption material removed from the counter-flow adsorption filtration device and/or from the impurity-laden adsorption material and/or the regenerated and/or unused adsorption material,
- optionally at least one moisturizing device, in particular for humidification of the regenerated and/or unused adsorption material.

13. Method according to any one of the claims 7 to 12, wherein the adsorption material removed from the counter-flow filtration device and/or the impurity-laden adsorption material is dried in particular using the drying and/or dehumidifying device, wherein the residual moisture content of the dried adsorption material is set to a value of at most 1 wt.-%, based on the adsorption material.

14. Method according to any one of the claims 7 to 13,
- wherein the adsorption material removed from the counter-flow filter device and/or the impurity-laden adsorption material, in particular after carrying out drying, preferably as defined in claim 12 or 13, is subjected to thermal regeneration and/or desorption, in particular with the release and/or desorption of the impurities adsorbed in the activated charcoal, in particular using the regeneration and/or desorption, and/or
- wherein the regenerated and/or unused adsorption material is moisturized in particular using the humidifying device and/or immersed in water, and/or wherein the regenerated and/or unused and preferably humidified adsorption material is incorporated in the counter-flow filtration device in particular under pressure, and/or
- wherein the method is carried out with a circulation factor in the range of 0.1 to 100, which is calculated as the quotientof the amount of adsorption material [kg] present in the regeneration and/or recycling, in particular in the regeneration device, and the amount of adsorption material [kg] present in the counter-flow filtration device.

15. Use of a purification plant as defined in any one of the claims 5 or 6, and/or a counter-flow filtration device as defined in any one of the claims 1 to 4, and/or an adsorption material as defined in claim 10 or 11, in a method for treatment and/or purification of water for the adsorptive removal of inorganic or organic based impurities as defined in any of the claims 7 to 14.

## Revendications

1. Dispositif de filtration à contre-courant (1), en particulier destiné à traiter et/ou purifier de l'eau, afin d'en éliminer par adsorption des impuretés à base inorganique ou organique, et à recevoir, stocker et délivrer, en particulier en continu, au moins un matériau adsorbant de préférence particulaire,
le dispositif de filtration à contre-courant (1) possédant au moins un boîtier (2), lequel boîtier (2) possède au moins une zone d'adsorption et/ou à contre-courant (3) ainsi qu'au moins une zone d'entrée d'eau (4) et au moins une zone de sortie d'eau (5), dans lequel
- la zone d'adsorption et/ou à contre-courant (3) est disposée du point de vue fluidique entre la zone d'entrée d'eau (4) et la zone de sortie d'eau (5) et/ou la zone d'adsorption et/ou à contre-courant (3) est disposée en aval de la zone d'entrée d'eau (4) et en amont de la zone de sortie d'eau (5) par rapport au sens d'écoulement de l'eau,
- la zone d'entrée d'eau (4) possède au moins une arrivée d'eau (8) et au moins une sortie de matériau adsorbant (6) et la zone de sortie d'eau (5) possède au moins une évacuation d'eau (9) et au moins une entrée de matériau adsorbant (7),
- le quotient du diamètre (D1) de la zone d'adsorption et/ou à contre-courant (3) par le diamètre (D2) de la zone d'entrée d'eau (4) [quotient diamètre (D1) : diamètre (D2)] est au moins égal à 1 : 1,1 et le quotient du diamètre (D1) de la zone d'adsorption et/ou à contre-courant (3) par le diamètre (D3) de la zone de sortie d'eau (5) [quotient diamètre (D1) : diamètre (D3)] est au moins égal à 1 : 1,1, et
le dispositif de filtration à contre-courant (1) possède une première zone de transition (10) et une deuxième zone de transition (11),
- la première zone de transition (10) est disposée du point de vue fluidique entre la zone d'entrée d'eau (4) et la zone d'adsorption et/ou à contre-courant (3) et/ou la première zone de transition (10) est disposée en aval de la zone d'entrée d'eau (4) et en amont de la zone d'adsorption et/ou à contre-courant (3) par rapport au sens d'écoulement de l'eau, la première zone de transition (10) étant réalisée avec une forme conique et se rétrécissant depuis la zone d'entrée d'eau (4) de diamètre (D2) en direction de la zone d'adsorption et/ou à contre-courant (3) de diamètre (D1), et
- la deuxième zone de transition (11) est disposée du point de vue fluidique entre la zone de sortie d'eau (5) et la zone d'adsorption et/ou à contre-courant (3) et/ou la deuxième zone de transition (11) est disposée en aval de la zone d'adsorption et/ou à contre-courant (3) et en amont de la zone de sortie d'eau (5) par rapport au sens d'écoulement de l'eau, la deuxième zone de transition (11) étant réalisée avec une forme conique et se rétrécissant depuis la zone de sortie d'eau (5) de diamètre (D3) en direction de la zone d'adsorption et/ou à contre-courant (3) de diamètre (D1).

2. Dispositif de filtration à contre-courant selon la revendication 1, dans lequel
dans l'état de fonctionnement et/ou d'utilisation, l'eau à traiter et/ou à purifier et le matériau de filtration par adsorption sont entraînés à contre-courant et/ou en sens inverse l'un de l'autre et/ou sont mis en contact l'un avec l'autre dans la zone d'adsorption et/ou à contre-courant (3), et/ou
le quotient de la hauteur (H1) par le diamètre (D1) de la zone d'adsorption et/ou à contre-courant (3) [quotient hauteur (H1) : diamètre (D1)] est au moins égal à 1,5 : 1 et/ou le quotient de la hauteur (H1) par le diamètre (D1) de la zone d'adsorption et/ou à contre-courant (3) [quotient hauteur (H1) : diamètre (D1)] se situe dans la plage de 1,5 : 1 à 20 : 1, et/ou
le quotient du diamètre (D1) de la zone d'adsorption et/ou à contre-courant (3) par le diamètre (D2) de la zone d'entrée d'eau (4) [quotient diamètre (D1) : diamètre (D2)] est au moins égal à 1 : 1,25 et/ou le quotient du diamètre (D1) de la zone d'adsorption et/ou à contre-courant (3) par le diamètre (D2) de la zone d'entrée d'eau (4) [quotient diamètre (D1) : diamètre (D2)] se situe dans la plage de 1 : 1,1 à 1 : 5, et/ou
le quotient du diamètre (D1) de la zone d'adsorption et/ou à contre-courant (3) par le diamètre (D3) de la zone de sortie d'eau (5) [quotient diamètre (D1) : diamètre (D3)] est au moins égal à 1 : 1,25 et/ou le quotient du diamètre (D1) de la zone d'adsorption et/ou à contre-courant (3) par le diamètre (D3) de la zone de sortie d'eau (5) [quotient diamètre (D1) : diamètre (D3)] se situe dans la plage de 1 : 1,1 à 1 : 5.

3. Dispositif de filtration à contre-courant selon la revendication 1 ou la revendication 2, dans lequel
la zone d'adsorption et/ou à contre-courant (3) possède une section transversale au moins pratiquement circulaire et/ou ronde (a), et/ou
la zone d'entrée d'eau (4) possède une section transversale (b) au moins pratiquement circulaire et/ou ronde, et/ou
la zone de sortie d'eau (5) possède une section transversale (c) au moins pratiquement circulaire et/ou ronde, et/ou
l'aire de section transversale (a) de la zone d'adsorption et/ou à contre-courant (3) est plus petite que l'aire de section transversale (b) de la zone d'entrée d'eau (4) et/ou plus petite que l'aire de section transversale (c) de la zone de sortie d'eau (5), et/ou
l'aire de section transversale (b) de la zone d'entrée d'eau (4) et l'aire de section transversale (c) de la zone de sortie d'eau (5) sont réalisées avec une dimension au moins pratiquement égale, et/ou
le dispositif de filtration à contre-courant (1), en particulier la zone d'entrée d'eau (4), possède au moins un système répartiteur (13), le système répartiteur (13) étant disposé en particulier du point de vue fluidique entre l'arrivée d'eau (8) de la zone d'entrée d'eau (4) et la zone d'adsorption et/ou à contre-courant (3) et/ou entre l'arrivée d'eau (8) de la zone d'entrée d'eau (4) et la première zone de transition (10), et/ou le système répartiteur (13) étant disposé en particulier en aval de l'arrivée d'eau (8) et/ou en aval de la sortie de matériau adsorbant (6), de préférence en aval de l'arrivée d'eau (8) et de la sortie de matériau adsorbant (6), par rapport au sens d'écoulement de l'eau.

4. Dispositif de filtration à contre-courant selon l'une des revendications précédentes, dans lequel
la sortie de matériau adsorbant (6) est disposée en aval de l'arrivée d'eau (8) de la zone d'entrée d'eau (4) et/ou la sortie de matériau adsorbant (6) est disposée dans une portion terminale de la zone d'entrée d'eau (4) par rapport au sens de transport du matériau adsorbant, et/ou la sortie de matériau adsorbant (6) est disposée à une première extrémité du dispositif de filtration à contre-courant (1), et/ou
l'entrée de matériau adsorbant (7) est disposée en amont de l'évacuation d'eau (9) de la zone de sortie d'eau (4) et/ou l'évacuation d'eau (9) de la zone de sortie d'eau (4) est disposée en aval de l'entrée de matériau adsorbant (7), à chaque fois par rapport au sens d'écoulement de l'eau, et/ou
le dispositif de filtration à contre-courant (1), en particulier la zone de sortie d'eau (5), possède au moins un système séparateur (14), le système séparateur (14) étant disposé en particulier du point de vue fluidique entre l'évacuation d'eau (9) de la zone de sortie d'eau (5) et la zone d'adsorption et/ou à contre-courant (3) et/ou entre l'évacuation d'eau (9) de la zone de sortie d'eau (5) et la deuxième zone de transition (11), et/ou le système séparateur (14) étant disposé en particulier en amont de l'évacuation d'eau (9) et/ou en aval de l'entrée de matériau adsorbant (7), de préférence en amont de l'évacuation d'eau (9) et en aval de l'entrée de matériau adsorbant (7), à chaque fois par rapport au sens d'écoulement de l'eau, et/ou le système séparateur (14) étant disposé en particulier du point de vue fluidique entre l'évacuation d'eau (9) et l'entrée d'agent adsorbant (7), et/ou
le matériau adsorbant particulaire est présent dans le dispositif de filtration à contre-courant (1), en particulier dans la zone d'adsorption et/ou à contre-courant (3), sous la forme d'un garnissage (15), en particulier sous la forme d'un garnissage en vrac.

5. Installation de purification (A), en particulier destinée à traiter et/ou purifier de l'eau (AW) afin d'en éliminer par adsorption des impuretés à base inorganique ou organique, l'installation (A) possédant :
- au moins un dispositif de filtration à contre-courant (1) tel que défini dans une des revendications précédentes, destiné à traiter et/ou purifier de l'eau (AW) et à recevoir, stocker et délivrer, en particulier en continu, au moins un matériau adsorbant de préférence particulaire, en particulier tel que défini dans la revendication 10 ou la revendication 11, l'eau à traiter et/ou à purifier (AW) et le matériau adsorbant, dans l'état de fonctionnement et/ou d'utilisation, étant entraînés en particulier à contre-courant et/ou en sens inverse l'un de l'autre dans le dispositif de filtration à contre-courant (1),
le dispositif de filtration à contre-courant (1) possède au moins un boîtier (2), le boîtier (2) possédant au moins une zone d'adsorption et/ou à contre-courant (3) ainsi qu'au moins une zone d'entrée d'eau (4) et au moins une zone de sortie d'eau (5),
la zone d'adsorption et/ou à contre-courant (3) est disposée du point de vue fluidique entre la zone d'entrée d'eau (4) et la zone de sortie d'eau (5) et/ou la zone d'adsorption et/ou à contre-courant (3) est disposée en aval de la zone d'entrée d'eau (4) et en amont de la zone de sortie d'eau (5) par rapport au sens d'écoulement de l'eau, et
la zone d'entrée d'eau (4) possède au moins une sortie de matériau adsorbant (6) et la zone de sortie d'eau (5) possède au moins une entrée de matériau adsorbant (7),
- le cas échéant au moins un système de séchage et/ou de déshumidification (T1, T2, T3) pour sécher et/ou déshumidifier le matériau adsorbant chargé par les impuretés, le système de séchage et/ou de déshumidification (T1, T2, T3) étant disposé en particulier en aval du dispositif de filtration à contre-courant (1) par rapport au sens de transport des matériau adsorbant,
- au moins un système de régénération et/ou de désorption (R), en particulier pour régénérer le matériau adsorbant chargé par les impuretés et/ou pour fournir du matériau adsorbant régénéré et/ou non chargé et/ou frais, le système de régénération et/ou de désorption (R) étant disposé en particulier en aval du dispositif de filtration à contre-courant (1) et/ou en aval du système de séchage et/ou de déshumidification (T1, T2, T3), à chaque fois par rapport au sens de transport du matériau adsorbant,
- le cas échéant au moins un système d'humidification (B), en particulier pour humidifier le matériau adsorbant régénéré et/ou non chargé et/ou frais, le système d'humidification (B) étant disposé en aval du système de régénération et/ou de désorption (R) par rapport au sens de transport du matériau adsorbant.

6. Installation de purification selon la revendication 5, dans laquelle
le système de séchage et/ou de déshumidification (T1, T2, T3) est choisi dans le groupe des sécheurs à bande, des sécheurs à lit fluidisé et des clarificateurs à tôles inclinées et leurs combinaisons et/ou le système de séchage et/ou de déshumidification (T1, T2, T3) comprend au moins un système de séchage et/ou de déshumidification principal (T2, T3), en particulier choisi parmi des sécheurs à bande et/ou des sécheurs à lit fluidisé, et le cas échéant au moins un système de pré-séchage et/ou de pré-déshumidification (T1, T2), en particulier choisi parmi des clarificateurs à tôles inclinées et des sécheurs à bande, le système de pré-séchage et/ou de pré-déshumidification (T1, T2) étant disposé en particulier en amont du système de séchage et/ou de déshumidification principal (T2, T3) par rapport au sens de transport des matériau adsorbant, et/ou
le système de régénération et/ou de désorption (R) est choisi dans le groupe des fours à chambre rotative, en particulier des fours à chambre rotative à chauffage indirect ; des fours à tapis, en particulier des fours à tapis à chauffage indirect ; des sécheurs à lit fluidisé, en particulier des sécheurs à lit fluidisé à haute température ; et des fours à micro-ondes, et/ou
le système d'humidification (B) est choisi dans le groupe des cuves malaxeuses, des tours de prilling, des humidificateurs à bande, des pompes à jet (d'eau), des pompes tubulaires et leurs combinaisons, et/ou
l'installation de purification (A) possède en outre au moins un système de stockage (V), le système de stockage (V) étant disposé en particulier en aval du système de régénération et/ou de désorption (R) et/ou en amont du système d'humidification (B) par rapport au sens de transport du matériau adsorbant, et/ou
l'installation de purification (A), dans l'état de fonctionnement et/ou d'utilisation, possède et/ou permet un flux et/ou un courant d'eau (W), en particulier avec un flux et/ou un courant d'eau à traiter et/ou à purifier (a) entrant dans le dispositif de filtration à contre-courant (1) et en particulier avec un flux et/ou un courant d'eau purifiée et/ou de filtrat (FI) sortant du dispositif de filtration à contre-courant (1), et/ou l'installation de purification (A), dans l'état de fonctionnement et/ou d'utilisation, possède et/ou permet un transport d'agent adsorbant (AK) en particulier cyclique, en particulier le flux et/ou le courant d'eau (W) et le transport d'agent adsorbant (AK) à contre-courant avancent en direction l'un de l'autre et/ou circulent en sens inverse l'un de l'autre dans le dispositif de filtration à contre-courant (1).

7. Procédé de traitement et/ou de purification d'eau afin d'en éliminer par adsorption des impuretés à base inorganique ou organique, dans lequel, dans un dispositif de filtration à contre-courant tel que défini dans une des revendications 1 à 4, l'eau à traiter et/ou à purifier d'une part et un matériau adsorbant, en particulier particulaire, d'autre part sont entraînés à contre-courant l'un de l'autre de telle façon que l'eau à traiter et/ou à purifier passe à travers un garnissage du matériau adsorbant présent dans le dispositif de filtration à contre-courant afin d'éliminer les impuretés par adsorption et le garnissage est changé et régénéré en enlevant le matériau adsorbant et en le faisant passer à contre-courant de l'eau à traiter.

8. Procédé selon la revendication 7, dans lequel
le matériau adsorbant est introduit en continu dans le dispositif de filtration à contre-courant et/ou le matériau adsorbant est retiré en continu du dispositif de filtration à contre-courant, et/ou
le matériau adsorbant, en particulier le matériau adsorbant retiré du dispositif de filtration à contre-courant et/ou chargé par les impuretés, est amené ou soumis à une régénération continue et/ou thermique et/ou à un recyclage, en particulier avec enlèvement et/ou désorption des impuretés, et/ou le matériau adsorbant régénéré et/ou non utilisé est réintroduit en continu dans la colonne de filtration à contre-courant, et/ou
l'eau à traiter et/ou à purifier est introduite en continu dans la zone d'entrée d'eau du dispositif de filtration à contre-courant et/ou l'eau traitée et/ou purifiée, en particulier le filtrat, est enlevée en continu du dispositif de filtration à contre-courant dans la zone de sortie d'eau, et/ou
le matériau adsorbant est introduit en continu dans la zone de sortie d'eau du dispositif de filtration à contre-courant et/ou le matériau adsorbant est enlevé en continu du dispositif de filtration à contre-courant dans la zone de sortie d'eau, et/ou
l'eau à traiter et/ou à purifier d'une part et le matériau adsorbant d'autre part possèdent des sens d'écoulement au moins pratiquement opposés l'un à l'autre dans le dispositif de filtration à contre-courant, en particulier dans la zone d'adsorption et/ou à contre-courant, et/ou l'eau à traiter et/ou à purifier d'une part et le matériau adsorbant d'autre part circulent et/ou s'écoulent et/ou sont mis en contact l'un avec l'autre à contre-courant l'un de l'autre dans le dispositif de filtration à contre-courant, en particulier dans la zone d'adsorption et/ou à contre-courant.

9. Procédé selon la revendication 7 ou la revendication 8, dans lequel
l'eau à traiter et/ou à purifier introduite dans la colonne de filtration à contre-courant est entraînée à travers la zone d'adsorption et/ou à contre-courant du dispositif de filtration à contre-courant disposée en aval de la zone d'entrée d'eau du dispositif de filtration à contre-courant par rapport au sens d'écoulement de l'eau, et/ou
dans la zone d'adsorption et/ou à contre-courant du dispositif de filtration à contre-courant, une vitesse en tube vide et/ou une vitesse de passage dans le filtre, donnée par le quotient du débit volumétrique [m³/h] par l'aire de section transversale [m²] et rapportée à l'eau à traiter et/ou à purifier, est ajustée à au moins 10 m/h, et/ou
le matériau adsorbant est amené au moins pratiquement en continu au dispositif de filtration à contre-courant et/ou le matériau adsorbant est entraîné au moins pratiquement en continu à travers le dispositif de filtration à contre-courant et/ou le matériau adsorbant est enlevé au moins pratiquement en continu du dispositif de filtration à contre-courant, et/ou
le matériau adsorbant introduit dans la colonne de filtration à contre-courant est entraîné à travers une zone d'adsorption et/ou à contre-courant du dispositif de filtration à contre-courant disposée en aval de la zone de sortie d'eau du dispositif de filtration à contre-courant par rapport au sens d'écoulement du matériau adsorbant, et/ou
le matériau adsorbant est présent dans le dispositif de filtration à contre-courant, en particulier dans la zone d'adsorption et/ou à contre-courant du dispositif de filtration à contre-courant, sous la forme d'un garnissage, en particulier en vrac, et/ou
le matériau adsorbant, après avoir traversé et/ou parcouru la zone d'adsorption et/ou à contre-courant du dispositif de filtration à contre-courant, est enlevé du dispositif de filtration à contre-courant dans la zone d'entrée d'eau disposée en aval de la zone de sortie d'eau du dispositif de filtration à contre-courant et/ou en aval de la zone d'adsorption et/ou à contre-courant du dispositif de filtration à contre-courant, par rapport au sens d'écoulement des matériau adsorbant, par la sortie de matériau adsorbant.

10. Procédé selon l'une des revendications 7 à 9, dans lequel
le matériau adsorbant est choisi dans le groupe des matériaux adsorbants granulaires, en particuliersphériques, et/ou
le matériau adsorbant est choisi dans le groupe comprenant
(i) du charbon actif, en particulier du charbon actif granulaire, de préférence du charbon actif sphérique et/ou en particulier du charbon actif sous la forme de PBSAC (*Polymer-based Spherical Activated Carbon*) ;
(ii) des zéolithes, en particulier des zéolithes naturelles et/ou synthétiques ;
(iii) des tamis moléculaires, en particulier des tamis moléculaires zéolithiques, des tamis moléculaires synthétiques et/ou en particulier des tamis moléculaires synthétiques à base de carbone, d'oxydes et/ou de verres ;
(iv) des particules d'oxydes métalliques et/ou de métaux ;
(v) des résines échangeuses d'ions, en particulier des résines échangeuses de cations et/ou d'anions polydispersées et/ou monodispersées, en particulier de type gélifié et/ou de type macroporeux ;
(vi) des oxydes inorganiques, en particulier des dioxydes de silicium, des gels de silice et/ou des oxydes d'aluminium ;
(vii) des polymères organiques poreux et/ou des polymères hybrides organiques-inorganiques poreux et/ou des polymères hybrides organiques-inorganiques poreux et/ou des matériaux à réseaux métallo-organiques, en particulier de type MOF (*Metal Organic Framework*)*,* COF (*Covalent Organic Framework*), ZIF (*Zeolithe Imidazolate Framework*), POM (*Polymer Organic Material*) et/ou OFC ;
(viii) des granulés minéraux ;
(ix) des clathrates ; ainsi que
(x) leurs mélanges et/ou combinaisons ; et/ou
le matériau adsorbant est formé à partir de charbon actif, en particulier de charbon actif granulaire, de préférence sphérique, et/ou
le matériau adsorbant, en particulier le charbon actif de préférence granulaire, possède une taille de particule médiane, en particulier un diamètre de particule médian (D50), dans la plage de 0,01 à 2 mm, et/ou
le matériau adsorbant, en particulier le charbon actif de préférence granulaire, possède une résistance à l'abrasion au moins égale à 90 %, et/ou
le matériau adsorbant, en particulier le charbon actif de préférence granulaire, possède une résistance à la compression ou à l'éclatement (capacité de charge pondérale) par grain et/ou particule adsorbante, en particulier par bille de charbon actif, au moins égale à 5 newton et/ou le matériau adsorbant, en particulier le charbon actif de préférence granulaire, possède une résistance à la compression ou à l'éclatement (capacité de charge pondérale) par grain et/ou particule adsorbante, en particulier par bille de charbon actif, dans la plage de 10 à 50 newton.

11. Procédé selon l'une des revendications 7 à 10, dans lequel
le matériau adsorbant, en particulier le charbon actif de préférence granulaire, possède une surface spécifique (surface BET) au moins égale à 500 m²/g et/ou le matériau adsorbant particulaire (A), en particulier le charbon actif de préférence granulaire, possède une surface spécifique (surface BET) dans la plage de 500 à 4 000 m²/g, et/ou
le matériau adsorbant, en particulier le charbon actif de préférence granulaire, possède un volume poreux total suivant Gurvich au moins égal à 0,50 cm³/g et/ou le matériau adsorbant, en particulier le charbon actif de préférence granulaire, possède un volume poreux total suivant Gurvich dans la plage de 0,50 à 2,0 cm³/g, et/ou
le matériau adsorbant, en particulier le charbon actif de préférence granulaire, possède un volume poreux spécifique total dans la plage de 0,01 à 4,0 cm³/g, en particulier la proportion de pores de diamètre ≤ 75 A est au moins égale à 65 % et/ou le matériau adsorbant, en particulier le charbon actif de préférence granulaire, possède une proportion de micropores, en particulier de micropores de diamètre ≤ 30 A, au moins égale à 70 % rapportée au volume poreux total, en particulier au volume poreux total suivant Gurvich, et/ou
le matériau adsorbant, en particulier le charbon actif de préférence granulaire, possède une densité apparente (*Bulk Density*) dans la plage de 250 à 700 g/l.

12. Procédé selon l'une des revendications 7 à 11, dans lequel le matériau adsorbant, en particulier le matériau adsorbant chargé par les impuretés, enlevé du dispositif de filtration à contre-courant est séché et/ou soumis à une régénération continue et/ou thermique et/ou à un recyclage et le cas échéant réhumidifié, en particulier en utilisant un dispositif de régénération qui comprend :
- le cas échéant au moins un système de séchage et/ou de déshumidification pour sécher et/ou déshumidifier le matériau adsorbant enlevé du dispositif de filtration à contre-courant et/ou le matériau adsorbant chargé par les impuretés,
- au moins un système de régénération et/ou de désorption, en particulier pour régénérer thermiquement le matériau adsorbant enlevé du dispositif de filtration à contre-courant et/ou le matériau adsorbant chargé par les impuretés et/ou pour fournir du matériau adsorbant régénéré et/ou non utilisé,
- le cas échéant au moins un système d'humidification, en particulier pour humidifier le matériau adsorbant régénéré et/ou non utilisé.

13. Procédé selon l'une des revendications 7 à 12, dans lequel le matériau adsorbant enlevé du dispositif de filtration à contre-courant et/ou le matériau adsorbant chargé par les impuretés est séché, en particulier en utilisant le système de séchage et/ou de déshumidification, la teneur en humidité résiduelle du matériau adsorbant séché étant ajustée à une valeur maximale de 1 % en poids, rapportée au matériau adsorbant.

14. Procédé selon l'une des revendications 7 à 13, dans lequel
le matériau adsorbant enlevé du dispositif de filtration à contre-courant et/ou le matériau adsorbant chargé par les impuretés est soumis, en particulier une fois le séchage effectué, de préférence ainsi que défini dans la revendication 12 ou la revendication 13, à une régénération et/ou désorption thermique, en particulier avec libération et/ou désorption des impuretés adsorbées dans le charbon actif, en particulier en utilisant le système de régénération et/ou de désorption, et/ou
le matériau adsorbant régénéré et/ou non utilisé est humidifié, en particulier en utilisant le système d'humidification et/ou introduit dans de l'eau et/ou le matériau adsorbant régénéré et/ou non utilisé et de préférence humidifié est introduit dans le dispositif de filtration à contre-courant, en particulier en appliquant une pression, et/ou
le procédé est effectué avec un coefficient de circulation, donné par le quotient de la quantité [kg] de matériau adsorbant qui est en cours de régénération et/ou de recyclage, en particulier dans le dispositif de régénération, et de la quantité [kg] de matériau adsorbant qui se trouve dans le dispositif de filtration à contre-courant, dans la plage de 0,1 à 100.

15. Utilisation d'une installation de purification telle que définie dans une des revendications 5 ou 6 et/ou d'un dispositif de filtration à contre-courant tel que défini dans une des revendications 1 à 4 et/ou d'un matériau adsorbant tel que défini dans la revendication 10 ou 11 dans un procédé de traitement et/ou de purification d'eau afin d'éliminer par adsorption des impuretés à base inorganique ou organique ainsi que défini dans une des revendications 7 à 14.
